# EUROPEAN PATENT SPECIFICATION

(11) **EP 4 563 675 B1**
(45) Date of publication and mention of the grant of the patent: **05.08.2026**
(21) Application number: 24215642.0
(22) Date of filing: 27.11.2024
(51) Int. Cl.: C09K 19/30, C09K 19/32, C09K 19/34, C09K 19/12, C09K 19/18

(54) **REFLECTIVE LIQUID CRYSTAL PANEL**
REFLEKTIERENDE FLÜSSIGKRISTALLTAFEL
PANNEAU À CRISTAUX LIQUIDES RÉFLÉCHISSANT

(30) Priority: 30.11.2023 CN 202311628741
(43) Date of publication of application: 04.06.2025
(73) Proprietor: Merck Patent GmbH, 64293 Darmstadt (DE)
(72) Inventor: Sung, Sing Yee, SHANGHAI (CN); Kakei, Shinji, Tokyo (JP); Sung, Jeong-Hee, Tokyo (JP)
(74) Representative: Merck Patent Association

(56) References cited:
- WO-A1-2021/037877
- US-A1- 2022 127 532

## Description

The present invention relates to Liquid Crystal on Silicon panels (LCoS panels) using liquid crystal (LC) media having negative dielectric anisotropy and to the LC media comprised therein.

The current disclosed liquid crystal medium (LC medium) has negative dielectric anisotropy and high optical anisotropy, and is particularly useful in electro-optical displays including projection systems based on vertical alignment (VA) nematic panels. Further LC media having negative dielectric anisotropy are known from US 2022/127532 A1, for instance.

LCoS panels, such as known from WO 2021/037877 A1, are used as reflective type matrix arrays in devices like projection systems, near-eye displays or beam-stearing applications. In the most common mode the display modulates the orientation of polarization like most of the conventional LC displays (amplitude modulation). Some applications of LCoS make use of controlled phase modulation of coherent light in order to control spatial distribution of light beams including image projection. In view of new applications and light sources the development of LCoS panels has room for improvements in many areas.

The alignment layer is usually applied on the electrodes (where such electrodes are present) such that it is in contact with the LC medium and induces initial alignment of the LC molecules. The alignment layer in LCoS panels often consists of an inorganic alignment material which is more temperature resistant than the polyimide layers used mostly in other LC panels for desktop or TV applications. The variable alignment properties of these inorganic materials require careful testing. For LCoS panels there is demand for LC media which have high alignment property on inorganic alignment materials. In addition, these devices usually require high light stability and longer lifetime under high light intensities.

Another problem observed in prior art is that the use of conventional LC media in LCoS panels often leads to the occurrence of bubbles and finally to dark defects in the display due to the harsh temperatures and irradiation durina use. It is therefore desirable to provide LC media which lead to reduced displacy defects after continued use. This means they must be stable in themselves and combine well with adjacent materials, e.g. the alignment layers.

Another problem observed in prior art is that LC media for use in displays, including but not limited to displays of the LCoS type, do often exhibit high viscosities and, as a consequence, long switching times.

In addition there is a great demand for displays, and LC media for use in such displays, which enable a high specific resistance at the same time as a large working-temperature range, short response times, and a low threshold voltage, a multiplicity of grey shades, high contrast, have high reliability and high values for the VHR after UV exposure.

The invention is based on the object of providing novel suitable LC media for use in devices, which do not have the disadvantages indicated above or do so to a reduced extent.

The invention further has the object of providing LCoS panels which do not have the above-mentioned disadvantages, or do so only to a reduced extent, and at the same time have low viscosity, high birefringence, negative dielectric anisotropy, high transmission or reflectance and a high clearing point.

In particular, the invention is based on the object of providing LC media which reduce or prevent the occurrence of bubbles and dark defects in the display.

These objects have been achieved in accordance with the present invention by materials and processes as described in the present application. In particular, it has been found, surprisingly, that the use of liquid crystalline hosts as described hereinafter allows achieving the advantageous effects as mentioned above.

In one apect the invention relates to an LCoS panel comprising a LC medium comprising
one or more compounds of formula IV 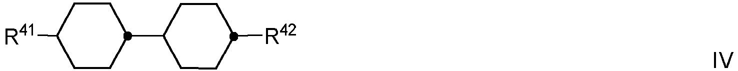 in which
- R⁴¹: denotes an unsubstituted alkyl radical having 1 to 7 C atoms or an unsubstituted alkenyl radical having 2 to 7 C atoms, preferably an n-alkyl radical, particularly preferably having 2, 3, 4 or 5 C atoms, and
- R⁴²: denotes an unsubstituted alkyl radical having 1 to 7 C atoms, an unsubstituted alkoxy radical having 1 to 6 C atoms, both preferably having 2 to 5 C atoms, or an unsubstituted alkenyl radical having 2 to 7 C atoms, preferably having 2, 3 or 4 C atoms, more preferably a vinyl radical or a 1-propenyl radical and in particular a vinyl radical,
wherein one or more compounds of formula IV are selected from formula IV-2, 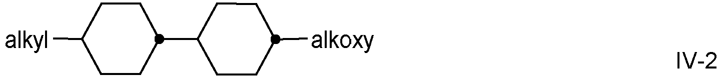 wherein
- alkyl: denotes alkyl having 1 to 7 C atoms, and
- alkoxy: denotes alkoxy having 1 to 5 C atoms.

The invention furthermore relates to a liquid crystal medium comprising
a) one or more compounds of formula IV 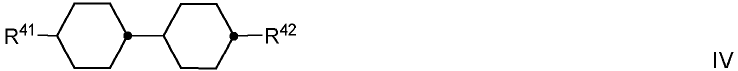 in which
   - R⁴¹: denotes an unsubstituted alkyl radical having 1 to 7 C atoms or an unsubstituted alkenyl radical having 2 to 7 C atoms, preferably an n-alkyl radical, particularly preferably having 2, 3, 4 or 5 C atoms, and
   - R⁴²: denotes an unsubstituted alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical,
   wherein one or more compounds of formula IV are selected from formula IV-2, 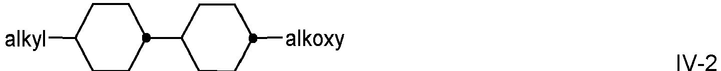 wherein
   - alkyl: denotes alkyl having 1 to 7 C atoms, and
   - alkoxy: denotes alkoxy having 1 to 5 C atoms,
   and
b) one or more compounds of formula I 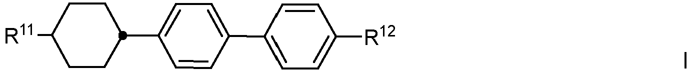 in which
   - R¹¹: denotes alkyl having 1 to 7 C atoms, alkoxy having 1 to 7 C atoms, or alkoxyalkyl, alkenyl or alkenyloxy having 2 to 7 C atoms, *where,* in addition, one or more CH2 groups in these radicals mav each be replaced, independently of one another by 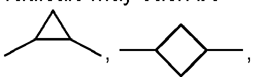 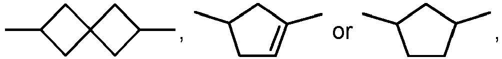
   - R¹²: denotes alkyl having 1 to 7 C atoms, alkoxy having 1 to 7 C atoms, or alkoxyalkyl, alkenyl or alkenyloxy having 2 to 7 C atoms,
   and
c) 0.1 % to 0.9% of one or more compounds of formula ST-1 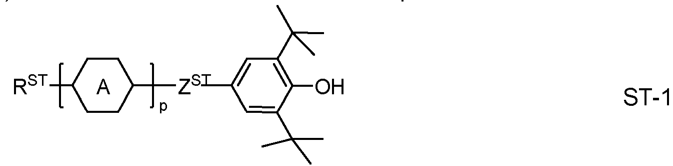 wherein
   - R^{ST}: denotes H, an alkyl or alkoxy radical having 1 to 15 C atoms, where, in addition, one or more CH₂ groups in these radicals may each be replaced, independently of one another by -C≡C-, -CF₂O-, -OCF₂-, -CH=CH-, 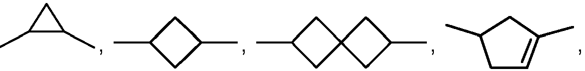 -O-, -CO-O- or -O-CO- in such a way that O atoms are not 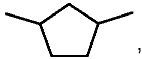 linked directly to one another, and in which, in addition, one or more H atoms may be replaced by halogen, on each occurrence, identically or differently, denotes 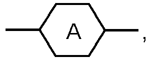 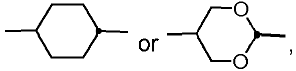
   - Z^{ST}: each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C=C- or a single bond, and
   - p: denotes 0, 1 or 2.
   The medium may further preferably comprise one or more compounds selected from the groups d) and e):
d) formulae IIA, IIB, IIC, IID and IIE, 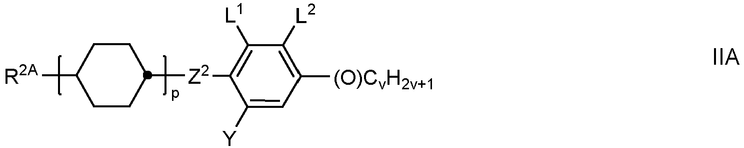 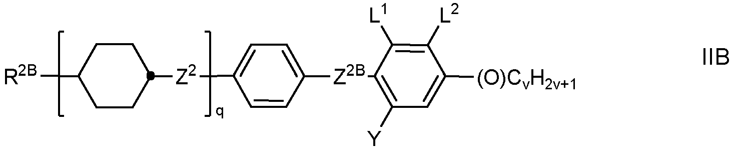 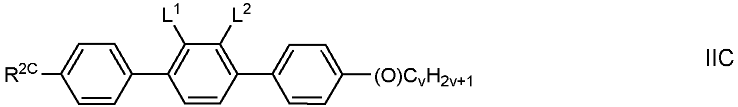 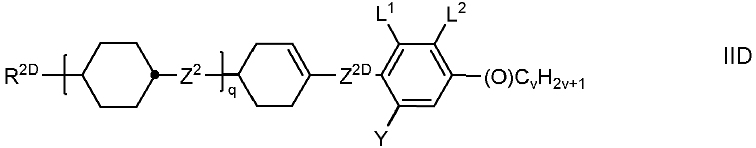 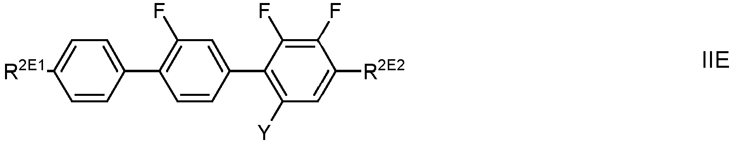 in which
   - R^{2A}, R^{2B}, R^{2C}, R^{2D}, R^{2E1} and R^{2E2}: each, independently of one another, denote H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, 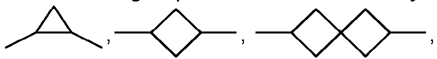 , -C=C-, -CF₂O-, -OCF₂-, -OC-O- or -O-CO- in 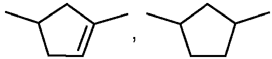 such a way that O atoms are not linked directly to one another;
   - L¹ and L²: each, independently of one another, denote F, Cl, CF₃ or CHF₂;
   - Y: denotes H, F, Cl, CF₃, CHF₂ or CH₃;
   - Z², Z^{2B} and Z^{2D}: each, independently of one another, denote a single bond, -CH₂CH₂-, -CH=CH-, -CF₂CF₂-, -CF=CF-, -CF₂O-, -OCF₂-, -CH₂O- , -OCH₂-, -COO-, -OCO-
   - p: denotes 0, 1 or 2
   - q: denotes 0 or 1 and
   - v: denotes 1, 2, 3, 4, 5, or 6
   and
e) formula III 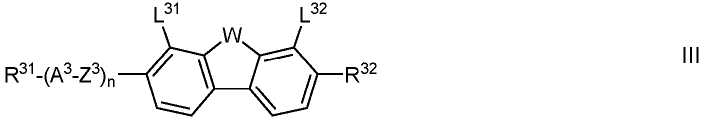 in which
   - R³¹ and R³²: each, independently of one another, denote H, an alkyl or alkoxy radical having 1 to 7 C atoms, where one or more CH₂ groups in these radicals may each be replaced, independently of one another, by 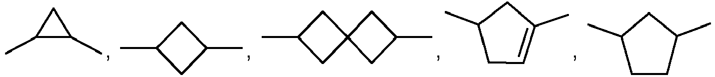 , -C≡C-, -CF₂O-, -OCF₂-, -CH=CH-, -O-, -CO-O- or -O-CO- in such a way that O atoms are not linked directly to one another, and in which one or more H atoms may be replaced by halogen,
   - A³: on each occurrence, independently of one another, denotes a 1,4-phenylene radical, in which one or two CH groups may be replaced by N, or a 1,4-cyclohexylene or 1,4-cyclohexenylene radical, in which one or two non-adjacent CH₂ groups may be replaced by -O- or -S-, where the radicals may be mono- or polysubstituted by halogen atoms,
   - n: denotes 0, 1 or 2,
   - Z³: on each occurrence independently of one another denotes -CF₂O-, -OCF₂-, -CH₂O-, -OCH₂-, -CH₂-, -CH₂CH₂-, -CH=CH-, -C≡C- or a single bond,
   - L³¹ and L³²: each, independently of one another, denote F, Cl, CF₃ or CHF₂, and
   - W: denotes O or S.

The invention furthermore relates to a process for preparing an LC medium as described above and below, comprising the steps of mixing one or more compounds of the formulae I, IV-2 and ST-1, optionally with further LC compounds and/or additives.

The invention further relates to a projection device comprising the LCoS panel according to the invention and light directing elements. The light directing elements can be chosen from lenses, mirrors, half-mirrors, prisms or similar.

The invention furthermore relates to the use of LC media according to the invention in displays. The invention further relates to an LC display comprising an LC medium according to the invention of the IPS, FFS, UB-FFS, UBplus, VA or PS-VA type. The invention furthermore relates to the use of LC media according to the invention in polymer stabilised VA or self-aligned-VA displays, and to a polymer stabilised VA displays comprising the LC medium according to the invention.

The invention furthermore relates to an LC display of the VA or PSA type comprising two substrates, at least one which is transparent to light, an electrode provided on each substrate or two electrodes provided on only one of the substrates, and located between the substrates a layer of an LC medium that comprises one or more polymerisable compounds and an LC component as described above and below, wherein the polymerisable compounds are polymerised between the substrates of the display.

The invention furthermore relates to an LC display of the VA type comprising two opposing substrates, one is transparent, and one is a silicon semiconductor backplane.

The invention furthermore relates to a process for manufacturing an LCoS panel as described above and below, comprising the steps of filling or otherwise providing an LC medium as described above and below between the substrates of the panel and sealing it.

Preferred embodiments are also disclosed in the dependent claims and their combinations.

The displays according to the invention have two electrodes, preferably in the form of transparent layers, which are applied to one or both substrates. In a typical reflective display, one continuous transparent electrode is applied to the transparent substrate. The opposite electrode is formed as separately addressable pixels.

It was surprisingly found that the use of the liquid crystal medium according to the invention enables displays with fast response times, a low threshold voltage and a high birefringence, as well as high reliability when exposed to radiation and thermal stress.

In particular, the medium according to the invention is distinguished by a good alignment properties on various alignment materials.

The LC media according to the invention show the following advantageous properties when used in VA or FFS displays:
- improved transmission of the display,
- a high clearing temperature,
- sufficient stability against heat and/or UV,
- a high voltage-holding-ratio,
- relative fast switching,
   and
- good LTS.

The LC media according to the invention show the following advantageous properties when used in reflective displays including projection systems:
- a high clearing temperature,
- relative fast switching,
- sufficient stability against heat, light and/or UV, and
- excellent alignment on inorganic alignment materials.

In particular, the liquid crystal medium according to the invention shows a favourably low ratio of rotational viscosity to the splay elastic constant γ₁ / K₁. This contributes to improved switching behaviour especially at low driving voltages which is useful to enable energy-saving displays.

In the following the essentiall and optional components of the LC media are disclosed in more detail, which relate to preferred embodiments of the media and the LC displays containing them.

Preferred compounds of the formulae IIA, IIB, IIC, IID and IIE are indicated below: 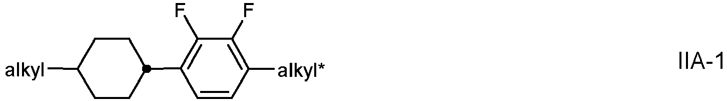 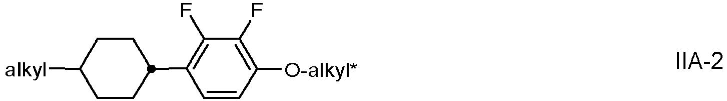 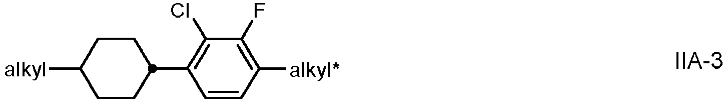 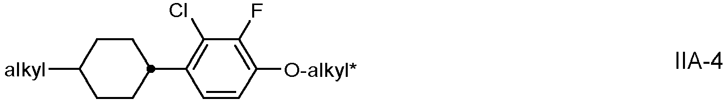 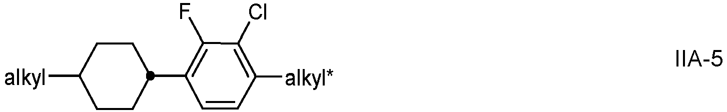 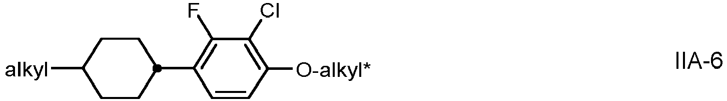 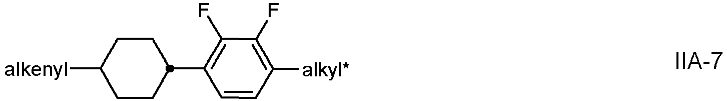 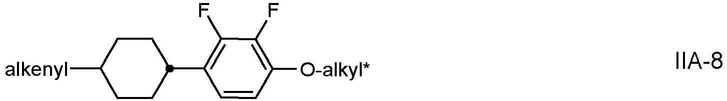 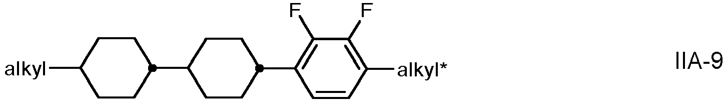 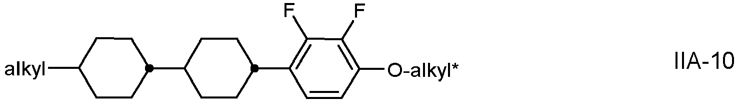 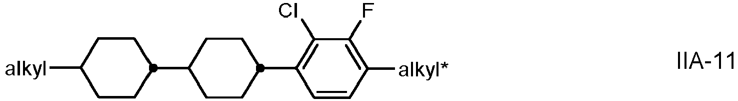 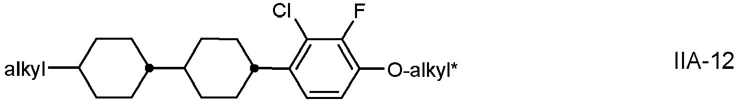 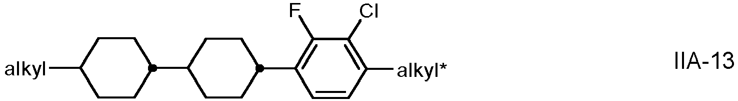 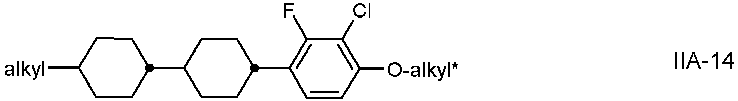 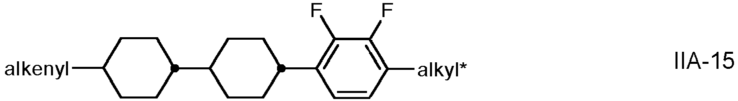 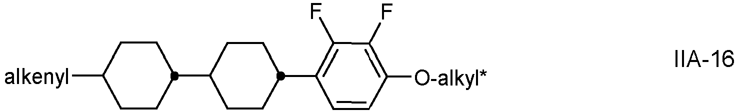 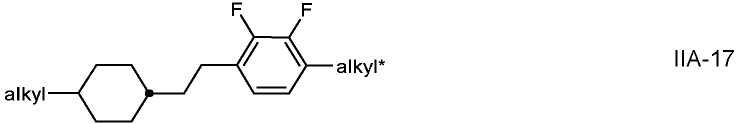 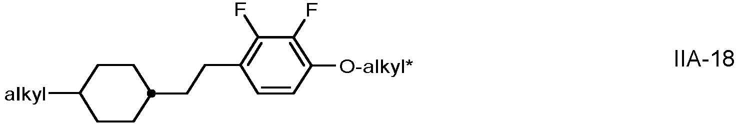 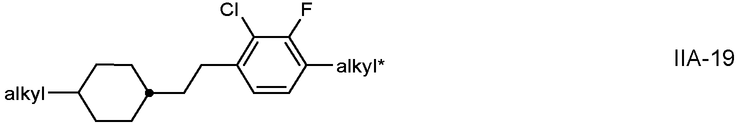 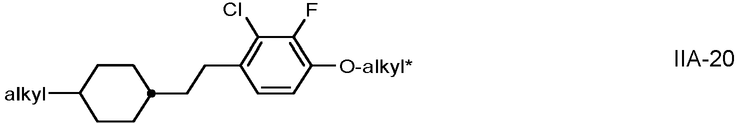 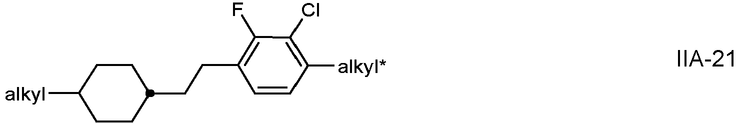 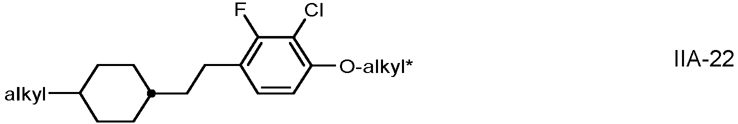 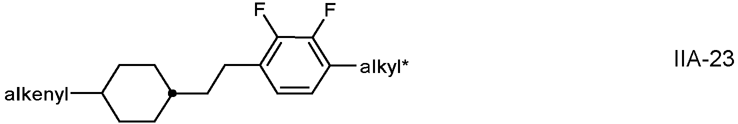 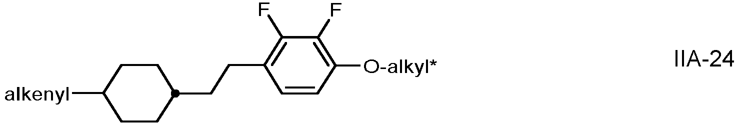 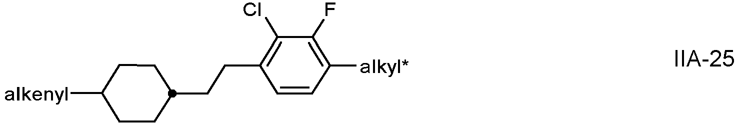 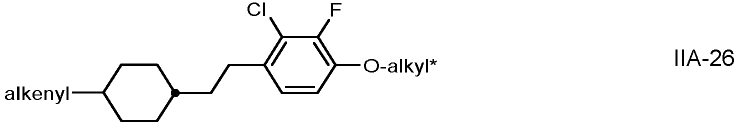 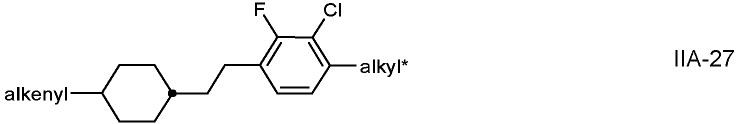 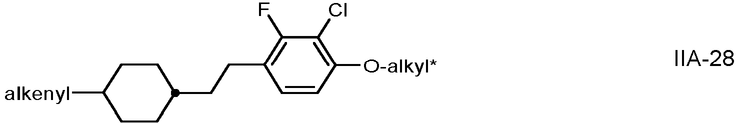 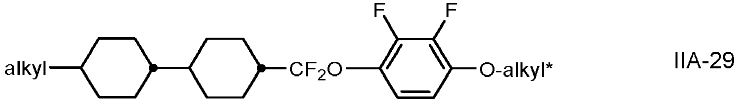 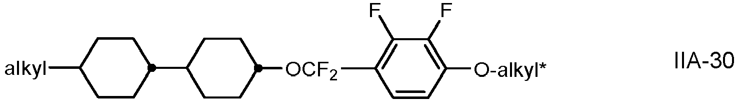 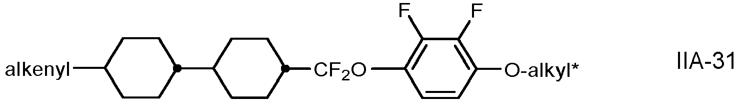 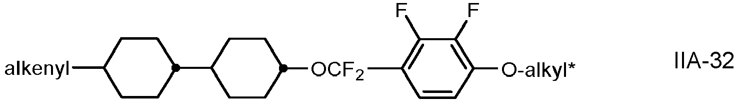 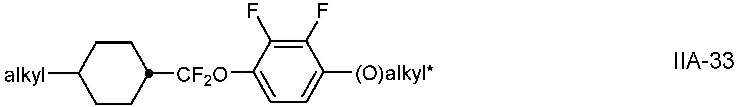 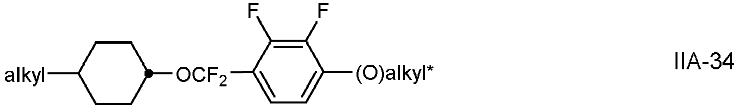 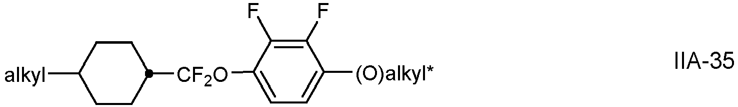 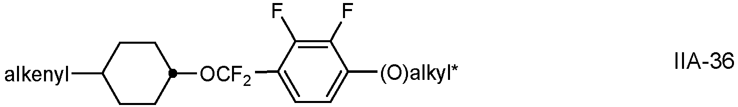 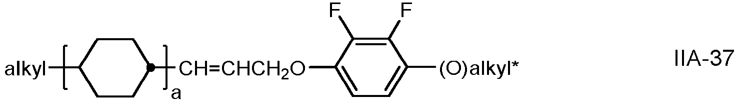 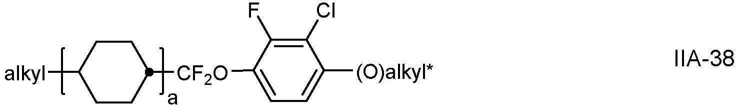 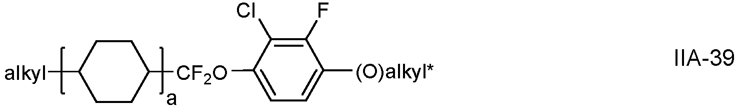 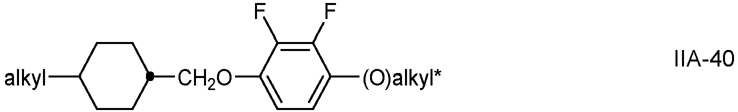 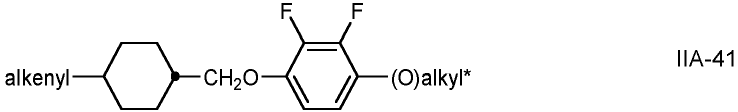 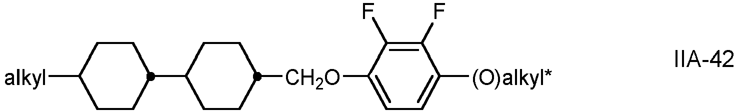 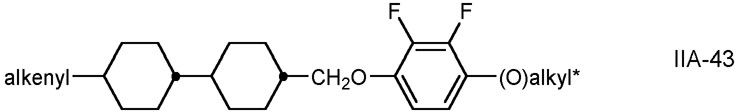 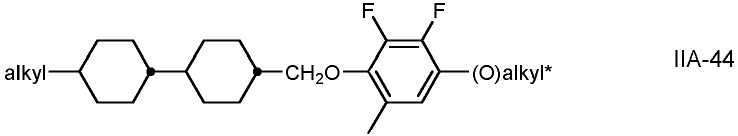 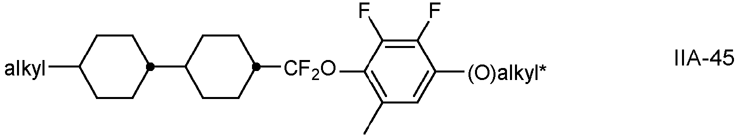 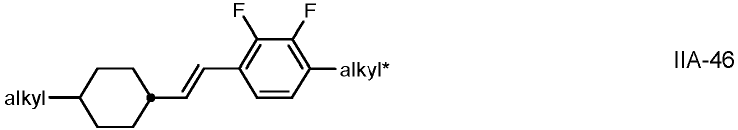 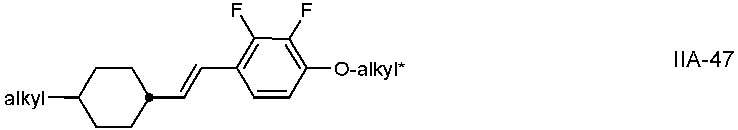 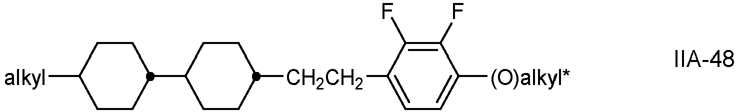 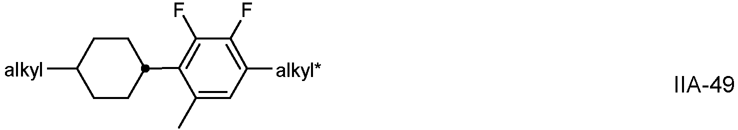 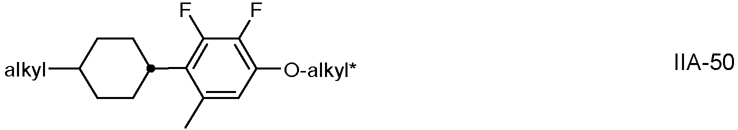 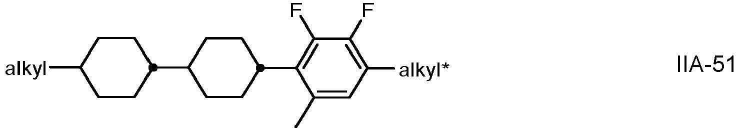 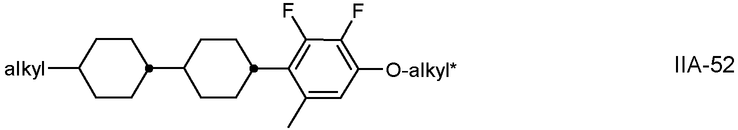 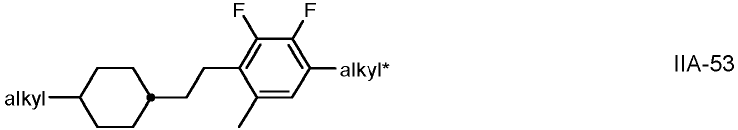 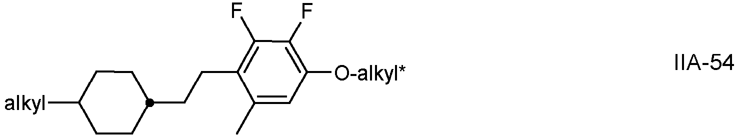 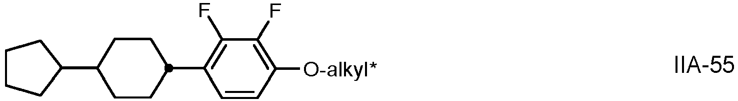 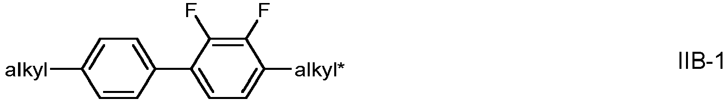 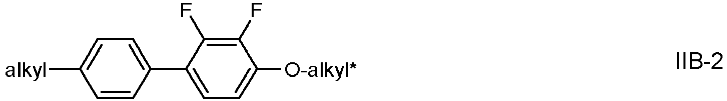 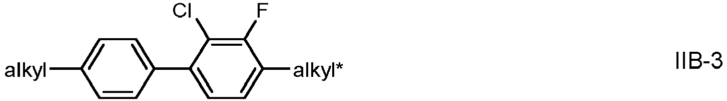 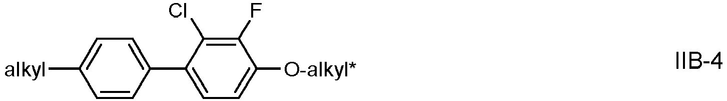 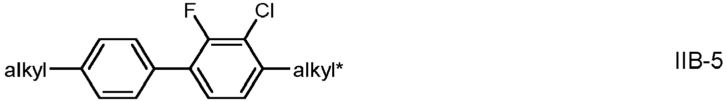 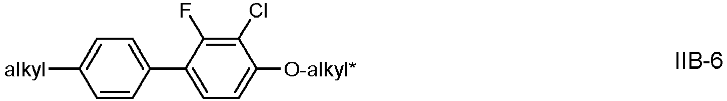 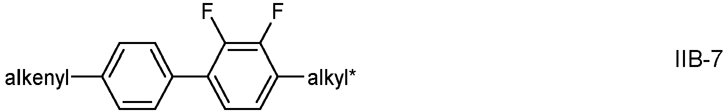 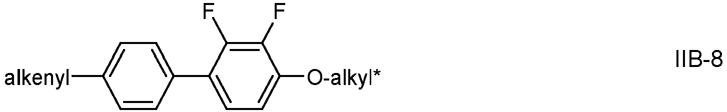 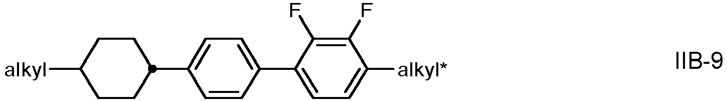 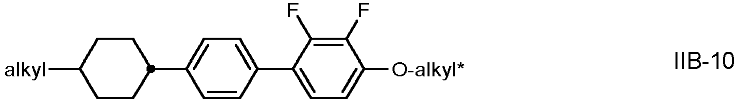 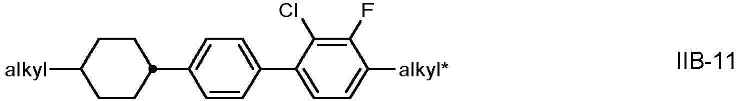 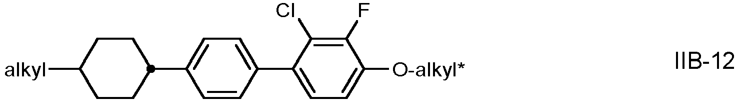 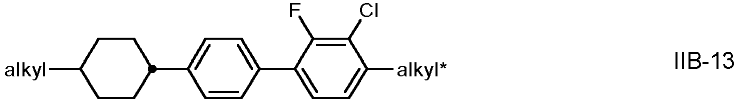 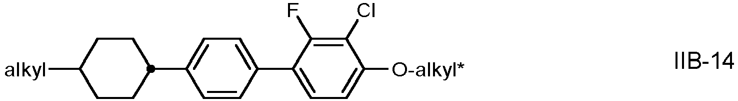 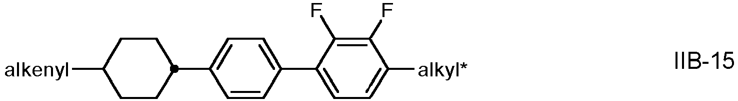 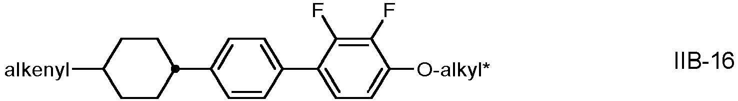 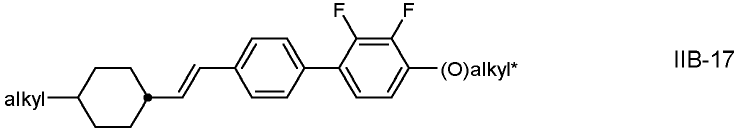 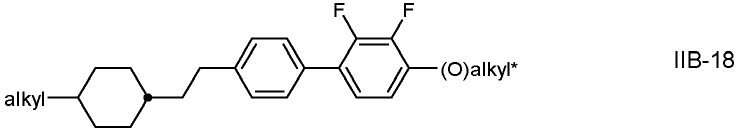 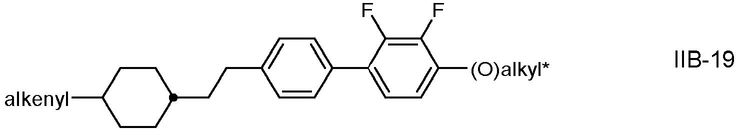 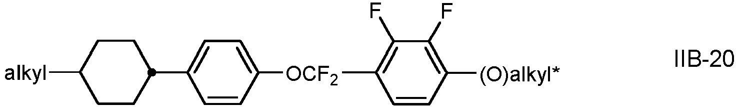 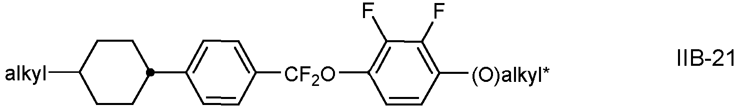 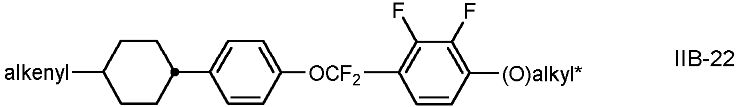 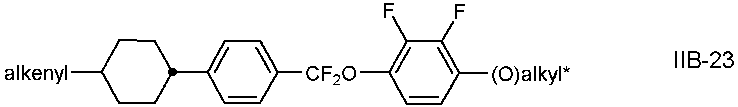 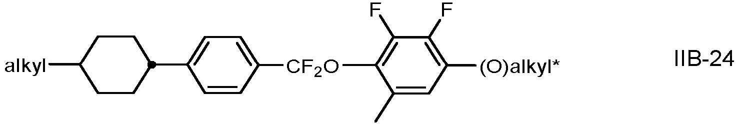 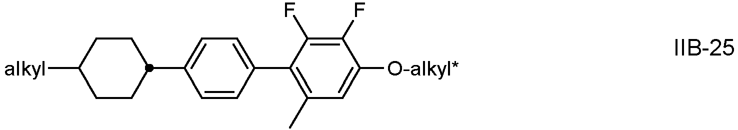 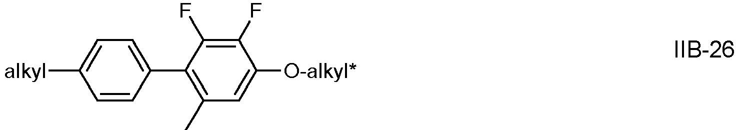 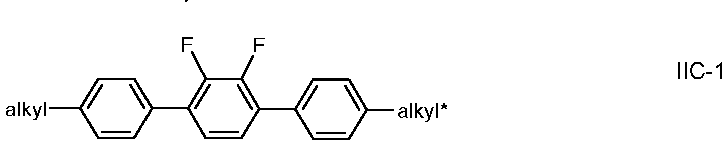 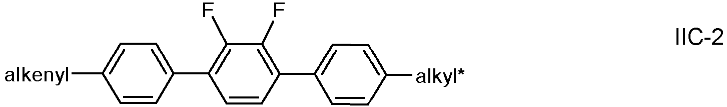 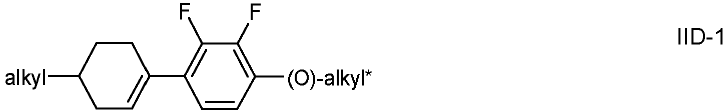 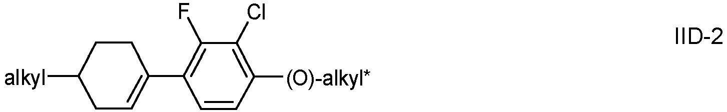 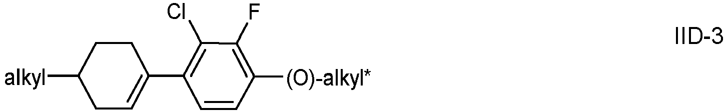 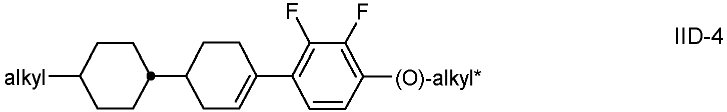 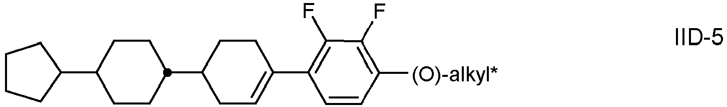 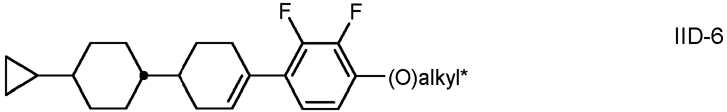 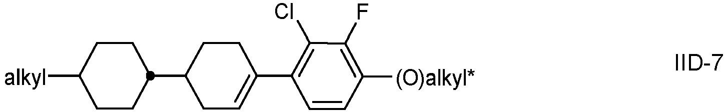 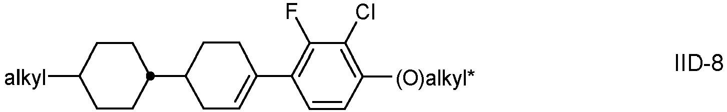 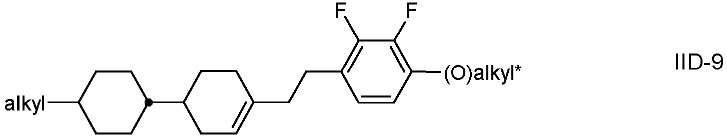 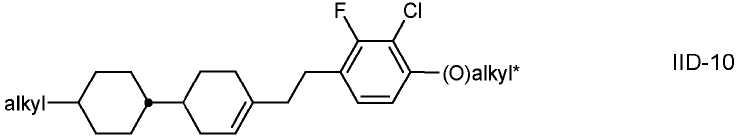 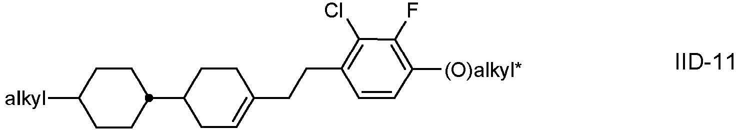 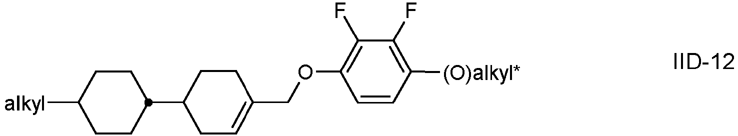 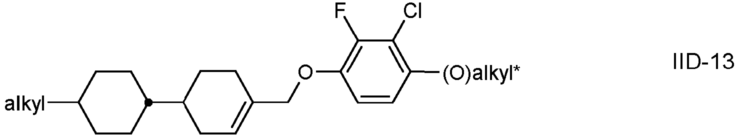 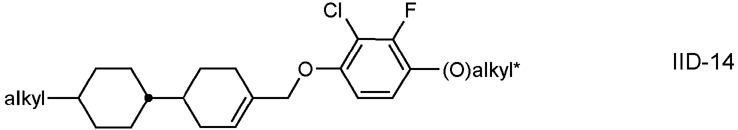 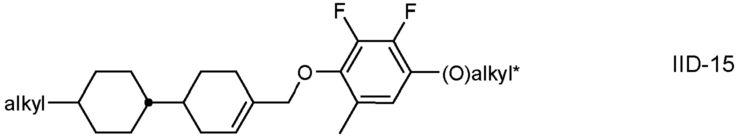 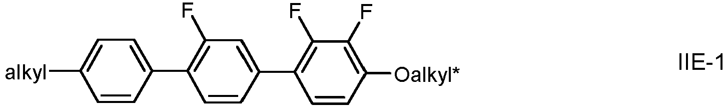 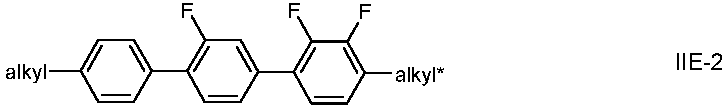 in which the parameter a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond, preferably an oxygen atom. Alkenyl preferably denotes any of the groups CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred compounds of the formula IID are selected from the following sub-formulae: 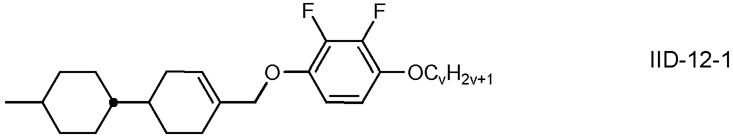 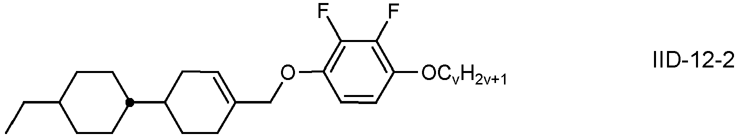 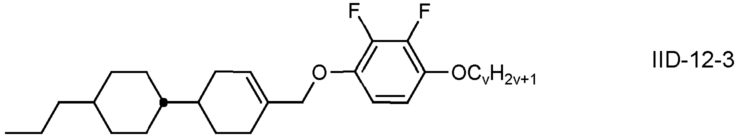 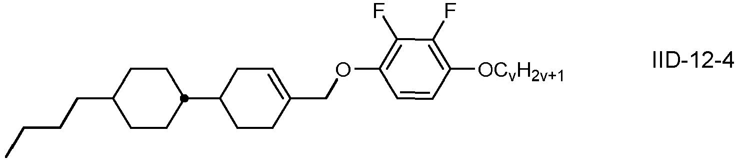 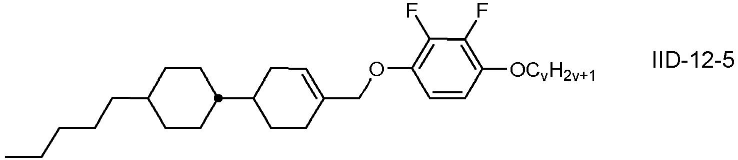 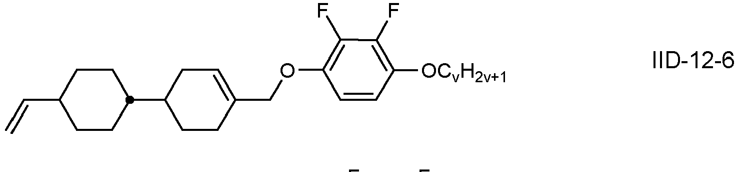 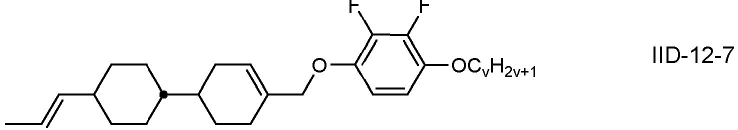 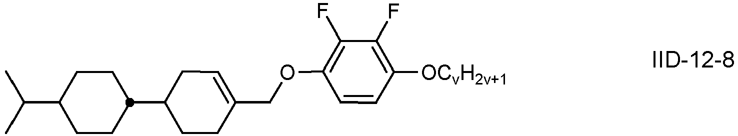 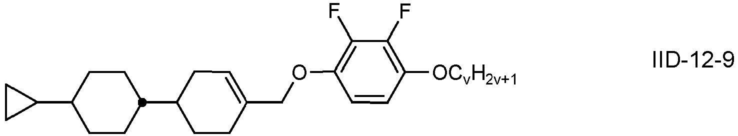 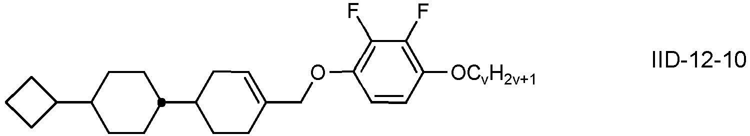 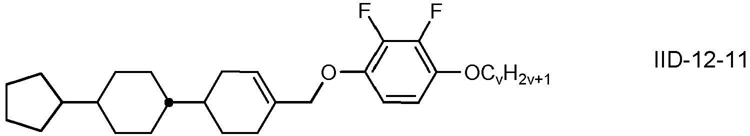 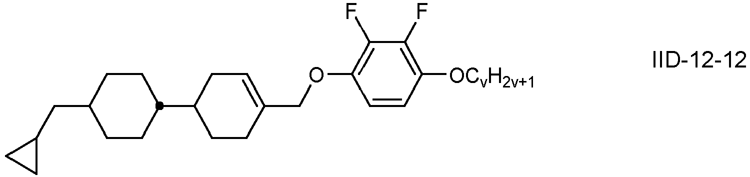 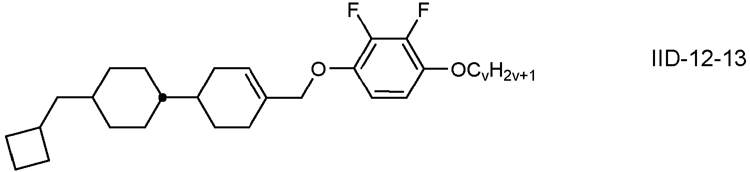 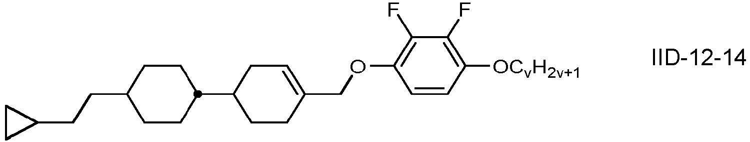 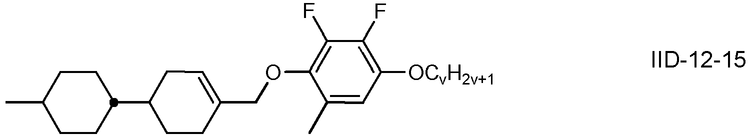 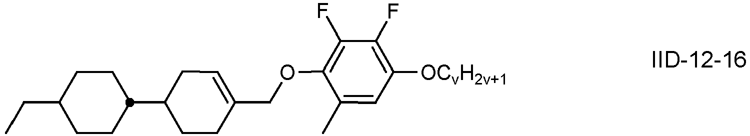 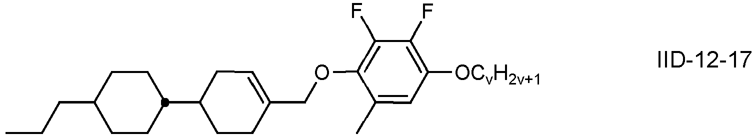 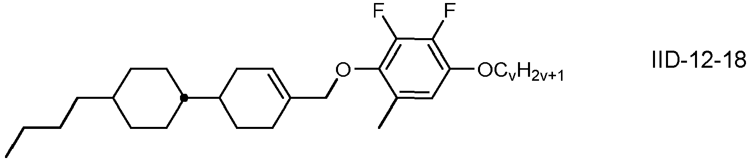 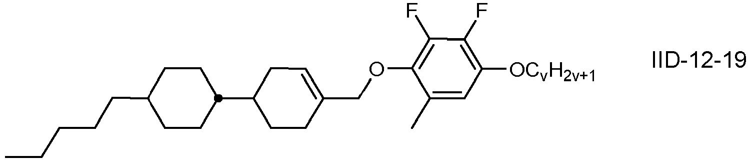 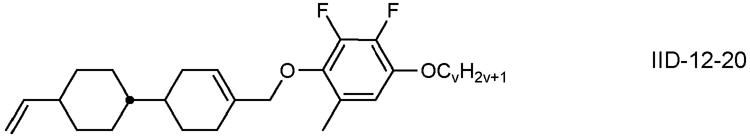 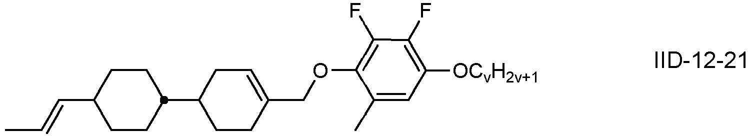 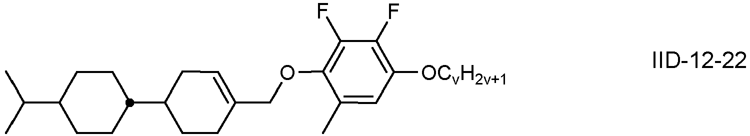 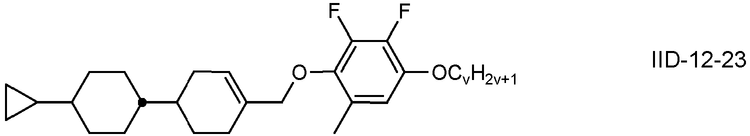 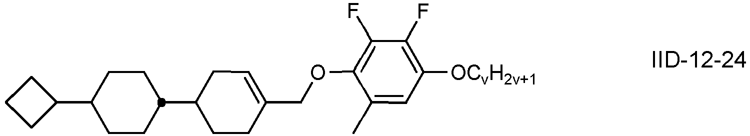 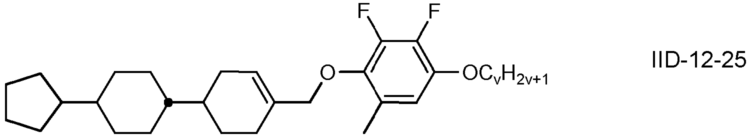 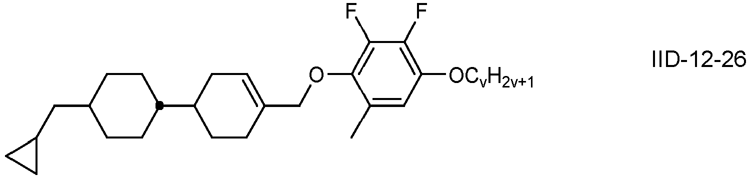 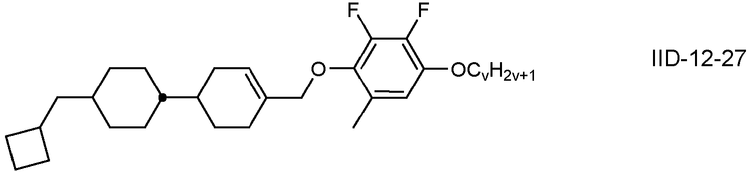 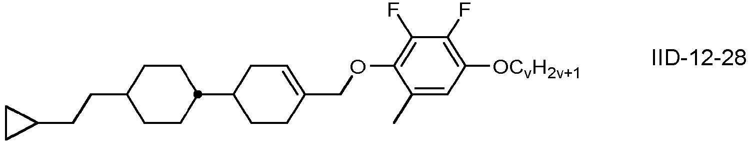 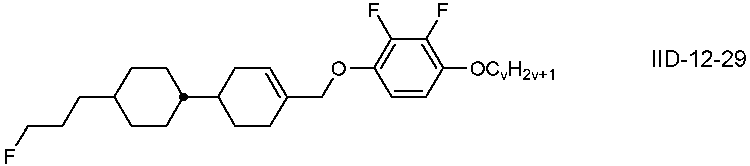 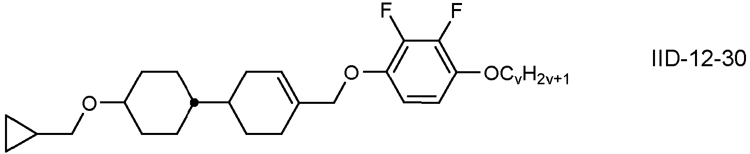 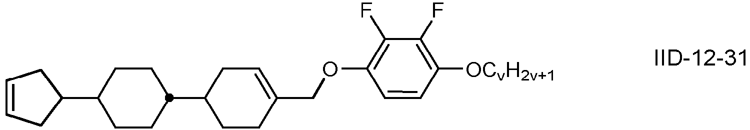 wherein v denotes 1, 2, 3, 4, 5 or 6.

In a preferred embodiment, the medium comprises one or more compounds of formula IID-12a 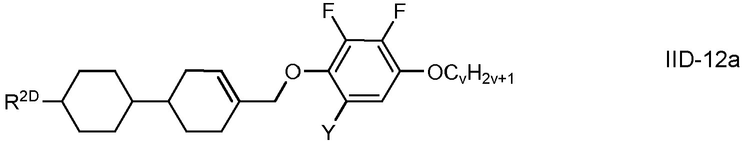 wherein the groups are defined as for formula IID above,
preferably R² denotes 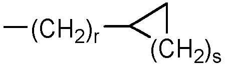 , in which r is 0, 1, 2, 3, 4, 5 or 6, s is 1, 2 or 3.

In a preferred embodiment, the medium comprises one or more compounds of formula IIE as follows: 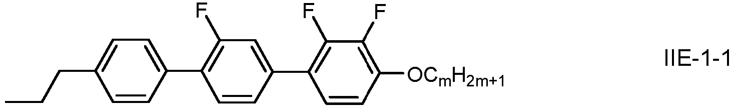 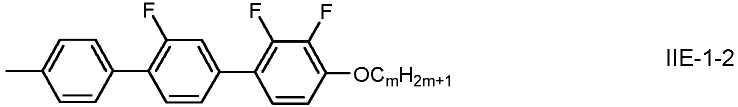 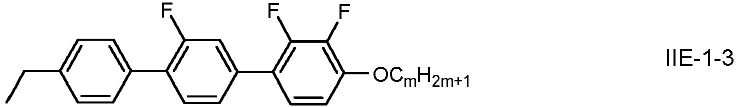 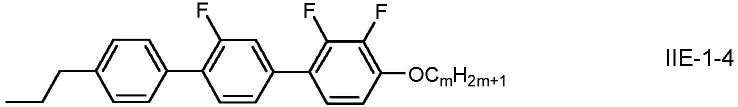 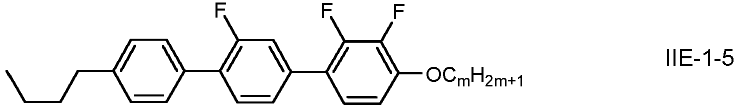 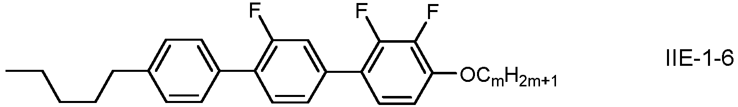 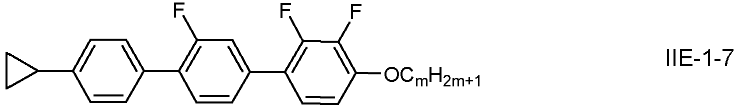 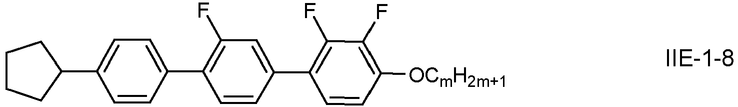 in which the occurring groups and parameters have the meanings given above under formula IIE.

More preferred media according to the invention comprise one or more compounds of the formulae IIA-2, IIA-8, IIA-10, IIA-16, IIA-18, IIA-40, IIA-41, IIA-42, IIA-43, IIB-2, IIB-10, IIB-16, IIC-1, IID-4 and IID-10.

Very preferred media according to the invention comprise one or more compounds of formula IIB-2 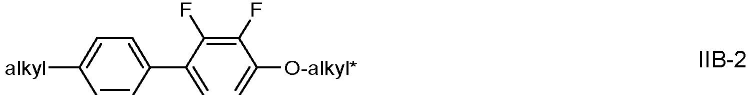 in which alkyl and alkyl* each, independently of one another, denote a straight-chain alkyl radical having 1-6 C atoms, and (O) denotes an oxygen atom or a single bond, in particular the compounds IIB-2-1 and IIB-2-2:

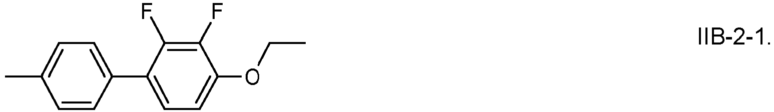

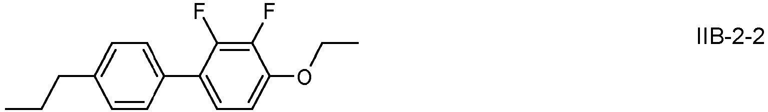

Preferred media according to the invention comprise at least one compound of the formula IIC-1, 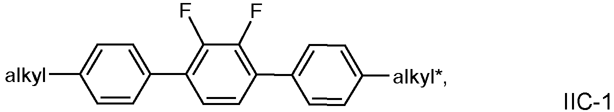 in which alkyl and alkyl* have the meanings indicated above, preferably in amounts of 0.5 % to 5 % by weight, in particular 1 % to 3 % by weight.

In particular, the medium comprises one or more compounds of the formula IIA-2 selected from the following sub-formulae:

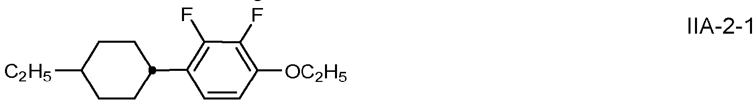

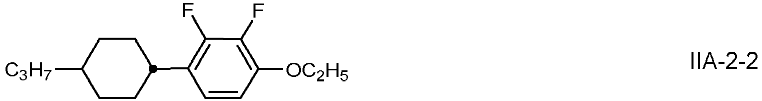

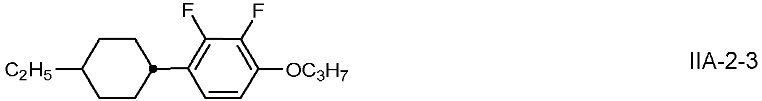

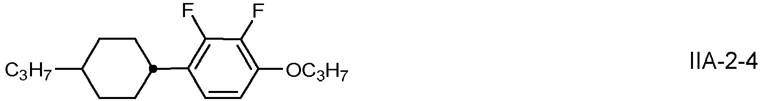

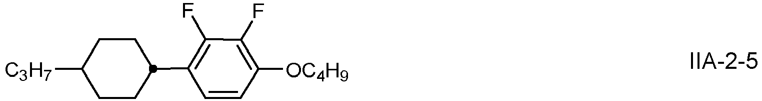

Alternatively, preferably in addition to the compounds of the formulae IIA-2-1 to IIA-2-5, the medium comprises one or more compounds of the formulae IIA-2a-1 to IIA-2a-5:

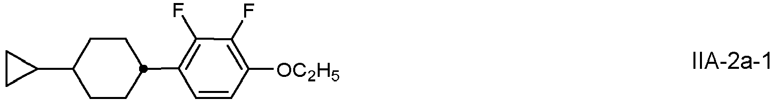

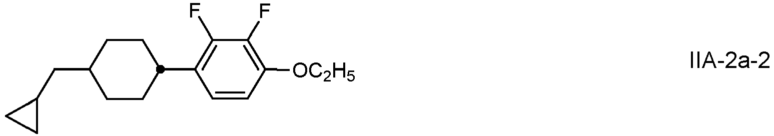

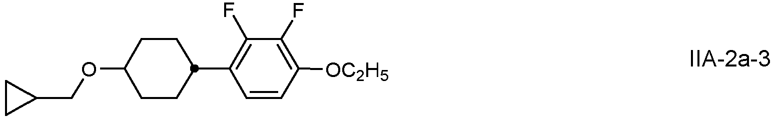

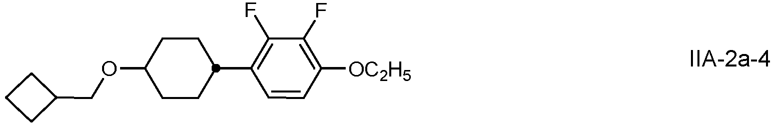

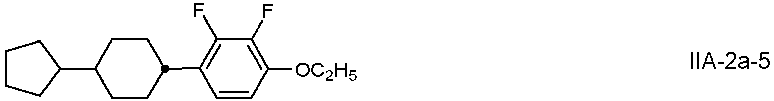

In particular, the medium comprises one or more compounds of the formula IIA-10 or IIA-52 selected from the following sub-formulae:

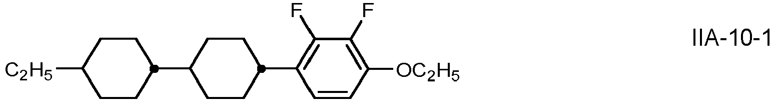

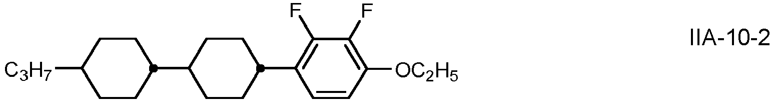

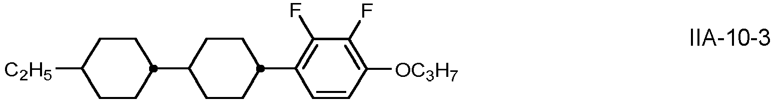

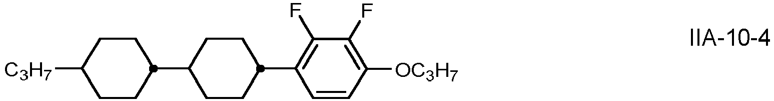

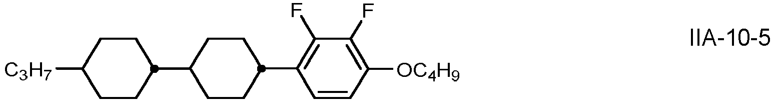

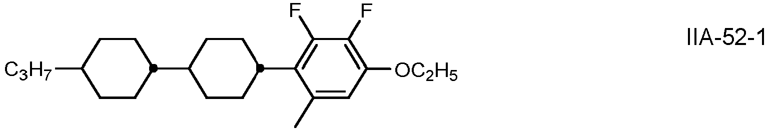

Alternatively, preferably in addition to the compounds of the formulae IIA-10-1 to IIA-10-5, the medium comprises one or more compounds of the formulae IIA-10a-1 to IIA-10a-5:

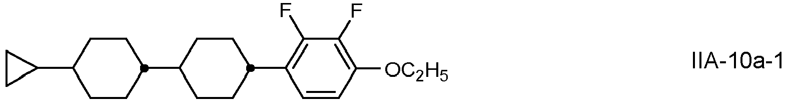

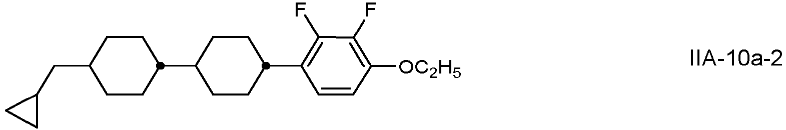

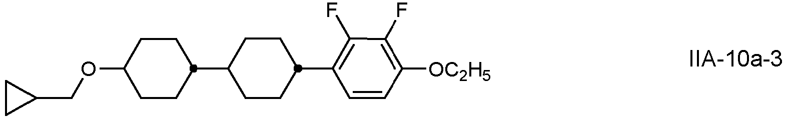

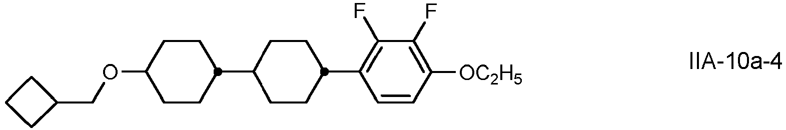

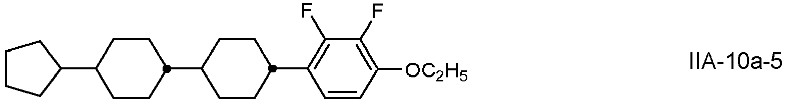

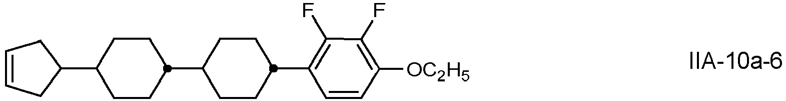

In particular, the medium comprises one or more compounds of the formula IIB-10 selected from the following sub-formulae:

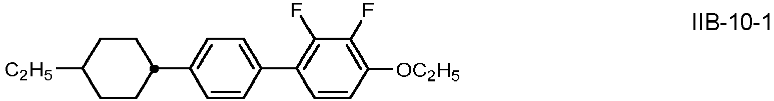

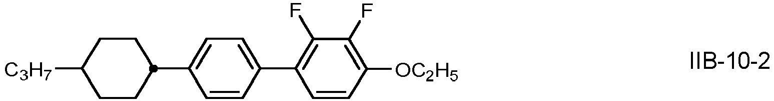

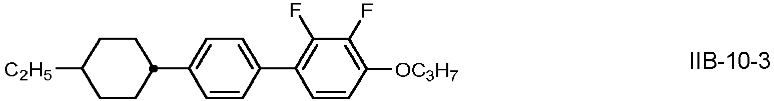

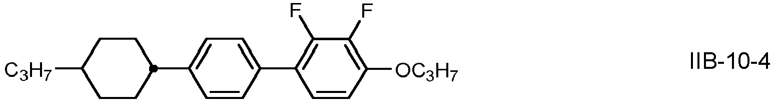

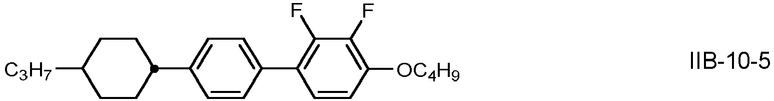

Alternatively, preferably in addition to the compounds of the formulae IIB-10-1 to IIB-10-5, the medium comprises one or more compounds of the formulae IIB-10a-1 to IIB-10a-5:

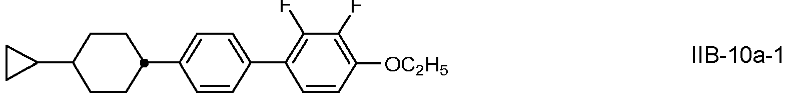

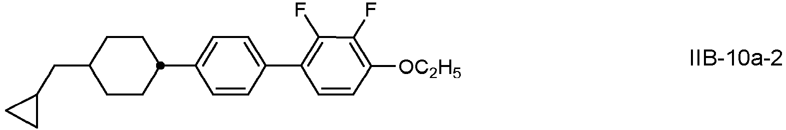

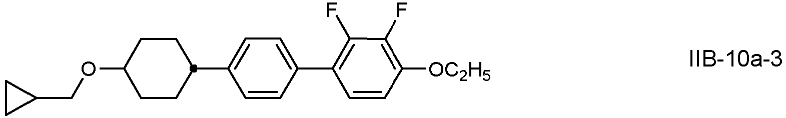

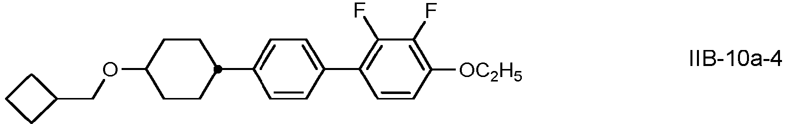

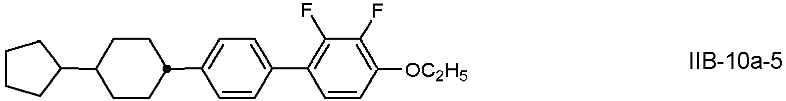

Very preferably, the medium according to the invention comprises one or more compounds of formula IIE, in particular the compounds of the formula IIE-1-1 to IIE-1-8, and most preferably one or more of the compound of formulaa IIE-1-1-1 to IIE-1-1-4:

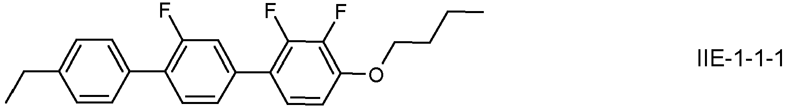

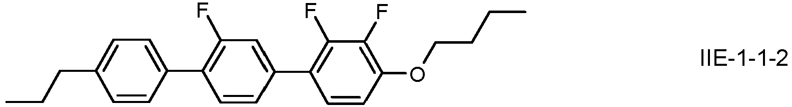

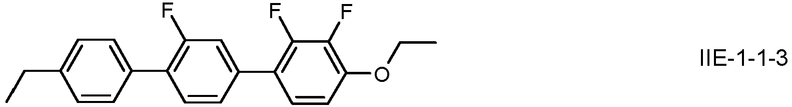

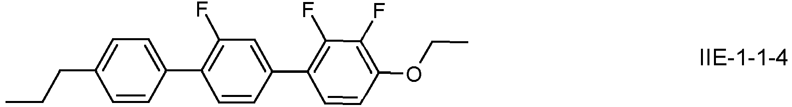

The compounds of formula III are preferably selected from the compounds of the formula III-1, III-2 and/or III-4 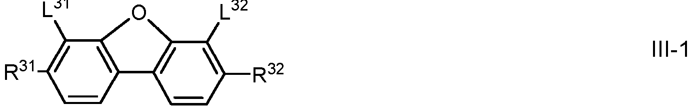 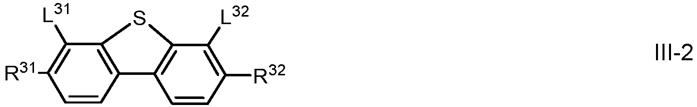 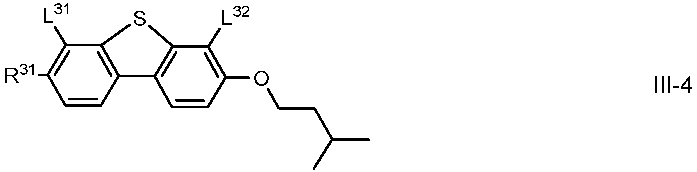 in which the occurring groups have the same meanings as given under formula III above and preferably
- R³¹ and R³²: each, independently of one another, an alkyl or alkoxy radical having 1 to 15 C atoms or an alkenyl radical having 2 to 15 C atoms, more preferably one or both of them denote an alkoxy radical having 1 to 7 C atoms, and
- L³¹ and L³²: preferably denote F.

The liquid crystal medium according to the invention preferably comprises one, two or more compounds of formula III-2. In a preferred embodiment the liquid crystal medium contains at least one compound of formula III-1 and at least one compound of formula III-2. In a further preferred embodiment the liquid crystal medium contains at least one compound of formula III-2 and at least one compound of the formula III-3.

Preferably, the compounds of the formula III-1 selected from the group of compounds of formulae III-1-1 to III-1-10, preferably of formula III-1-6, 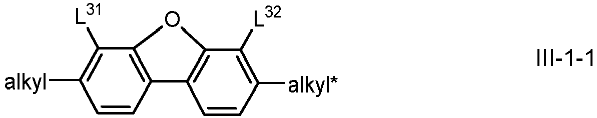 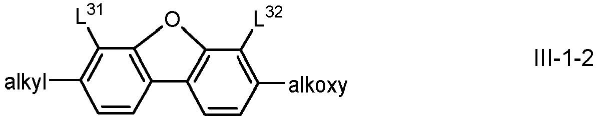 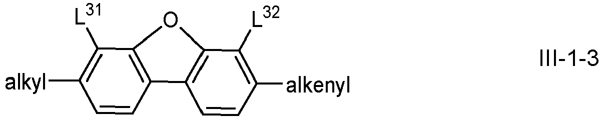 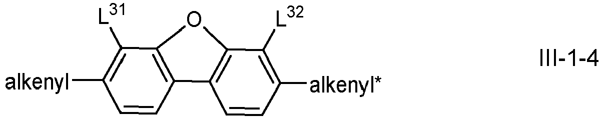 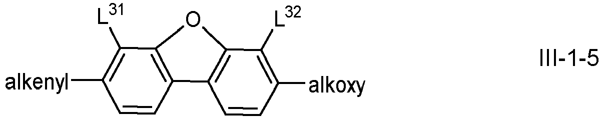 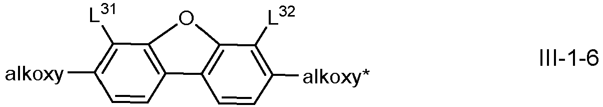 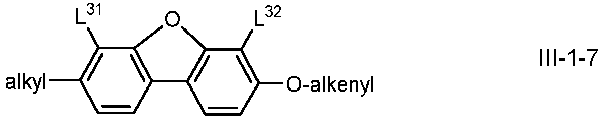 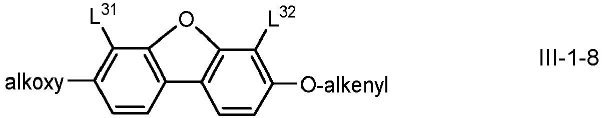 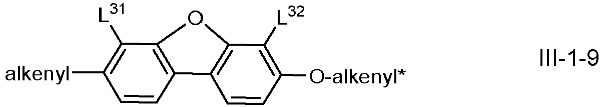 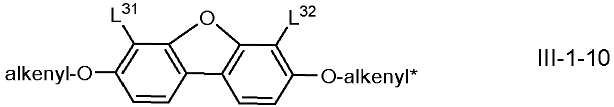 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L³¹ and L³² each, independently of one another, denote F or Cl, preferably both F.

Preferably, the compounds of the formula III-2 are selected from the group of compounds of formulae III-2-1 to III-2-10, preferably of formula III-2-6, 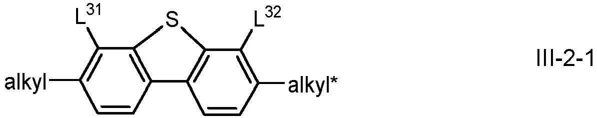 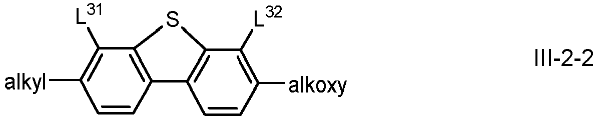 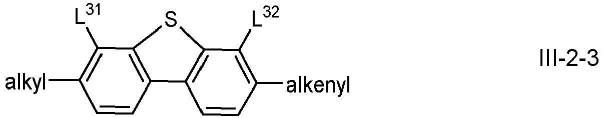 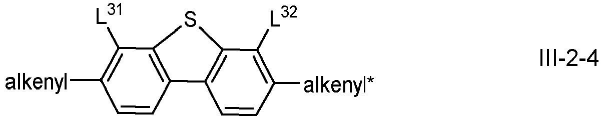 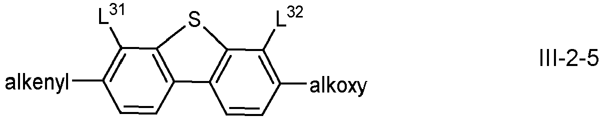 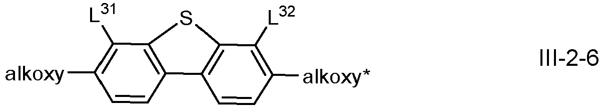 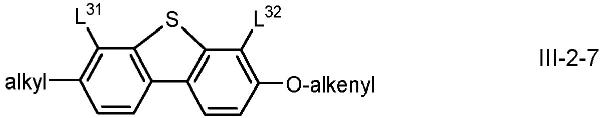 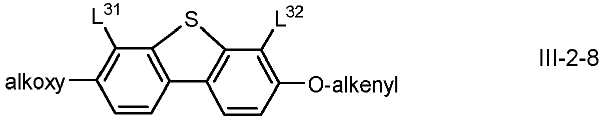 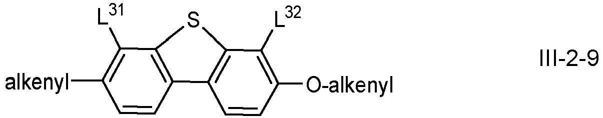 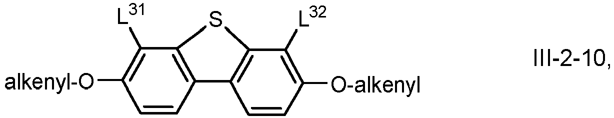 in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and L³¹ and L³² each, independently of one another, denote F or Cl, preferably both F.

Optionally the medium comprises one or more compounds of the formula IIIA-1 and/or IllA-2 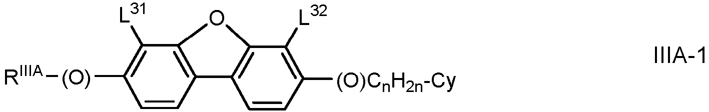 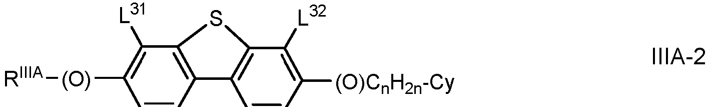 in which L³¹ and L³² have the same meanings as given under formula III, (O) denotes O or a single bond,
- R^{IIIA}: denotes alkyl or alkenyl having up to 7 C atoms or a group Cy-CₘH₂ₘ₊₁,
- m and n: are, identically or differently, 0, 1, 2, 3, 4, 5 or 6, preferably 1, 2 or 3, very preferably 1,
- Cy: denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl, cyclopentyl or cyclopentenyl.

The compounds of formula IIIA-1 and/or IIIA-2 are contained in the medium either alternatively or in addition to the compounds of formula III, preferably additionally.

Very preferred compounds of the formulae IIIA-1 and IIIA-2 are the following: 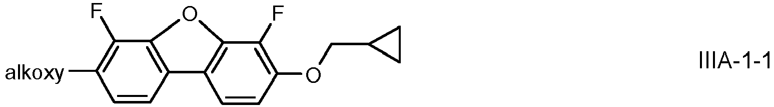 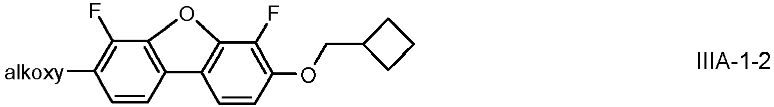 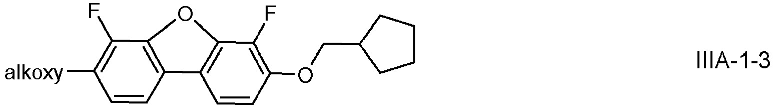 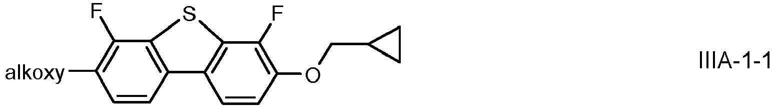 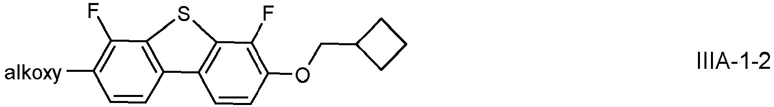 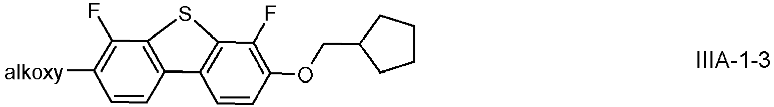 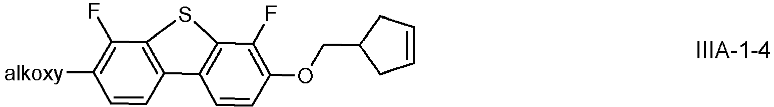 in which alkoxy denotes a straight-chain alkoxy radical having 1-6 C atoms or alternatively -(CH₂)ₙF in which n is 2, 3, 4, or 5, preferably C₂H₄F.

In a preferred embodiment of the present invention, the medium comprises one or more compounds of formula III-3 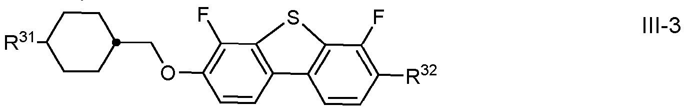 in which
- R³¹, R³²: identically or differently, denote H, an alkyl or alkoxy radical having 1 to 15 C atoms, in which one or more CH₂ groups in these radicals are optionally replaced, independently of one another, by -C≡C-, -CF₂O-, -OCF₂-, -CH=CH-, -O- 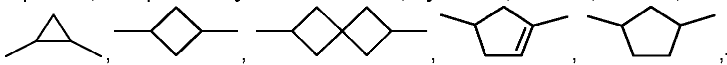 , -CO-O- or -O-CO- in such a way that O atoms are not linked directly to one another, and in which, in addition, one or more H atoms may be replaced by halogen.

The compounds of formula III-3 are preferably selected from the group of compounds of the formulae III-3-1 to III-3-10: 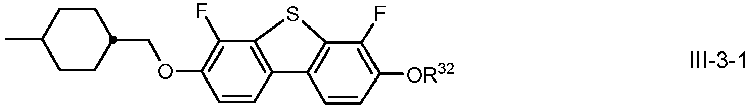 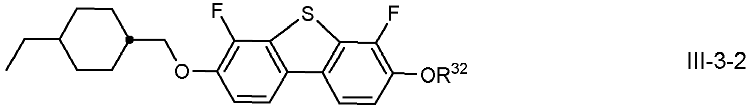 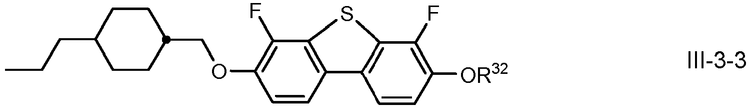 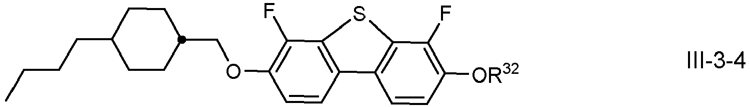 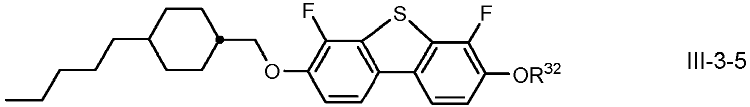 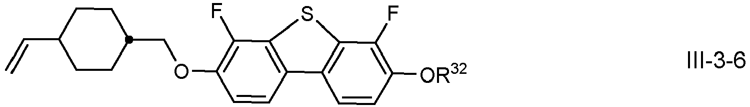 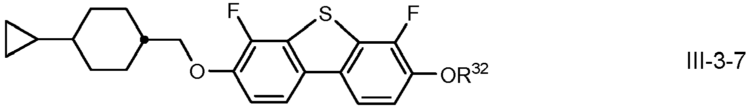 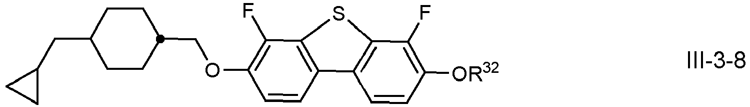 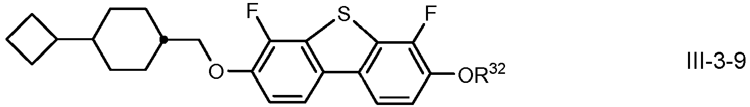 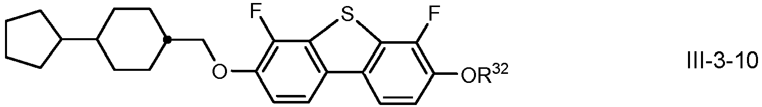 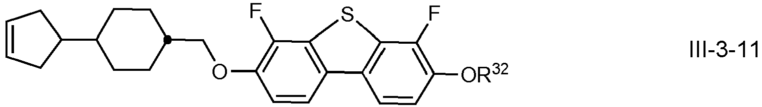 in which R³² denotes alkyl having 1 to 7 C-atoms, preferably ethyl, n-propyl or n-butyl, or alternatively cyclopropylmethyl, cyclobutylmethyl or cyclopentylmethyl or alternatively -(CH₂)ₙF in which n is 2,3,4, or 5, preferably C₂H₄F.

In a preferred embodiment of the present invention, the medium comprises one or more compounds of the formulae III-4 to III-6, preferably of formula III-5, 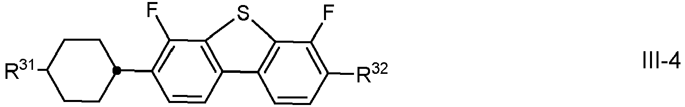 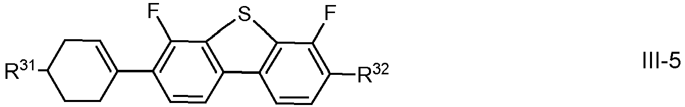 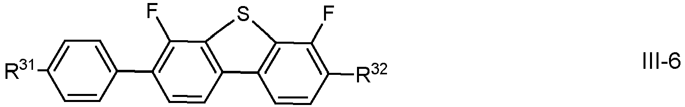 in which the parameters have the meanings given above, R³¹ preferably denotes straight-chain alkyl having 1 to 7 C atoms and R³² preferably denotes alkoxy having 1 to 7 C atoms.

In a preferred embodiment the media according to the invention comprise one or more compounds of the formula III selected from the group of compounds of formulae III-7 to III-9, preferably of formula III-8, 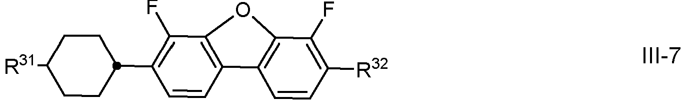 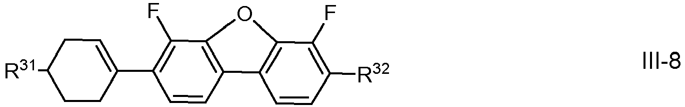 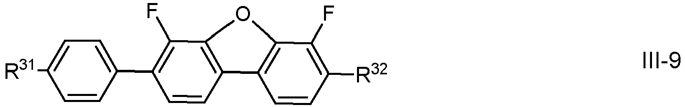 in which the parameters have the meanings given above, R³¹ preferably denotes straight-chain alkyl having 1 to 7 C atoms and R³² preferably denotes alkoxy having 1 to 7 C atoms.

In a preferred embodiment, the medium comprises one or more compounds of the formula IV, 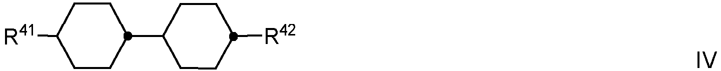 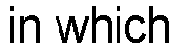
- R⁴¹: denotes an unsubstituted alkyl radical having 1 to 7 C atoms or an unsubstituted alkenyl radical having 2 to 7 C atoms, preferably an n-alkyl radical, particularly preferably having 2, 3, 4 or 5 C atoms, and
- R⁴²: denotes an unsubstituted alkyl radical having 1 to 7 C atoms or an unsubstituted alkoxy radical having 1 to 6 C atoms, both preferably having 2 to 5 C atoms, an unsubstituted alkenyl radical having 2 to 7 C atoms, preferably having 2, 3 or 4 C atoms, more preferably a vinyl radical or a 1-propenyl radical and in particular a vinyl radical,
where the compounds of formula I are excluded from formula IV and its sub-formulae.

The compounds of the formula IV are preferably selected from the group of the compounds of the formulae IV-1 to IV-4, 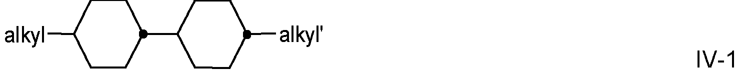 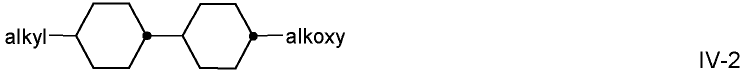 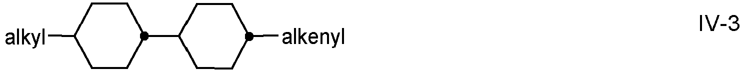 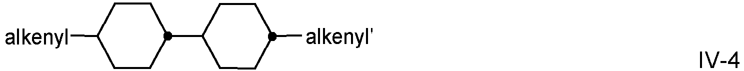 in which
alkyl and alkyl', independently of one another, denote alkyl having 1 to 7 C atoms, preferably having 2 to 5 C atoms,
alkenyl denotes an alkenyl radical having 2 to 5 C atoms, preferably having 2 to 4 C atoms, particularly preferably 2 C atoms,
alkenyl' denotes an alkenyl radical having 2 to 5 C atoms, preferably having 2 to 4 C atoms, particularly preferably having 2 to 3 C atoms, and
alkoxy denotes alkoxy having 1 to 5 C atoms, preferably having 2 to 4 C atoms.

Preferably the medium contains in addition to the compounds of formula IV-2 one or more compounds selected from the compounds of the formulae IV-1 and IV-3.

Preferably, the medium comprises one or more compounds selected from the compounds of the formulae IV-1-1 to IV-1-4

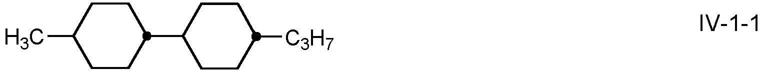

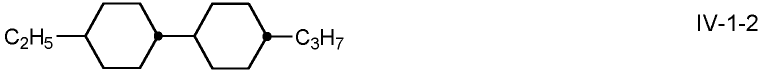

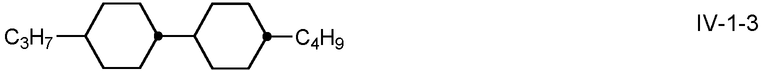

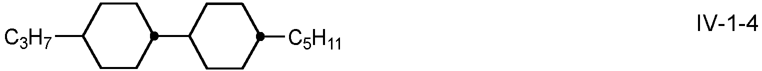

Very preferably, the medium according to the invention comprises the compound of formula IV-1-1.

Very preferably, the medium according to the invention comprises one or more compounds of the formulae IV-2-1 and/or IV-2-2

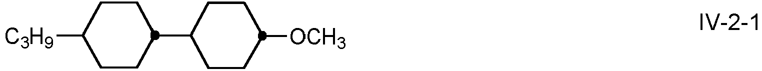

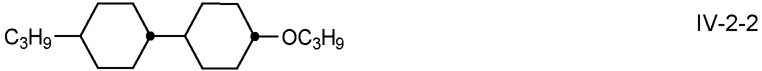

In a preferred embodiment, the medium according to the invention comprises one or more compounds of formula IV-3, 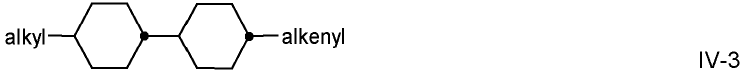 in which very preferably alkyl denotes an alkyl radical having 1 to 7 C atoms, in particular n-ethyl or n-propyl, very particularly n-propyl, and alkenyl denotes 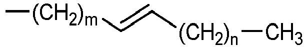 , in which m is 0, 1 or 2, preferably 0, and n is 0, 1 or 2, preferably 0 or 1,

in particular selected from the compounds of the formulae IV-3-1 to IV-3-6, very particularly preferably of the formula IV-3-2:

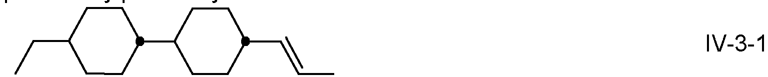

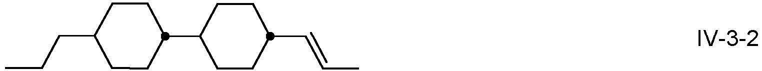

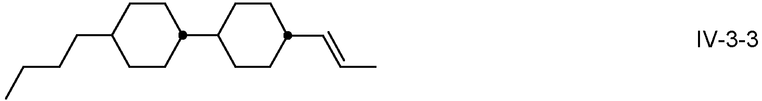

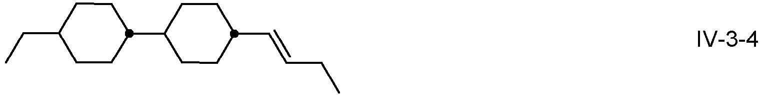

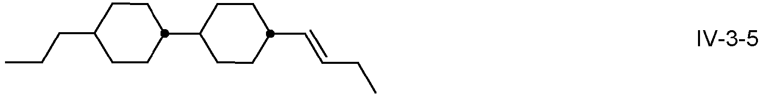

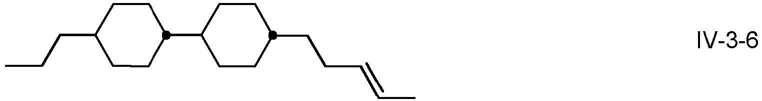

In a preferred embodiment, the medium comprises, in particular in addition to the compounds of the formulae IV-3-1 to IV-3-6, one or more compounds of the formulae IV-3-7 to IV-3-9

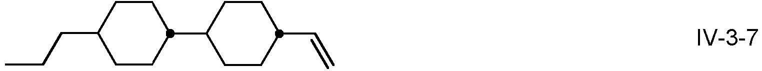

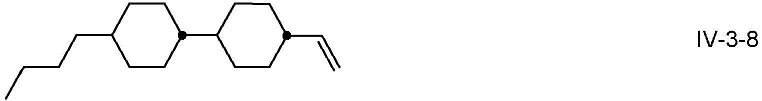

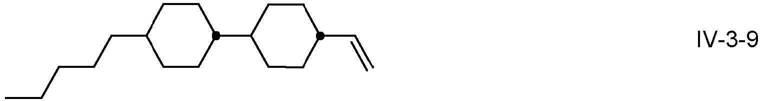

Preferably, the concentration of the compounds of the formulae IV-3-7 to IV-3-9 in the medium according to the invention is less than 5% or less than 4% or less than 3%, very preferably 0% to 1%, in particular 0%.

Very preferably, the medium according to the invention comprises one or more compounds of the formula IV-3 and one or more compounds of the formula IV-1, where the total concentration of the compounds of the formula IV-1 is in the range of from 1% to 30%.

Very preferably, the medium according to the invention comprises a compound of formula IV-4, in particular selected from the compounds of the formulae IV-4-1 to IV-4-3, in particular of the formula IV-4-3

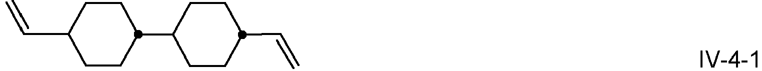

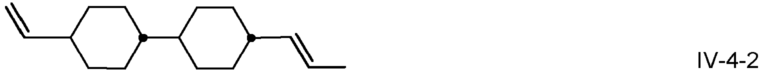

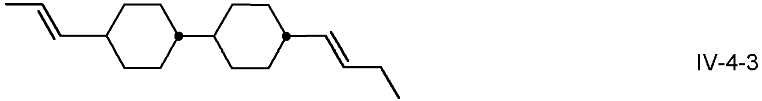

In a preferred embodiment, the medium according to the invention comprises one or more compounds of formula I selected from the compounds of the formulae I-1 to I-4 in combination with one or more compounds selected from the group of compounds of the formulae IA-1 to IA-18: 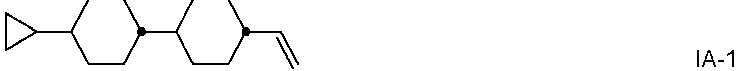 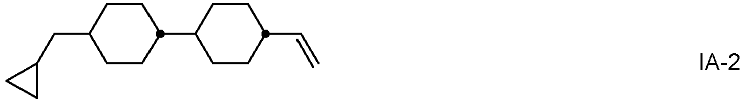 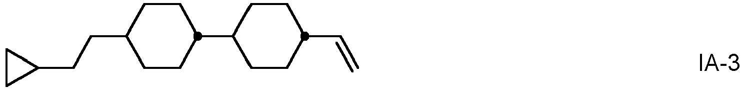 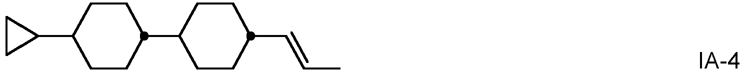 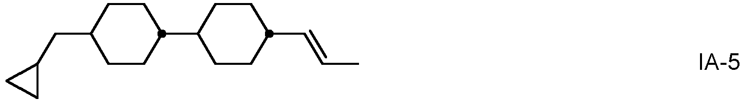 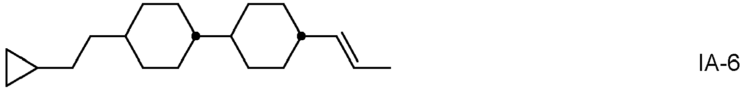 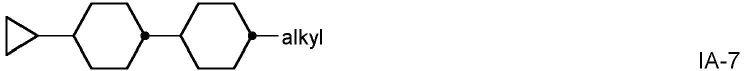 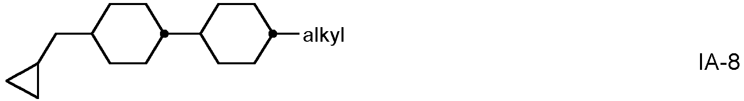 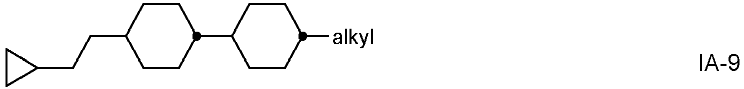 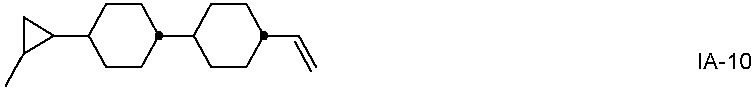 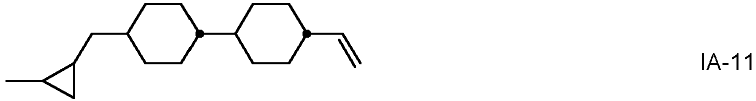 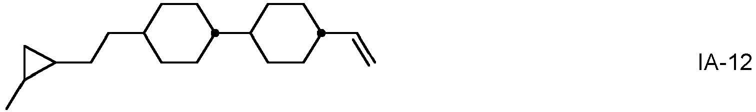 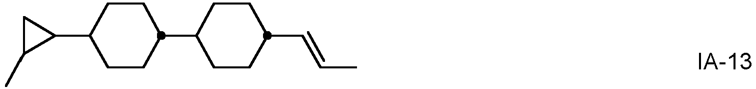 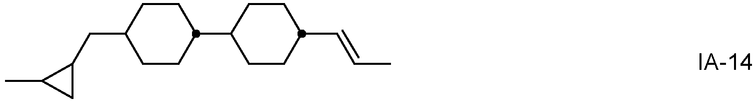 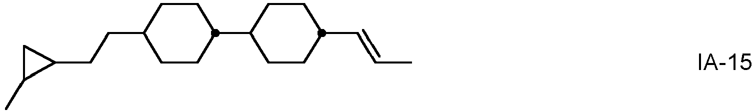 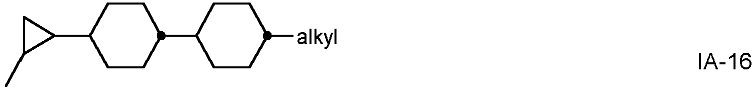 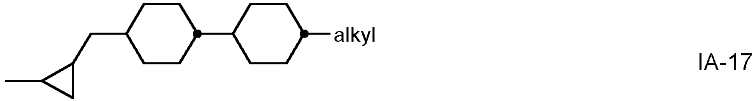 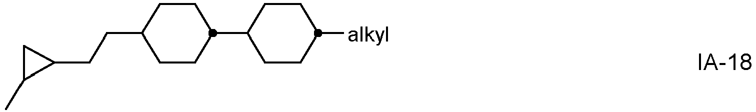 in which alkyl denotes methyl, ethyl, n-propyl, isopropyl, n-butyl, isobutyl, or n-pentyl.

The LC medium according to the invention preferably comprises one or more compounds of the formula IVa, 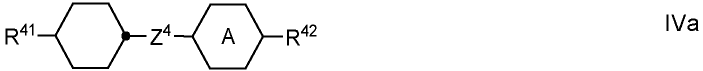 in which
- R⁴¹ and R⁴²: each, independently of one another, denote a straight-chain alkyl, alkoxy, alkenyl, alkoxyalkyl or alkenyloxy radical having up to 12 C atoms, and denotes 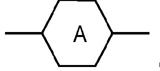 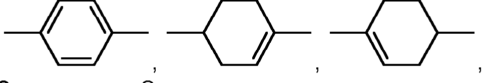 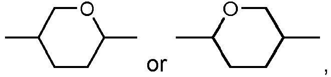
- Z⁴: denotes a single bond, -CH₂CH₂-, -CH=CH-, -CF₂O-, -OCF₂-, -CH₂O-, -OCH₂- , -COO-, -OCO-, -C₂F₄-, -C₄H₈-, -CF=CF-.

Preferred compounds of the formula IVa are indicated below: 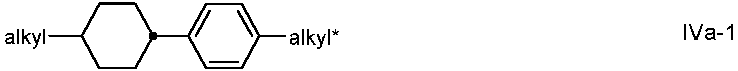 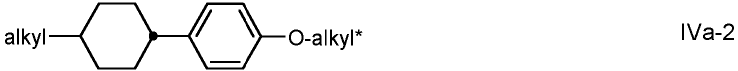 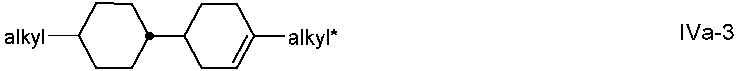 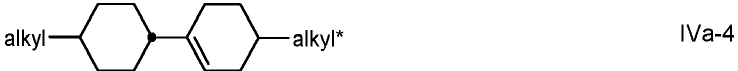 in which
alkyl and alkyl* each, independently of one another, denote a straight-chain alkyl radical having 1 to 6 C atoms.

The medium according to the invention preferably comprises at least one compound of the formula IVa-1and/or formula IVa-2, very preferably of formula IVa-2, in particular the compounds IVa-2 in which alkyl denotes n-propyl and alkyl* denotes methyl.

The proportion of compounds of the formula IVa in the mixture as a whole is preferably less than 5 % by weight, very preferably less than 2% by weight.

Preferably, the medium comprises one or more compounds of formula IVb-1 to IVb-3 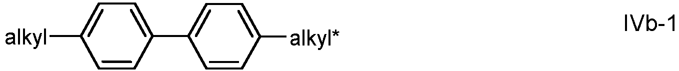 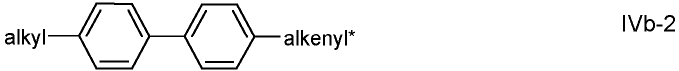 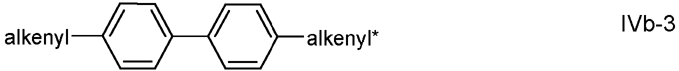 in which
alkyl and alkyl* each, independently of one another, denote a straight-chain alkyl radical having 1 to 6 C atoms, and
alkenyl and alkenyl* each, independently of one another, denote a straight-chain alkenyl radical having 2 to 6 C atoms.

The proportion of the compounds of the formulae IV-1 to IV-3 in the mixture as a whole is preferably less than 3 % by weight, in particular less than 2 % by weight.

Of the compounds of the formulae IVb-1 to IVb-3, the compounds of the formula IVb-2 are particularly preferred.

Very particularly preferred biphenyls are 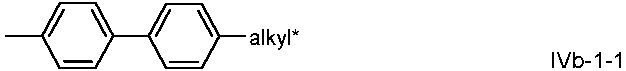 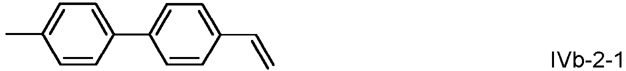 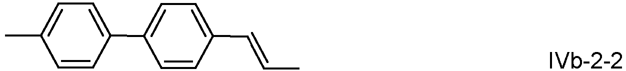 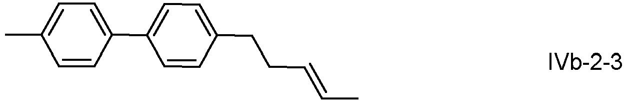 in which alkyl* denotes an alkyl radical having 1 to 6 C atoms and preferably denotes n-propyl or n-butyl. The medium according to the invention particularly preferably comprises one or more compounds of the formulae IVb-1-1 and/or IVb-2-3.

In the compounds of the formula IVb-1-1 alkyl denotes preferably propyl, butyl and pentyl and most preferably propyl.

In a preferred embodiment, the medium according to the invention comprises one or more compounds of formula V 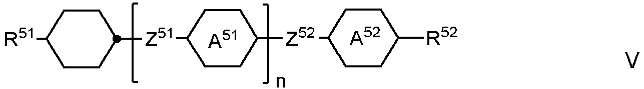 in which
- R⁵¹, R⁵²: denote alkyl having 1 to 7 C atoms, alkoxy having 1 to 7 C atoms, or alkoxyalkyl, alkenyl or alkenyloxy having 2 to 7 C atoms, denotes 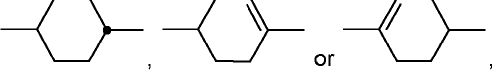 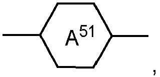 denotes 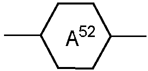 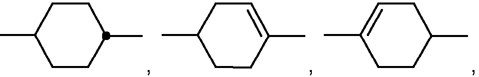 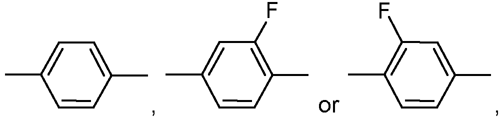
- Z⁵¹, Z⁵²: each, independently of one another, denote -CH₂-CH₂-, -CH₂-O-, -CH=CH- , -C=C-, -COO- or a single bond, and
- n: is 1 or 2.

The compounds of formula V are preferably selected from the compounds of the formulae V-1 to V-14: 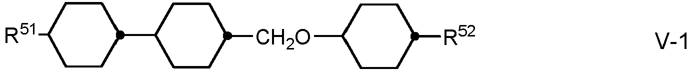 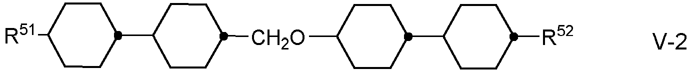 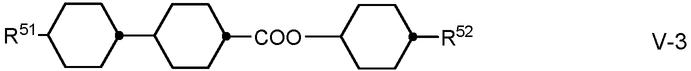 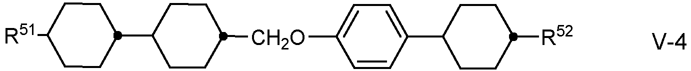 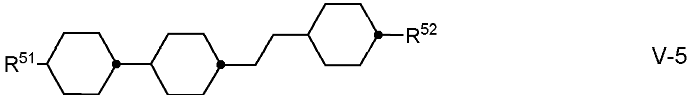 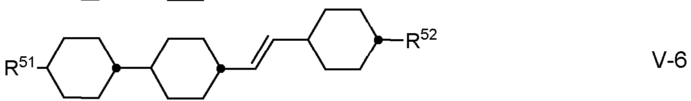 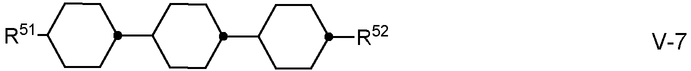 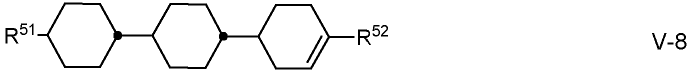 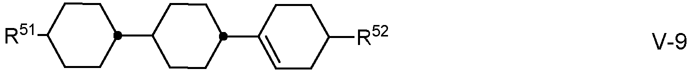 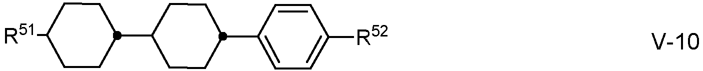 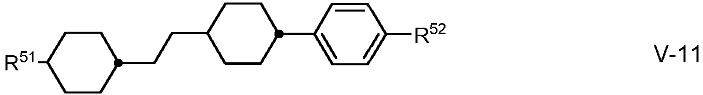 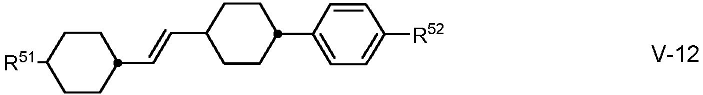 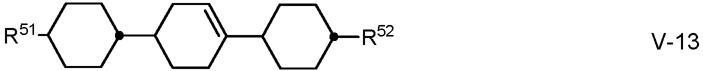 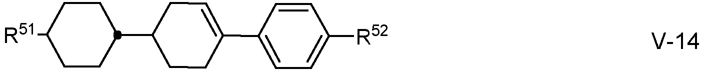 in which R⁵¹ and R⁵² have the meanings indicated for formula V above.
R⁵¹ and R⁵² preferably each, independently of one another, denote straight-chain alkyl having 1 to 7 C atoms or alkenyl having 2 to 7 C atoms.
Preferred media comprise one or more compounds of the formulae V-1, V-3, V-4, V-6, V-7, V-10, V-11, V-12 and/or V-14.

In a preferred embodiment, the medium according to the invention comprises one or more compounds of formula Vb 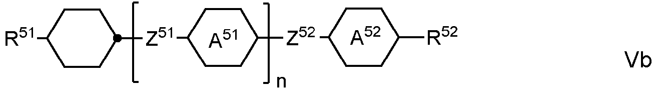 in which
- R⁵¹, R⁵²: denote alkyl having 1 to 7 C atoms, alkoxy having 1 to 7 C atoms, or alkoxyalkyl, alkenyl or alkenyloxy having 2 to 7 C atoms, denotes 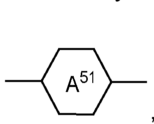 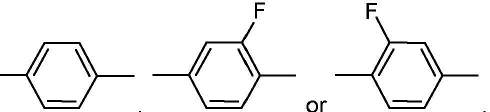 denotes 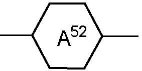 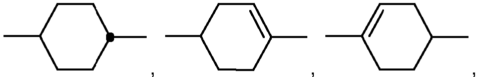 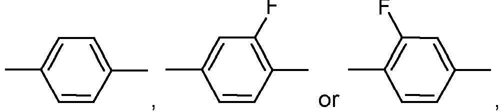
- Z⁵¹, Z⁵²: each, independently of one another, denote -CH₂-CH₂-, -CH₂-O-, -CH=CH- , -C=C-, -COO- or a single bond, and
- n: is 2.

The compounds of formula Vb are preferably selected from the compounds of the formulae Vb-1 to Vb-2:

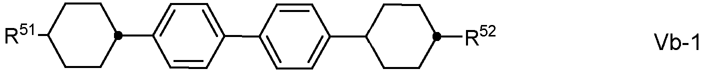

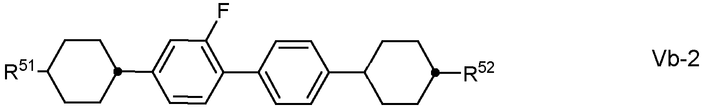

In a preferred embodiment of the present invention the medium additionally comprises one or more compounds of formula VI 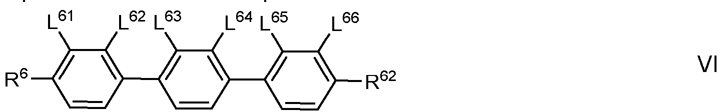 in which R⁶ and R⁶² have the meanings of R^{2A} as defined in claim 1 and R⁶² alternatively denotes F, Cl, CF₃ or OCF₃, preferably F, and L⁶¹, L⁶², L⁶³, L⁶⁴, L⁶⁵, and L⁶⁶ independently denote H or F, where at least one of L⁶¹, L⁶², L⁶³, L⁶⁴, L⁶⁵, and L⁶⁶ denotes F, and wherein the compounds of formula IIC and IIE are excluded.

The compounds of formula VI are preferably selected from the formulae VI-1 to VI-20, in particular from the formulae VI-1, VI-2, IV-4, VI-14, VI-19 and VI-20: 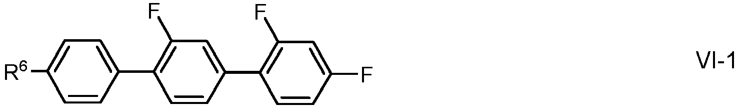 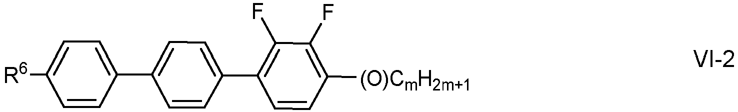 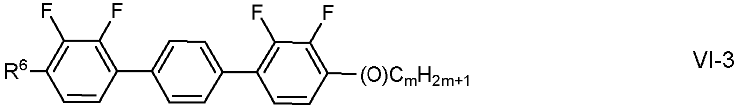 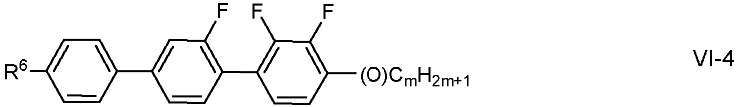 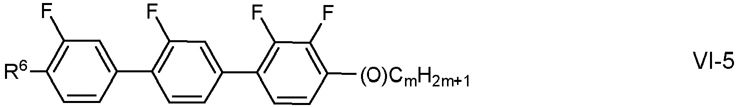 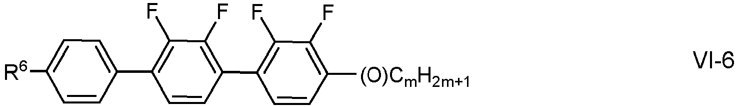 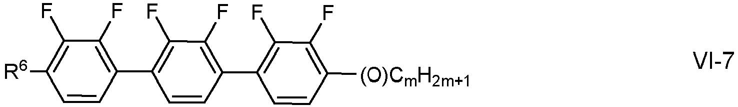 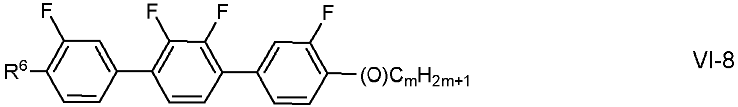 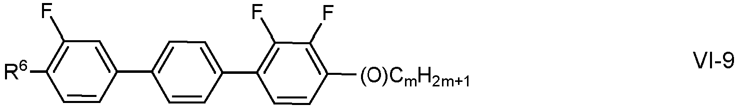 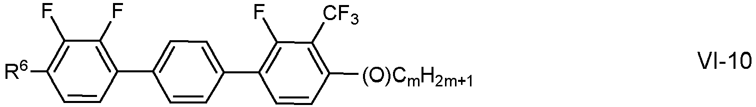 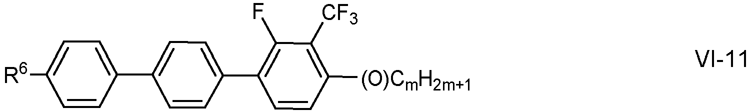 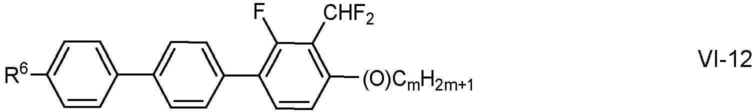 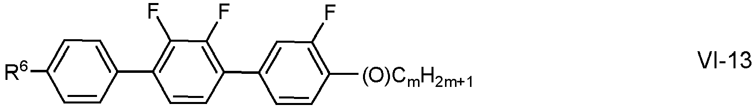 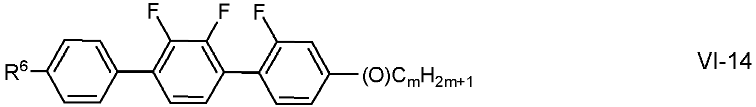 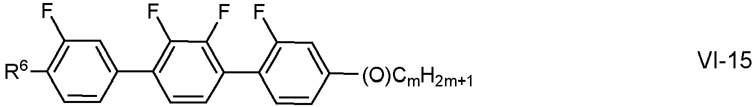 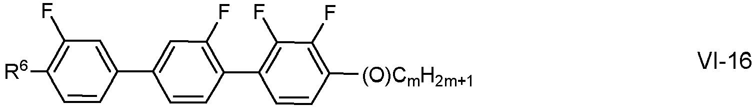 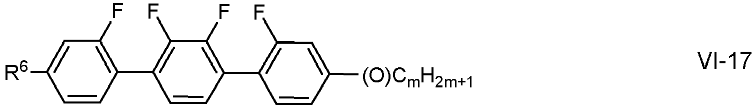 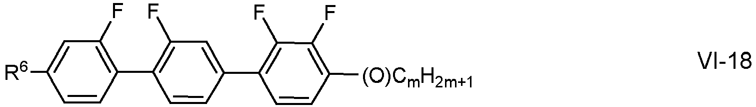 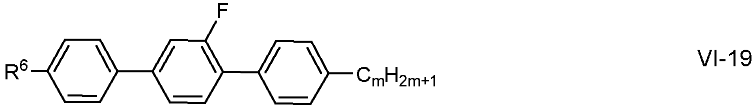 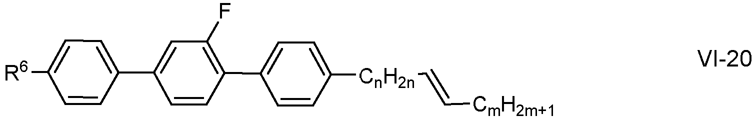 in which R⁶ denotes a straight-chain alkyl or alkoxy radical having 1 to 6 C atoms, (O) denotes -O- or a single bond, and m is 0, 1, 2, 3, 4, 5 or 6 and n is 0, 1, 2, 3 or 4. R⁶ preferably denotes methyl, ethyl, propyl, butyl, pentyl, hexyl, methoxy, ethoxy, propoxy, butoxy or pentoxy.

Particular preference is given to compounds of the formulae VI-1, VI-2, VI-4, VI-19 and VI-20.

In a preferred embodiment of the present invention the medium additionally comprises one or more compounds of formula VIA 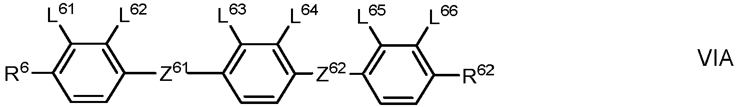 in which R⁶ and R⁶² have the meanings of R^{2A} as defined in claim 1 and R⁶² alternatively denotes F, Cl, CF₃ or OCF₃, preferably F, and L⁶¹, L⁶², L⁶³, L⁶⁴, L⁶⁵, and L⁶⁶ independently denote H or F, where at least one of L⁶¹, L⁶², L⁶³, L⁶⁴, L⁶⁶, and L⁶⁶ denotes F and
Z⁶¹ and Z⁶² independently denote a single bond, -CH₂-CH₂-, -CH₂-O-, -CH=CH- , -C≡C-, -COO- or -CF₂-O- but Z⁶¹ ≠ Z⁶².

Very preferably, the medium according to the invention comprises the compound of formula VIA-1 and/or formula X 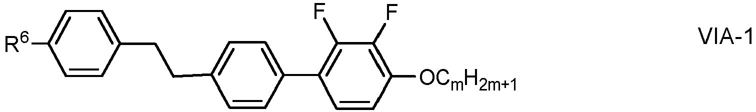 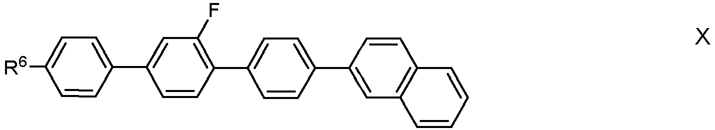 in which R⁶ and m have the meanings defined above and preferably R⁶ denotes methyl, ethyl, n-propyl, n-butyl, or n-pentyl, and m is 2, 3 or 4. In a particular preferred embodiment R⁶ denotes n-propyl and m denotes 2.

In a preferred embodiment of the present invention the medium additionally comprises one or more compounds of the formulae VII-1 to VII-9 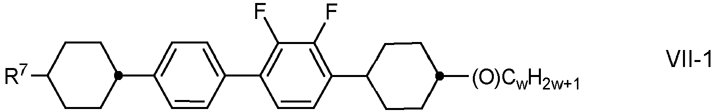 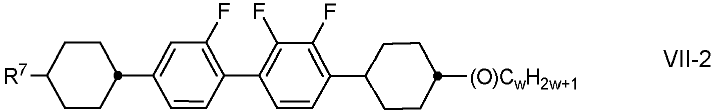 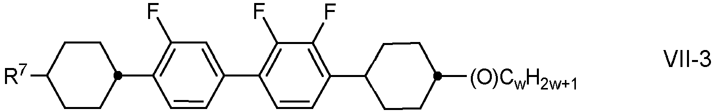 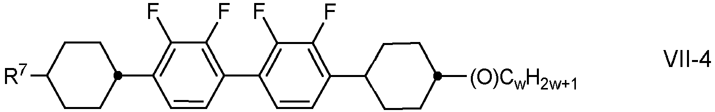 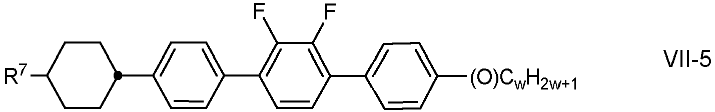 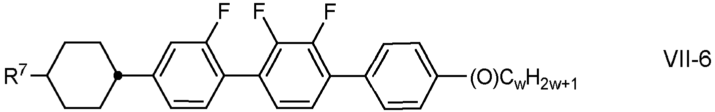 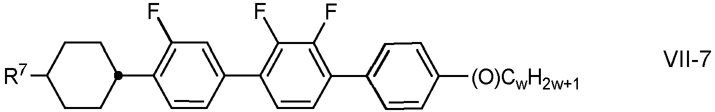 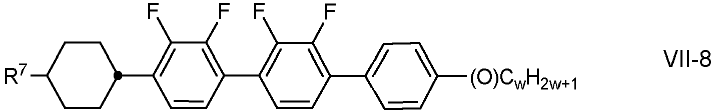 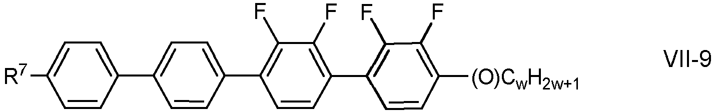 in which
- R⁷: denotes a straight-chain alkyl or alkoxy radical having 1 to 6 C atoms, or a straight chain alkenyl radical having 2 to 6 C atoms, and
- w: is an integer from 1 to 6.

Particular preference is given to mixtures comprising at least one compound of the formula VII-9.

Further preferred embodiments are listed below:
a) Liquid-crystalline medium comprising at least one compound of the formulae Z-1 to Z-8, 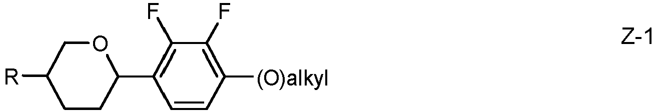 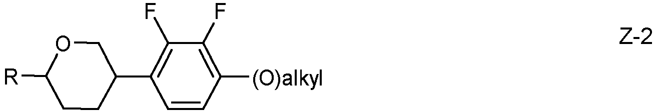 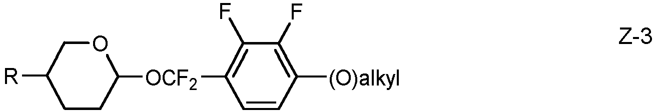 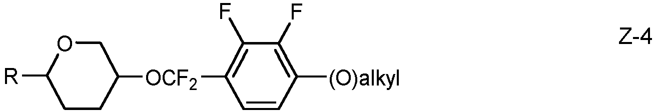 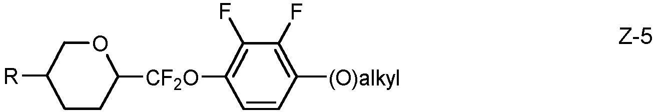 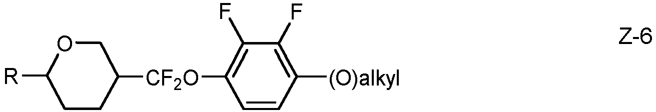 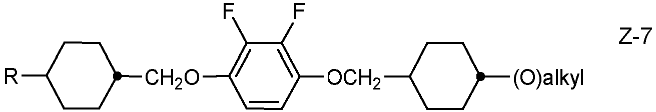 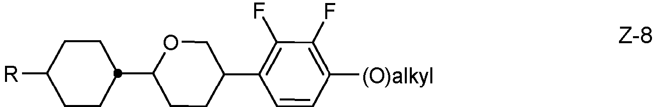 in which R has the meanings of R^{2A} in formula IIA and alkyl denotes a straight-chain alkyl radical having 1 to 6 C atoms.
   In a preferred embodiment the liquid crystal mixtures according to the present invention contain at least one compound of formula Z-8.
b) Preferred liquid-crystalline media according to the invention comprise one or more substances which contain a tetrahydronaphthyl or naphthyl unit, such as, for example, the compounds of the formulae N-1 to N-5, 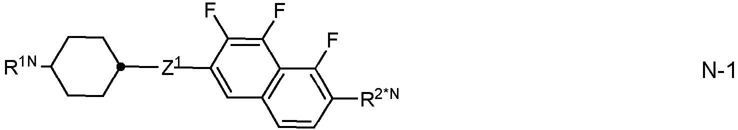 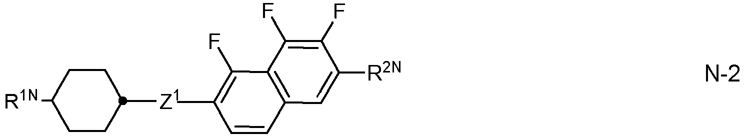 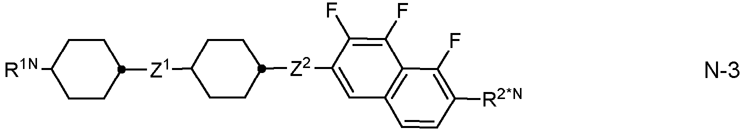 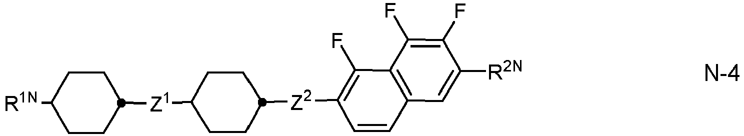 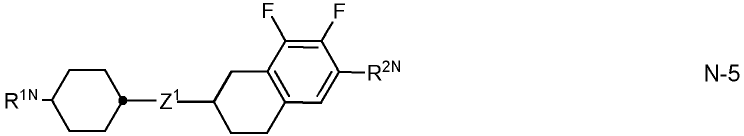 in which R^{1N} and R^{2N} each, independently of one another, have the meanings indicated for R^{2A}, preferably denote straight-chain alkyl, straight-chain alkoxy or straight-chain alkenyl, and
   Z¹ and Z² each, independently of one another, denote -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- or a single bond.
c) Preferred mixtures comprise one or more compounds selected from the group of the difluorodibenzochroman compounds of the formula BC, chromans of the formula CR, and fluorinated phenanthrenes of the formulae PH-1 and PH-2, 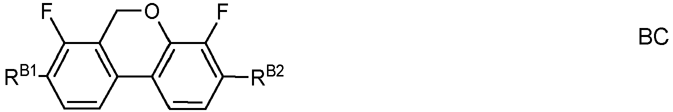 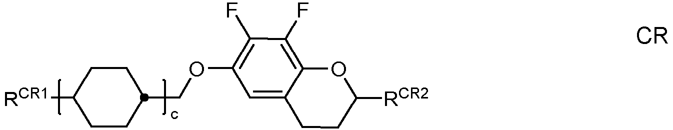 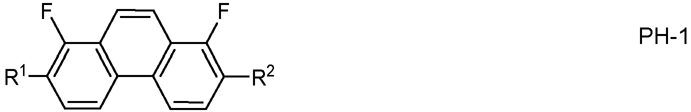 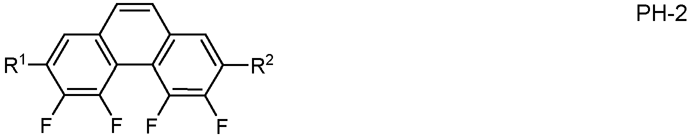 in which R^{B1}, R^{B2}, R^{CR1}, R^{CR2}, R¹, R² each, independently of one another, have the meaning of R^{2A}. c is 0, 1 or 2. R¹ and R² preferably, independently of one another, denote alkyl or alkoxy having 1 to 6 C atoms.
   Particularly preferred compounds of the formulae BC and CR are the compounds BC-1 to BC-7 and CR-1 to CR-5, 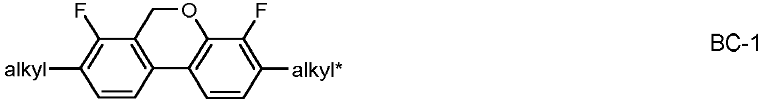 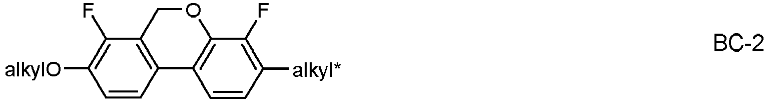 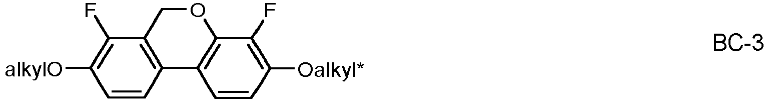 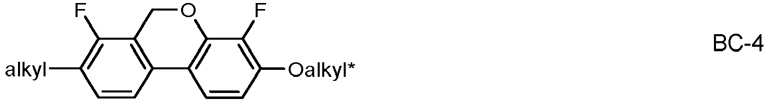 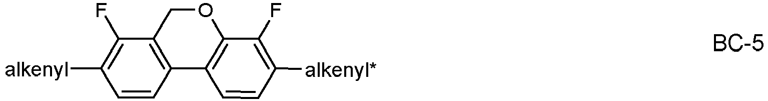 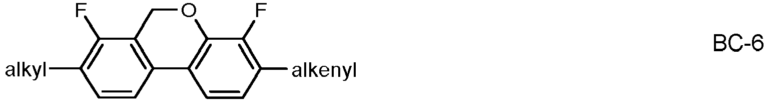 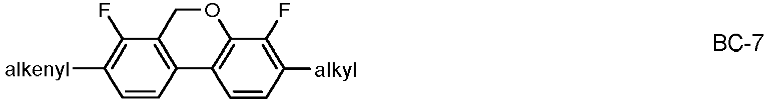 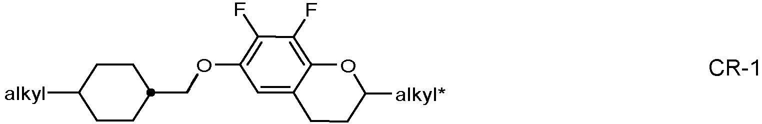 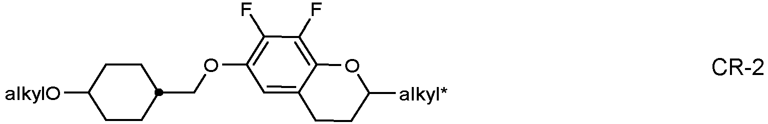 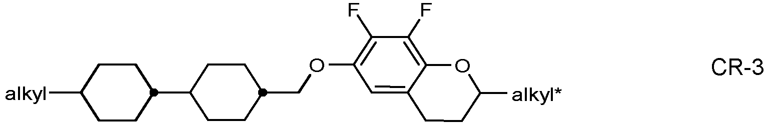 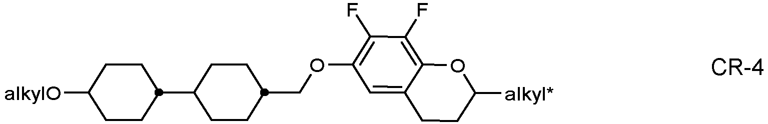 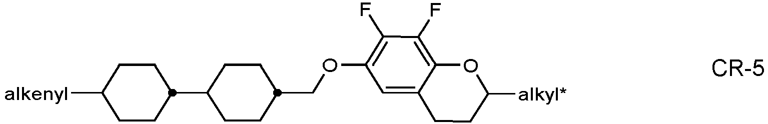 in which
   alkyl and alkyl* each, independently of one another, denote a straight-chain alkyl radical having 1 to 6 C atoms, and
   alkenyl and alkenyl* each, independently of one another, denote a straight-chain alkenyl radical having 2 to 6 C atoms.
   Very particular preference is given to mixtures comprising one, two or three compounds of the formula BC-2, BF-1 and/or BF-2.
d) Preferred mixtures comprise one or more indane compounds of the formula In, 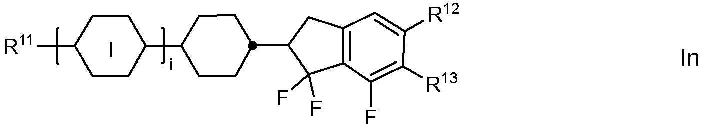 in which
   R¹¹, R¹², and R¹³ each, independently of one another, denote a straight-chain alkyl, alkoxy, alkoxyalkyl or alkenyl radical having 1 to 6 C atoms,
   R¹² and R¹³ alternatively denote halogen, preferably F, 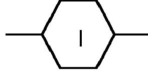 - denotes

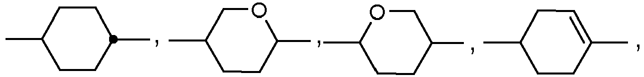

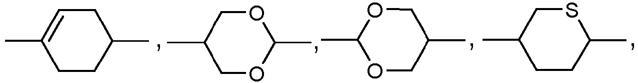

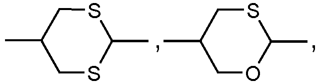

   - i: denotes 0, 1 or 2.
   Preferred compounds of the formula In are the compounds of the formulae In-1 to In-16 indicated below: 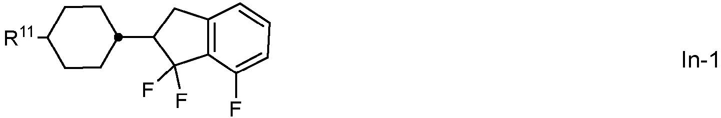 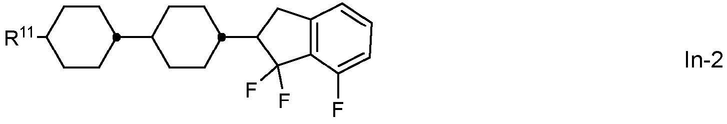 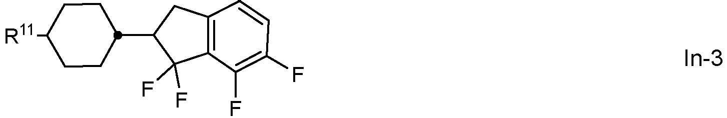 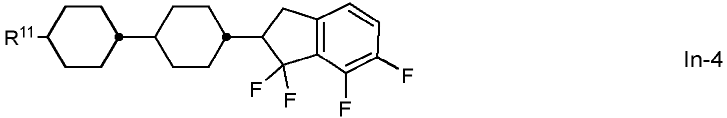 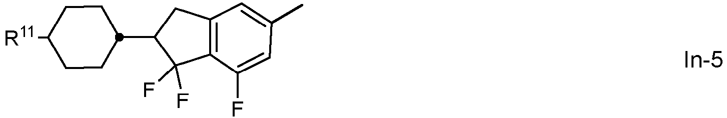 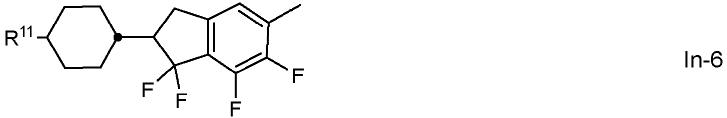 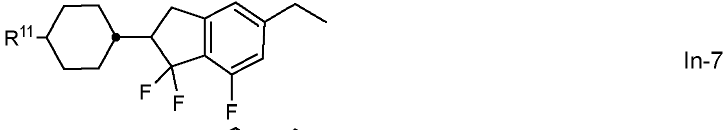 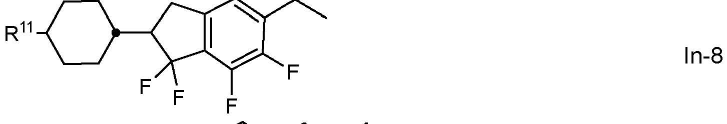 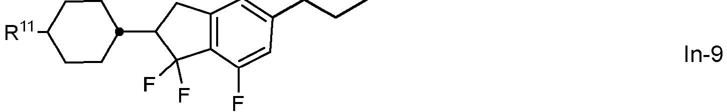 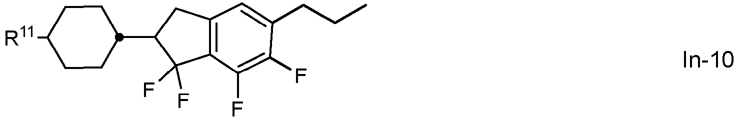 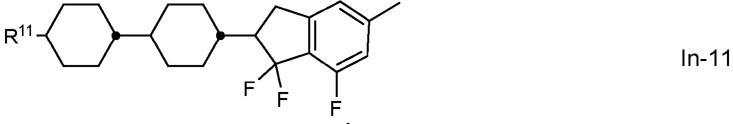 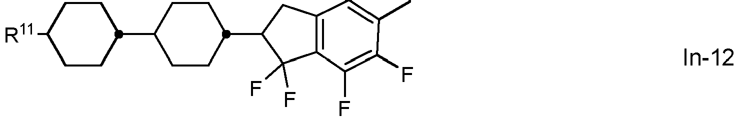 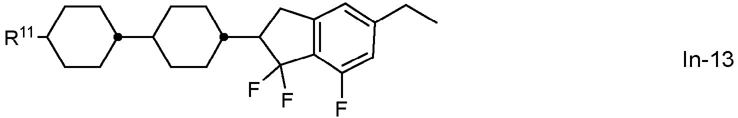 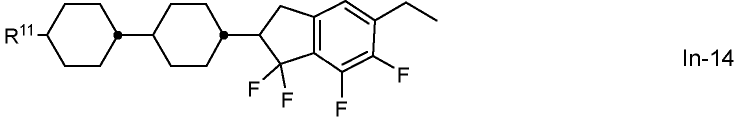 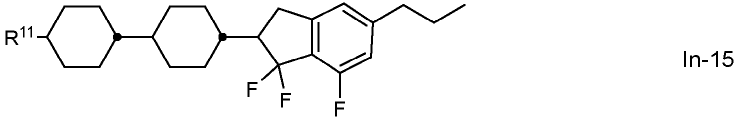 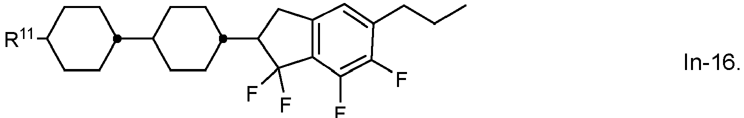 Particular preference is given to the compounds of the formulae In-1, In-2, In-3 and In-4.
e) Preferred mixtures additionally comprise one or more compounds of the formulae L-1 to L-12, 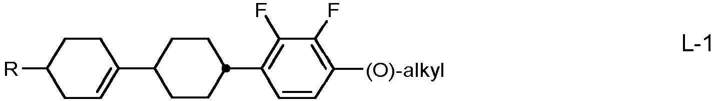 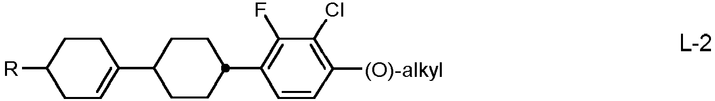 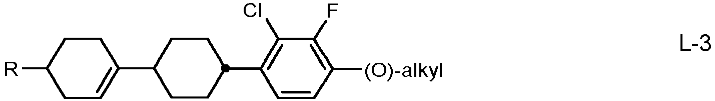 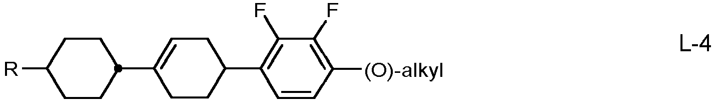 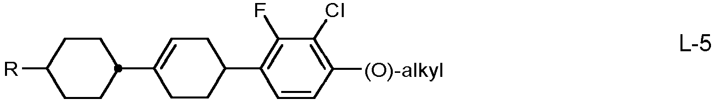 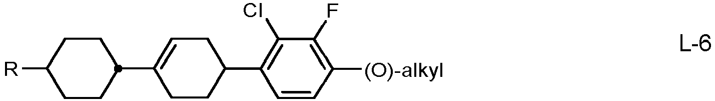 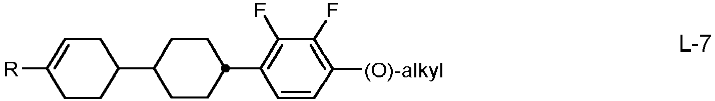 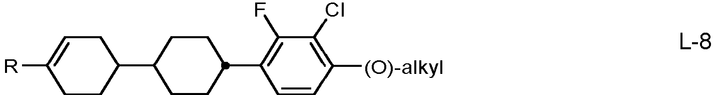 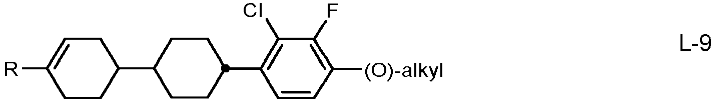 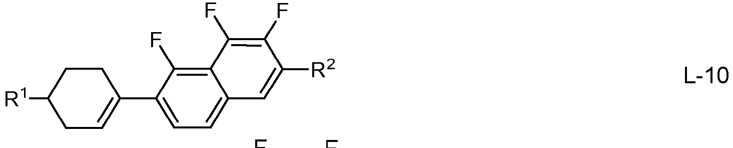 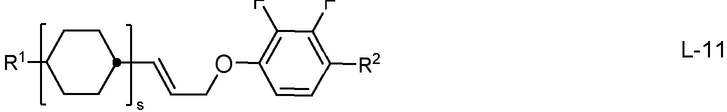 in which
   R, R¹ and R² each, independently of one another, have the meanings indicated for R^{2A} in formula IIA above, and alkyl denotes an alkyl radical having 1 to 6 C atoms. The parameter s denotes 1 or 2.
   The compounds of the formulae L-1 to L-11 are preferably employed in concentrations of 5 to 15 % by weight, in particular 5 to 12 % by weight and very particularly preferably 8 to 10 % by weight.
f) Preferred mixtures additionally comprise one or more compounds of formula IIA-Y 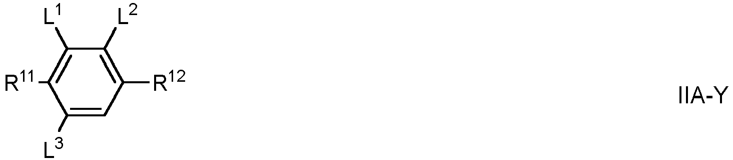 in which R¹¹ and R¹² have one of the meanings given for R^{2A} in formula IIA above, and L¹ and L², identically or differently, denote F or Cl and L³ denotes H or CH₃.

Preferred compounds of the formula IIA-Y are selected from the group consisting of the following sub-formulae 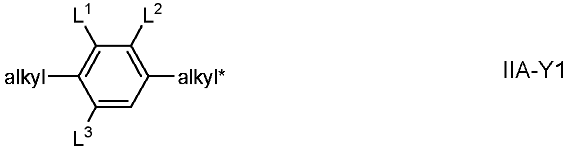 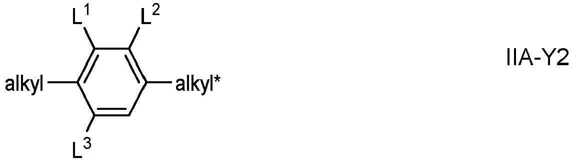 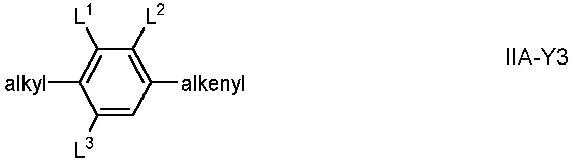 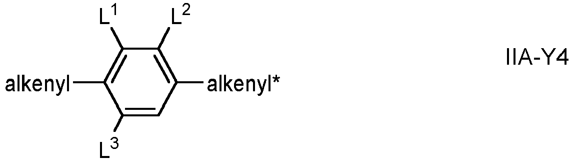 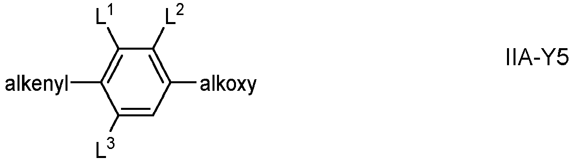 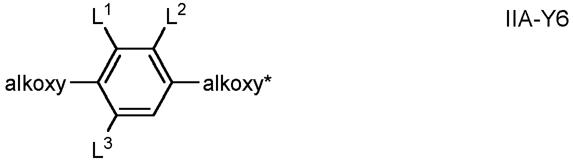 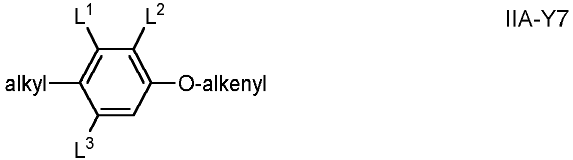 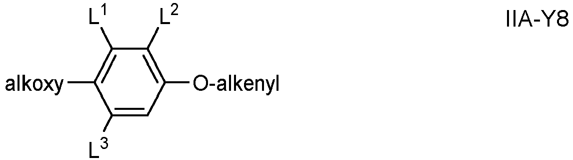 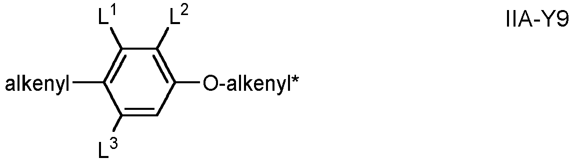 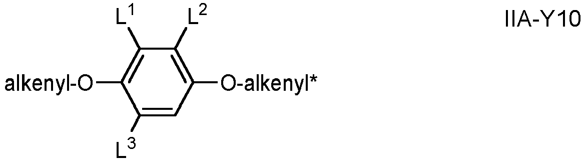 in which alkyl and alkyl* each, independently of one another, denote a straight-chain alkyl radical having 1-6 C atoms; alkoxy denotes a straight-chain alkoxy radical having 1-6 C atoms; alkenyl and alkenyl* each, independently of one another, denote a straight-chain alkenyl radical having 2-6 C atoms, and O denotes an oxygen atom or a single bond. alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Particularly preferred compounds of the formula IIA-Y are selected from the group consisting of following sub-formulae: 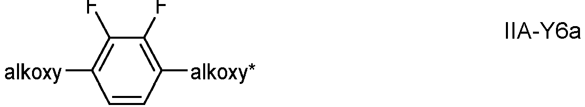 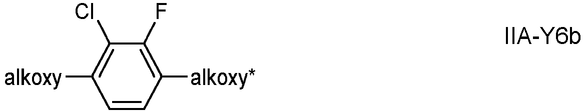 in which alkoxy and alkoxy* have the meanings defined above and preferably denote methoxy, ethoxy, n- propyloxy, n-butyloxy or n-pentyloxy.

g) The medium additionally comprises one or more compounds selected from the compounds of formulae P-1 to P-4: 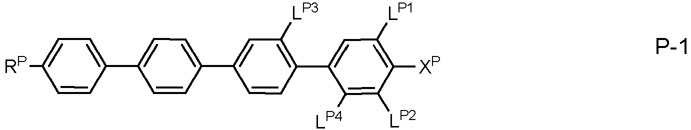 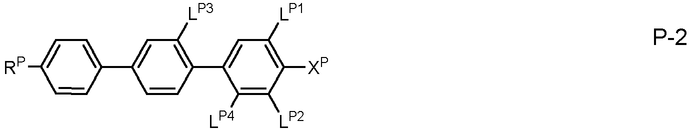 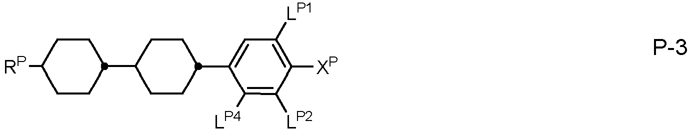 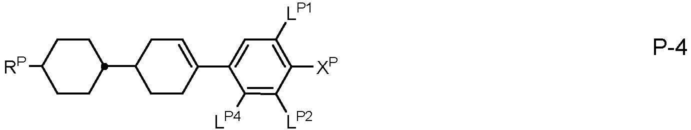 in which
- R^{P}: denotes a straight-chain alkyl or alkoxy radical having 1-6 C atoms or an alkenyl radical having 2-6 C atoms, preferably alkyl, each of which is unsubstituted, or at least monosubstituted by halogen, where one or more CH₂ groups in these radicals may be replaced by -O-, -S-, 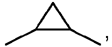 , - 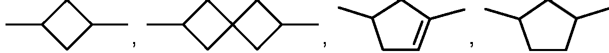 C≡C-, -CF₂O-, -OCF₂-, -OC-O- or -O-CO- in such a way that O atoms are not linked directly to one another;
- X^{P}: straight-chain alkyl having 1-6 C atoms, F, Cl, CF₃, OCF₂H, OCF₃, OCHFCF₃, OCF₂CHFCF₃, OCH=CF₂, preferably F, OCF₃ or CF₃, CH₃,
- L^{P1}, L^{P2} and L^{P3}: each independently of one another denote H or F, and
- L^{P4}: denotes H or CH₃, preferably H.

Preferred compounds of the formulae P1 to P4 are listed in the following: 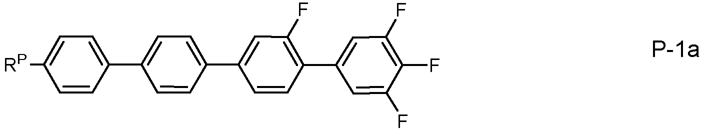 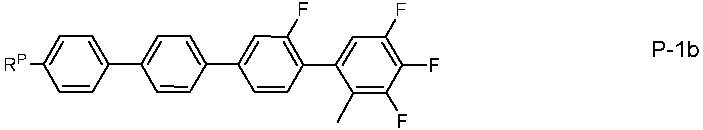 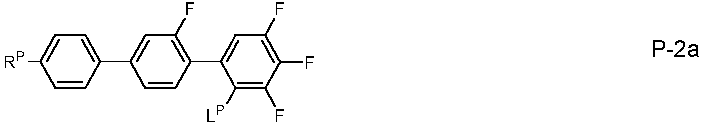 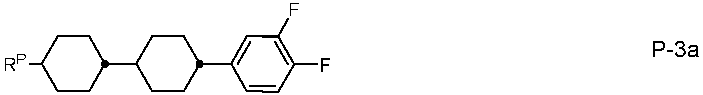 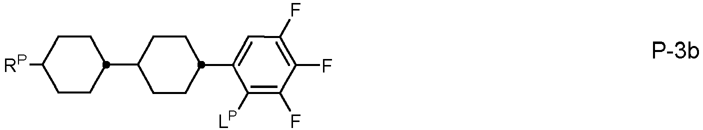 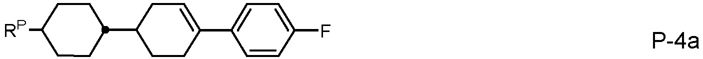 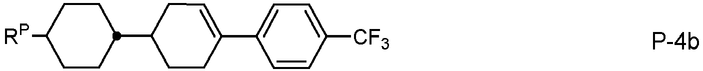 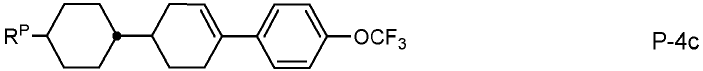 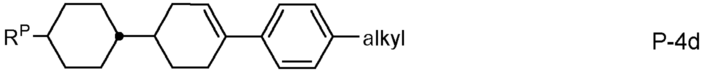 wherein
L^{P4} denotes H or CH₃;
R^{P} has the meanings given above. Preferably R^{P} denotes alkyl, cycloalkyl, cycloalklalkyl or alkenyl, in particular ethyl, propyl, butyl, pentyl, cyclopropyl, cyclopentyl, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂- and alkyl denotes a straight-chain alkyl group having 1-6 carbon atoms.

The compounds of formula P-1 have stabilizing properties for the liquid crystal medium. In a preferred embodiment the medium according to the invention comprises at least one compound of formula P-1, more preferably of formula P-1a, preferably in an amount from 0.1 to 5 % by weight, more preferably 0.4 to 2.5 % by weight.

h) The medium additionally comprises one or more compounds selected from the group consisting of the formulae PII and PIII: 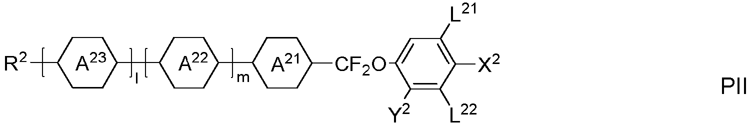 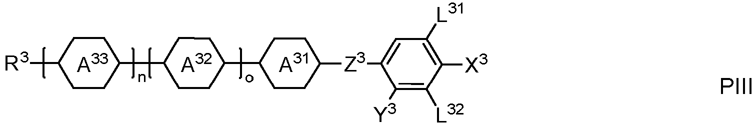 in which
- R² and R³: denote a straight-chain or branched alkyl or alkoxy radical that is unsubstituted or halogenated and has 1 to 15 C atoms, where one or more CH₂ groups in these radicals may each be replaced, independently of one another, by 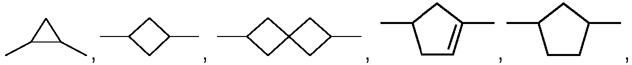 -C≡C-, -CF₂O-, -CH=CH-, -O-, -CO-O- or -O-CO- in such a way that O atoms are not linked directly to one another, identically or 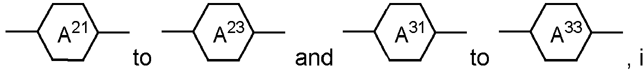 differently, denote 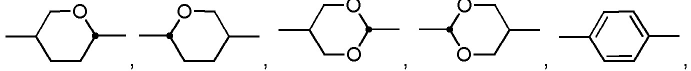 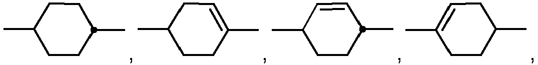 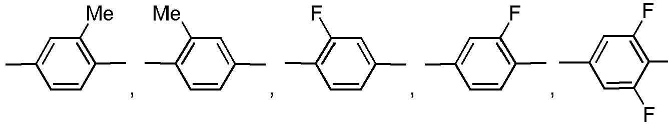 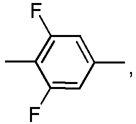
- preferably: 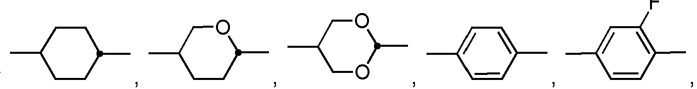 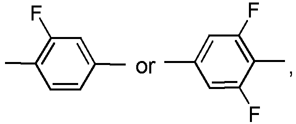
- L²¹, L²², L³¹ and L³²: identically or differently, denote H or F, preferably F,
- Y² and Y³: identically or differently, denote H or CH₃,
- X² and X³: identically or differently, denote halogen, CN, halogenated alkyl or alkoxy with 1 to 3 C-atoms or halogenated alkenyl or alkenyloxy with 2 or 3 C-atoms, preferably F, Cl, OCF₃ or CF₃, most preferably F, CF₃ or OCF₃,
- Z³: denotes -CH₂CH₂-, -CF₂CF₂-, -COO-, *trans-* -CH=CH-, *trans*-CF=CF-, *-* CH₂O- or a single bond, preferably -CH₂CH₂-, -COO-, *trans-* -CH=CH-, most preferably -COO-, and
- l, m, n and o: are, independently of each other, 0 or 1, preferably l + m is 2.

Preferred compounds of the formula PIII are of formula PIII-1 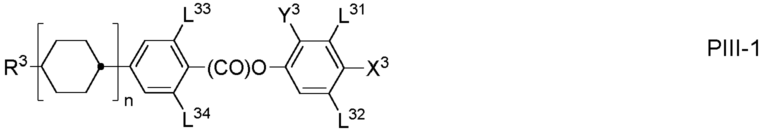 in which
- R³: denote a straight-chain or branched alkyl radical that is unsubstituted or halogenated and has 1 to 15 C atoms, where one or more CH₂ groups in these radicals may each be replaced, independently of one another, by 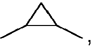
- L³¹ andL³²: 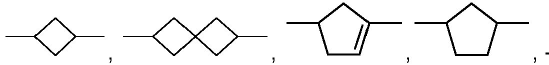 -C≡C-,-CF₂O-,-CH=CH-,-O-,-CO-O- or -O-CO- in such a way that O atoms are not linked directly to one another,identically or differently, denote H or F, preferably F,
- Y³: identically or differently, denote H or CH₃,
- X³: identically or differently, denote halogen, CN, halogenated alkyl or alkoxy with 1 to 3 C-atoms or halogenated alkenyl or alkenyloxy with 2 or 3 C-atoms, preferably F, CN, OCF₃ or CF₃, most preferably F or CN, and
- n: independently is 0 or 1, preferably n is 0.

Preferably in PIII and PIII-1 the groups independently denote one or more of:
- X³: denotes CN,
- L³¹: denotes F,
- L³²: denotes H,
- n: denotes 0,
- L³³, L³⁴: denote H, and
- Y³: denotes H.

Preferably, the liquid crystal medium according to the invention comprises one or more compounds of the formula H 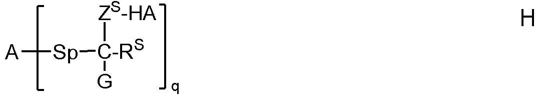 in which
- A: denotes an aliphatic, aromatic or heteroaromatic hydrocarbon group with q valencies and having 1 to 40 C atoms, preferably 6 to 30 C atoms; or a bond for q = 2;
- Sp: denotes a spacer group or a bond;
- R^{S}: denotes H, alkyl having 1 to 12 C atoms or alkenyl having 2 to 12 C atoms;
- Z^{S}: denotes -O-, -C(O)O-, -(CH₂)_{z}- or -(CH₂)_{z}O-, or a single bond; preferably - C(O)O-,
- HA: denotes 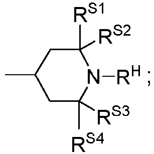
- R^{H}: denotes H, O·, CH₃, OH or OR^{S}, preferably H or O·,
- R^{S1}, R^{S2}, R^{S3} and R^{S4},: identically or differently, denote alkyl having 1 to 6 C atoms, preferably having 1 to 3 C atoms, very preferably CH₃,
- G: denotes H or R^{S} or a group Z^{S}-HA,
- z: is an integer from 1 to 6, and
- q: is 1, 2, 3 or 4, preferably 2.

In formula H, aryl preferably denotes an aromatic or heteroaromatic hydrocarbon group having 4 to 40 C atoms, comprising one, two, three or four aromatic rings including condensed rings that may be linked directly or via an alkylene linking group having 1 to 12 C atoms, in which one or more H atoms are optionally replaced with alkyl or alkoxy having 1 to 6 C atoms or alkenyl having 2 to 6 C atoms, or with CN, CF₃ or halogen, and in which one or more CH₂ groups may each, independently of one another, be replaced by -O-, -S-, -NH-, -N(C₁-C₄-alkyl)-, -CO-, -CO-O-, -O-CO-, -O-CO-O-, -CH=CH- or -C≡C- in such a way that O or S atoms are not linked directly to one another.

Preferred aliphatic groups are alkylene, cycloalkylene, more preferably -(CHR^{S5})ₛ-, wherein R^{S5} is H or alkyl with 1 to 5 C atoms, and s is an integer from 1 to 20.

Preferred aryl groups are benzene, naphthalene, anthracene, biphenyl, m-terphenyl, p-terphenyl, and (phenylalkyl)benzene in which alkyl is straight chain alkyl having 1 to 12 C atoms.

The compounds of formula H are described in EP 3354710 A1 and EP 3354709 A1.

The compounds of formula H are preferably applied in a range of 0.1 to 0.3% (by weight).

In a preferred embodiment the medium comprises one or more compounds of formula H selected from compounds of formula H-A 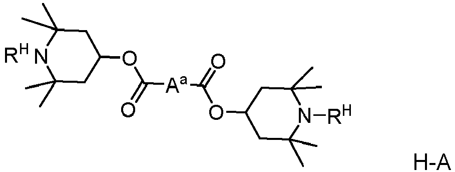 wherein
- A^{a}: denotes an alkylene group with 2 to 12 carbon atoms, wherein one or two CH₂ groups mach be replaced by 1,4-cyclohexylene, and
- R^{H}: denotes H or O·.

The group A^{a} preferably denotes 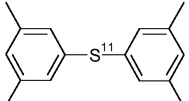 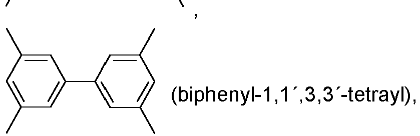 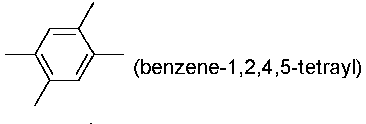 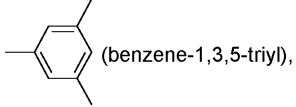 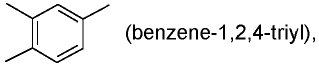 -(CH₂-)₂, -(CH₂-)₃, -(CH₂-)₄, -(CH₂-)₅, -(CH₂-)₆, -(CH₂-)₇, - (CH₂-)₈, i.e. ethane-1,2-diyl, propane-1,3-diyl, butane-1,4-diyl, pentane-1,5-diyl, hexane-1,6-diyl, heptane-1,7-diyl, octane-1,8-diyl, 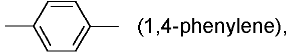 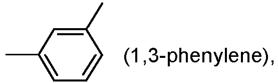 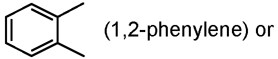 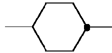 (*trans*-1,4-cyclohexylene) and/or
wherein
- S¹¹: denotes an alkylene group having 1 to 20 C atoms,

The compounds of formula H are preferably selected from the compounds of the formulae H-1, H-2 and H-3: 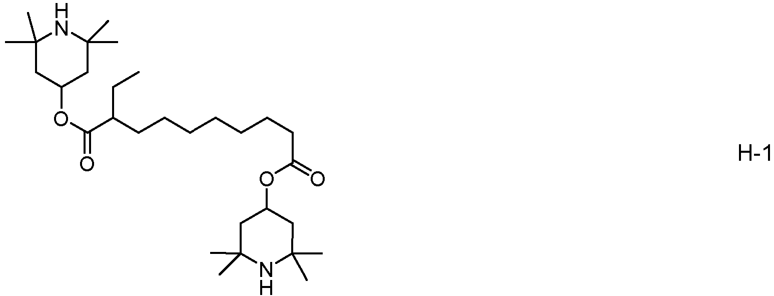 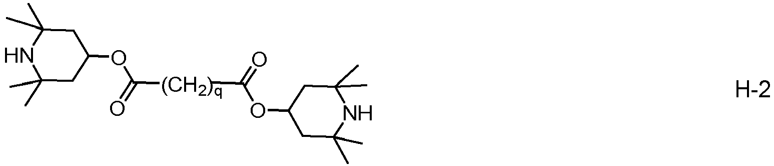 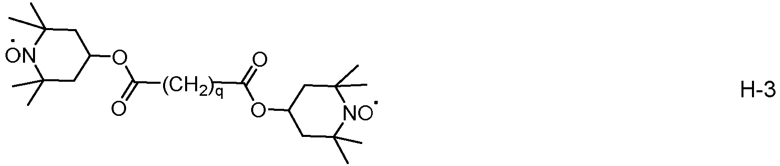 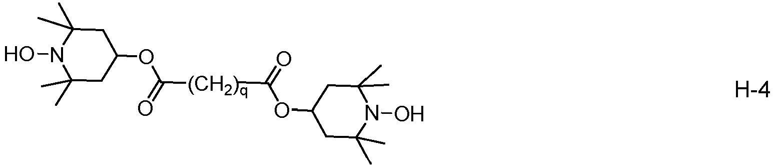 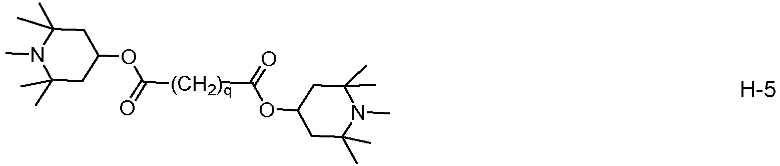 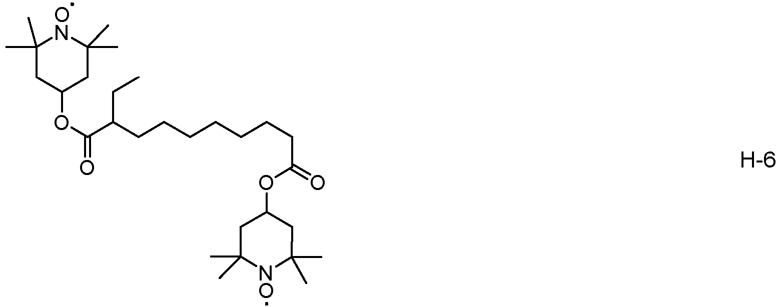 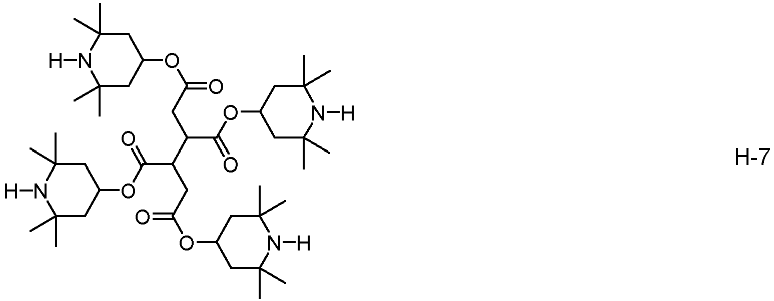 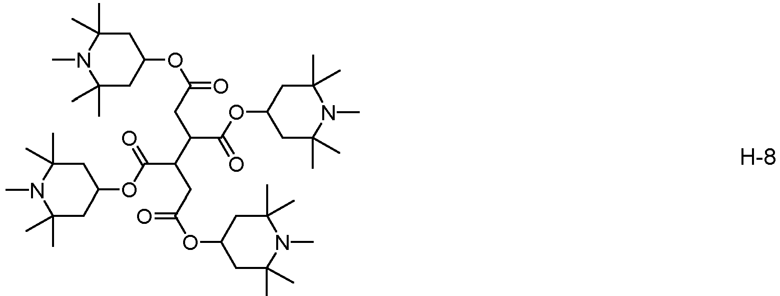 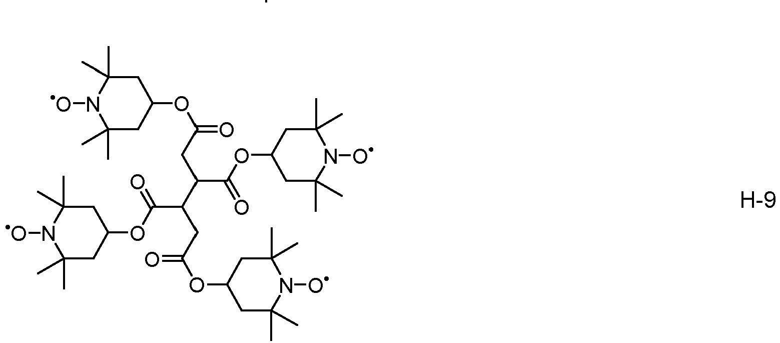 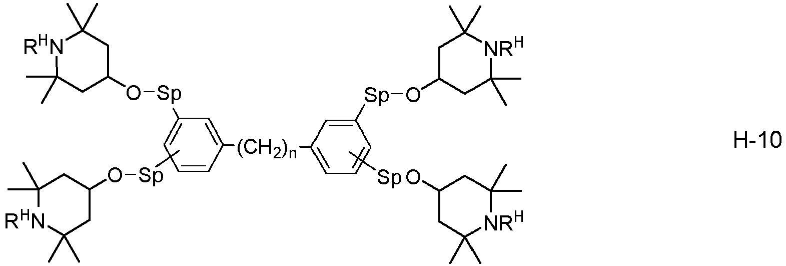 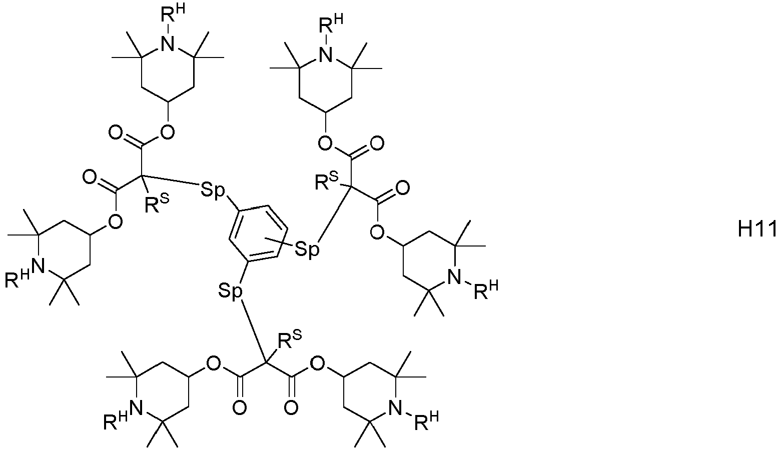 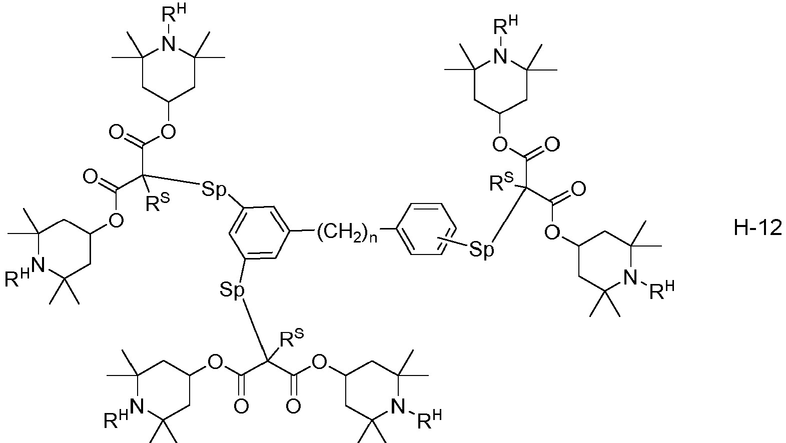 in which R^{H} has the meanings given above and preferably denote H or O·, and n is an integer from 0 to 12, preferably 5, 6, 7, 8 or 9, very preferably 7, and Sp denotes a spacer group, preferably alkylene having 1 to 12 C atoms in which one or more non-adjacent -CH₂- groups may be replaced with -O-.

Preferred compounds of formula H-10 are selected from the compounds of the formula H-10-1: 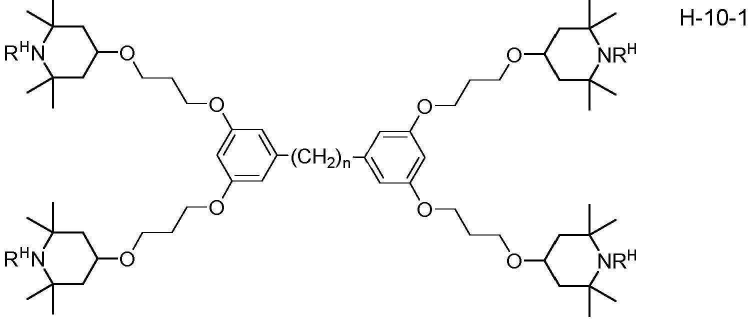 in which R^{H} has the meanings given above and preferably denotes H or O·, and n is an integer from 0 to 12, preferably 5, 6, 7, 8 or 9, very preferably 7.

Preferred compounds of formula H-11 are selected from the compounds of the formula H-11-1: 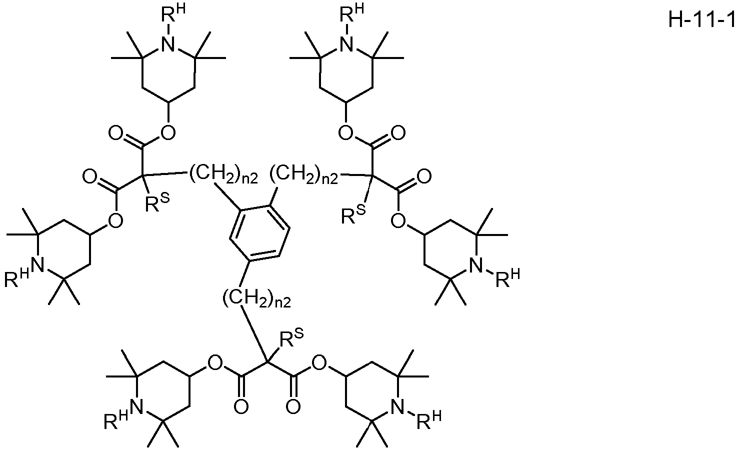 in which R^{H} has the meanings given above and preferably denotes H or O·, and n2, on each occurrence identically or differently, preferably identically, is an integer from 1 to 12, preferably 2, 3, 4, 5, or 6, very preferably 3, and R^{S} on each occurrence identically or differently, preferably identically, denotes alkyl having 1 to 6 C atoms, preferably n-butyl.

Preferred compounds of formula H-12 are selected from the compounds of the formula H-12-1: 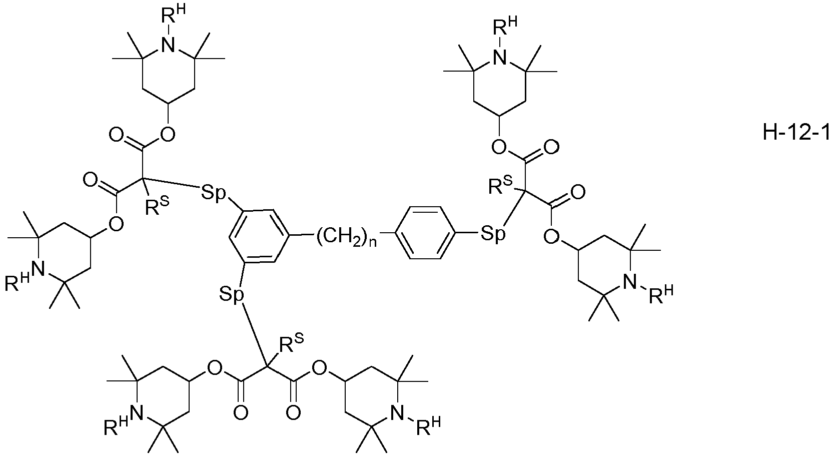
in which R^{H} has the meanings given above and preferably denotes H or O·, and
n is an integer from 0 to 12, preferably 5, 6, 7, 8 or 9, very preferably 7.

Preferred stabilizers H are the following:

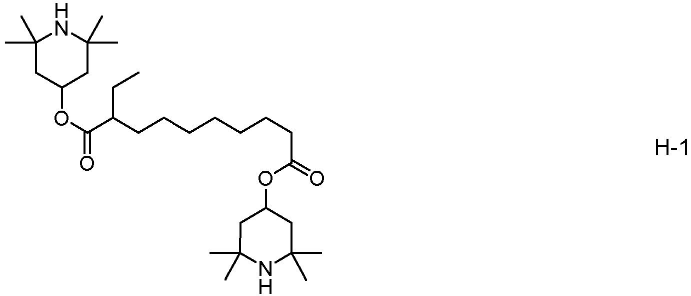

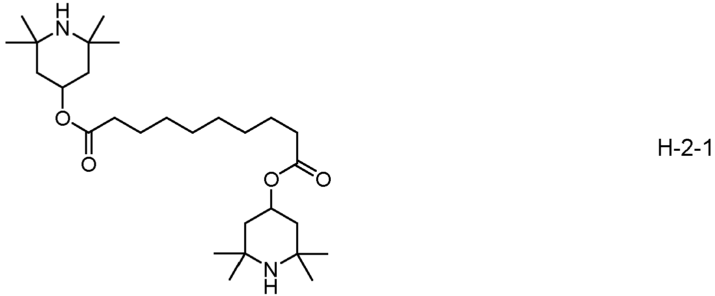

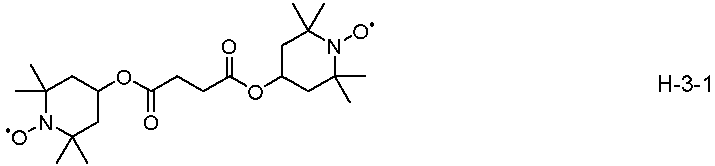

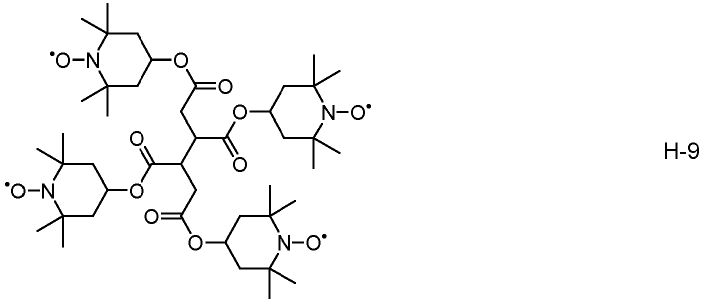

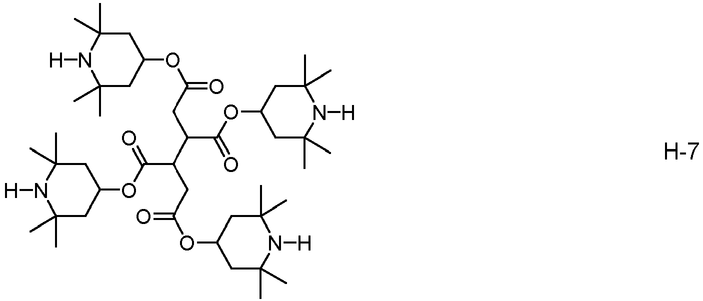

Preferably, the medium according to the invention comprises a compound selected from the group of compounds of the formulae ST-1 to ST-12: 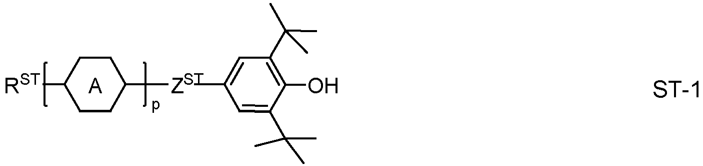 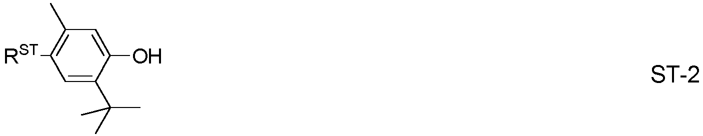 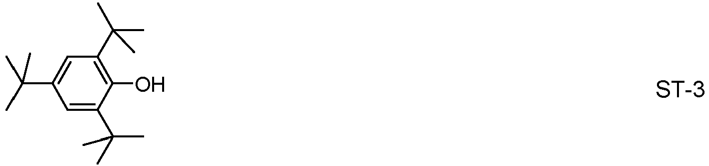 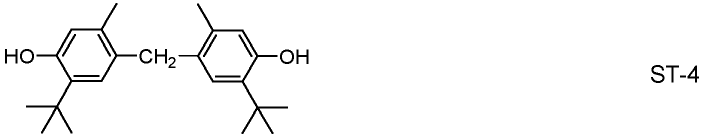 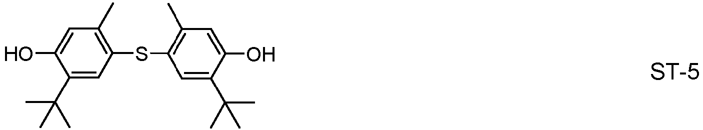 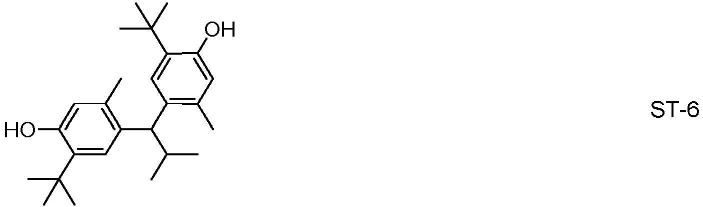 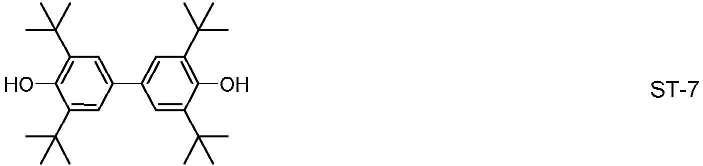 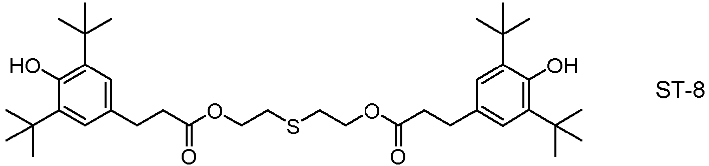 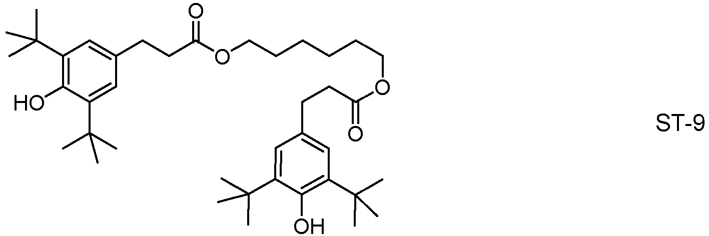 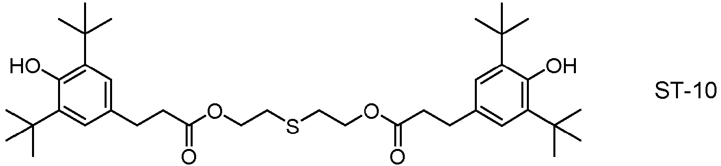 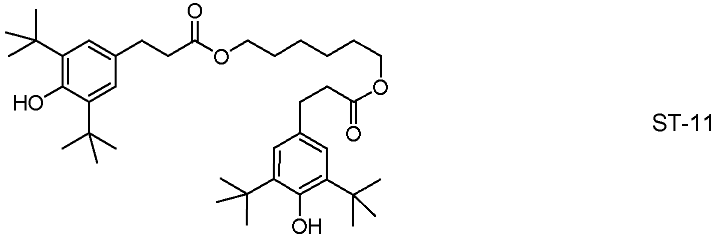 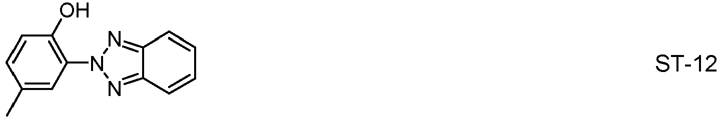 in which
- R^{ST}: denotes H, an alkyl or alkoxy radical having 1 to 15 C atoms, where, in addition, one or more CH₂ groups in these radicals may each be replaced, independently of one another by -C≡C-, -CF₂O-, -OCF₂-, -CH=CH-, 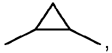 , -O-, -CO-O- 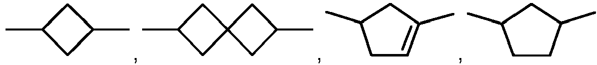 , -O-CO- in such a way that O atoms are not linked directly to one another, and in which, in addition, one or more H atoms may be replaced by halogen, preferably alkyl with 1-7 C atoms or cyclopentyl, on each occurrence, identically or differently, denotes or 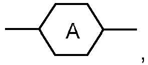 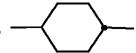 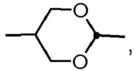
- Z^{ST}: each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C□C- or a single bond,
- L¹ and L²: each, independently of one another, denote F, Cl, CH₃, CF₃ or CHF₂,
- p: denotes 0, 1 or 2,
- q: denotes 1, 2, 3, 4, 5, 6, 7, 8, 9 or 10.

Of the compounds of the formula ST, special preference is given to the compounds of the formulae ST-1 and ST-3 and in particular to any of the following: 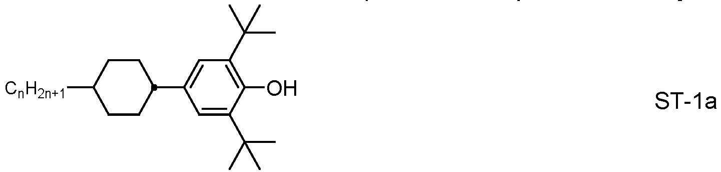 in which n = 1, 2, 3, 4, 5, 6 or 7, preferably n = 3 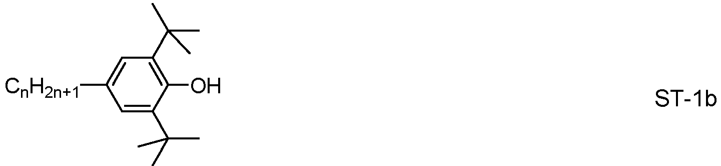 in which n = 1, 2, 3, 4, 5, 6 or 7, preferably n = 1 or 7 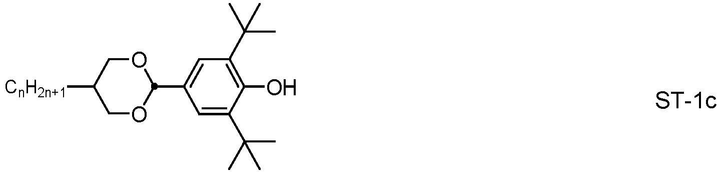 in which n = 1, 2, 3, 4, 5, 6 or 7, preferably n = 3

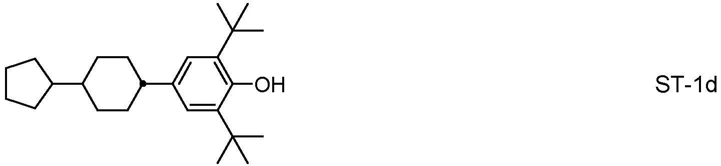

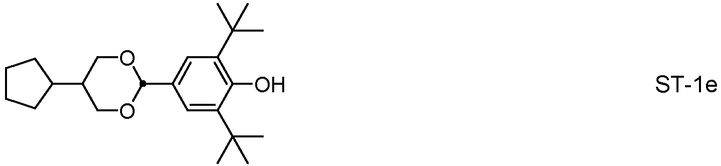

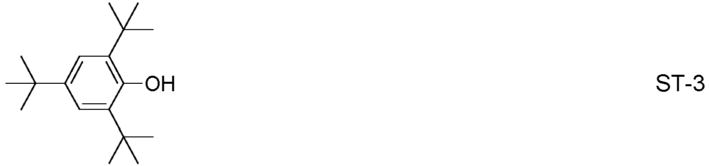

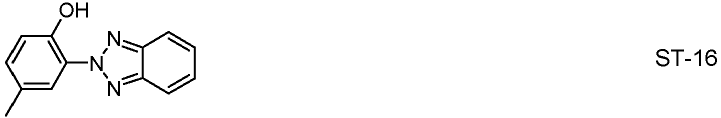

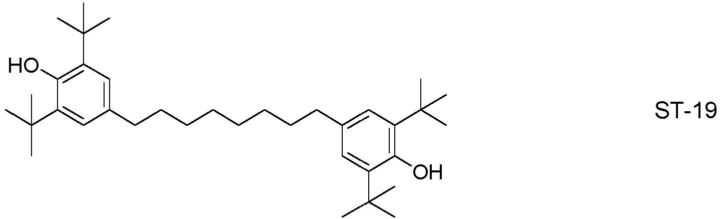

Very particularly preferred mixtures according to the invention comprise one or more stabilizers from the group of the compounds of the formulae ST-1a, ST-1b-1 and ST-1c-1:

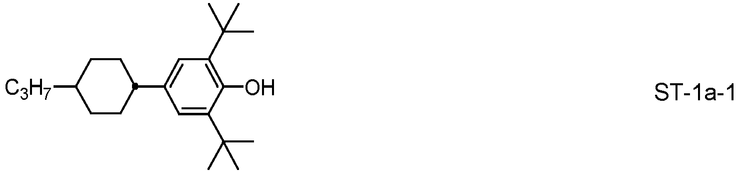

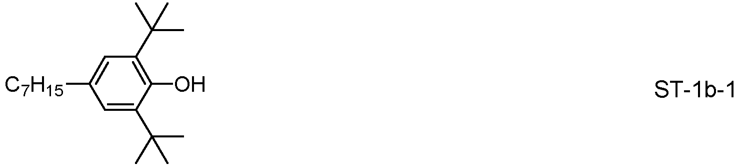

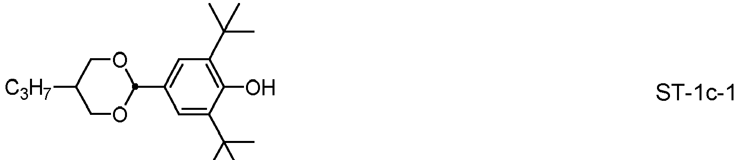

The compounds of the formulae ST-1 to ST-12 are preferably each present in the liquid-crystal mixtures according to the invention in amounts of 0.1 to 0.5%, based on the mixture.

However, the total proportion of the compounds of the formulae ST-1 to ST-12, based on the mixture according to the invention, should not exceed 2%.

The medium according to the invention preferably has negative dielectric anisotropy.

### Definitions

The term "reliability" as used herein means the quality of the performance of the display during time and with different stress loads, such as light load, temperature, humidity, voltage, and comprises display effects such as image sticking (area and line image sticking), mura, yogore etc. which are known to the skilled person in the field of LC displays. As a standard parameter for categorising the reliability usually the voltage holding ration (VHR) value is used, which is a measure for maintaining a constant electrical voltage in a test display. Among other factors, a high VHR is a prerequisite for a high reliability of the LC medium.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

Unless indicated otherwise, the term LC display is used herein when referring to an information display based on switchable liquid crystals. It includes back-lit and reflective displays, for direct or indirect view, for virtual or augmented reality systems or projection systems. The size ranges from microdisplays to large screens. The addressing can be realized in that the LC display comprises simple electrodes on a substrate, an array of thin-film-transisitors with electrodes for each pixel, or a structured silicon semiconductor as backplane, the latter of which is preferred.

As used herein, the terms "optically active" and "chiral" are synonyms for materials that are able to induce a helical pitch in a nematic host material, also referred to as "chiral dopants".

Throughout the patent application, 1,4-cyclohexylene rings and 1,4-phenylene rings are depicted as follows:

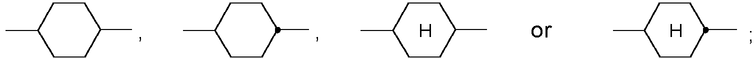

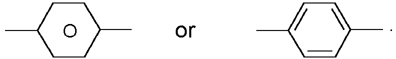

The cyclohexylene rings are trans-1,4-cyclohexylene rings.

Above and below, 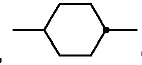 denotes a trans-1,4-cyclohexylene ring.

In a group 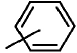 the single bond shown between the two ring atoms can be attached to any free position of the benzene ring.

Above and below "organic group" denotes a carbon or hydrocarbon group.

"Carbon group" denotes a mono- or polyvalent organic group containing at least one carbon atom, where this either contains no further atoms (such as, for example, -C≡C-) or optionally contains one or more further atoms, such as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" denotes F, Cl, Br or I, preferably F or Cl.
-CO-, -C(=O)- and -C(O)- denote a carbonyl group, i.e.

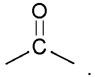

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms, preferably selected from N, O, S, Se, Te, Si and Ge.

Herein, alkyl is straight-chain or branched and has 1 to 15 C atoms, is preferably straight-chain and has, unless indicated otherwise, 1, 2, 3, 4, 5, 6 or 7 C atoms and is accordingly preferably methyl, ethyl, n-propyl, n-butyl, n-pentyl, n-hexyl or n-heptyl.

Herein, branched alkyl is alkyl having a secondary and/or tertiary, preferably secondary, carbon atom and is preferably isopropyl, s-butyl, isobutyl, isopentyl, 2-methylhexyl or 2-ethylhexyl, 2-methylpropyl, 2-pentyl, 3-pentyl, 2-methylbutyl, 3-methylbutyl.

Herein, a cyclic alkyl group is taken to mean a cycloaliphatic radical or an alkyl group in which a methylene group is replaced with a cycloaliphatic group (i.e. a cycloalkylalkyl or alkylcycloalkylalkyl), which may be saturated or partially unsaturated, and preferably denotes cyclopropyl, methylcyclopropyl, cyclobutyl, methylcyclobutyl, cyclopentyl, methylcyclopentyl, cyclopent-1-enyl, cyclopropylmethyl, cyclopropylethyl, cyclobutylmethyl, cyclobutylethyl, cyclopentylmethyl, cyclopentylethyl, cyclopent-1-enylmethyl.

Herein, an alkoxy radical is straight-chain or branched and contains 1 to 15 C atoms. It is preferably straight-chain and has, unless indicated otherwise, 1, 2, 3, 4, 5, 6 or 7 C atoms and is accordingly preferably methoxy, ethoxy, n-propoxy, n-butoxy, n-pentoxy, n-hexoxy or n-heptoxy.

Herein, an alkenyl radical is preferably an alkenyl radical having 2 to 15 C atoms, which is straight-chain or branched and contains at least one C-C double bond. It is preferably straight-chain and has 2 to 7 C atoms. Accordingly, it is preferably vinyl, prop-1- or -2-enyl, but-1-, -2- or -3-enyl, pent-1-, -2-, -3- or -4-enyl, hex-1-, -2-, -3-, - 4- or -5-enyl, hept-1-, -2-, -3-, -4-, -5- or -6-enyl. If the two C atoms of the C-C double bond are substituted, the alkenyl radical can be in the form of E and/or Z isomer (trans/cis). In general, the respective E isomers are preferred. Of the alkenyl radicals, prop-2-enyl, but-2- and -3-enyl, and pent-3- and -4-enyl are particularly preferred.

Herein, alkynyl is taken to mean an alkynyl radical having 2 to 15 C atoms, which is straight-chain or branched and contains at least one C-C triple bond. 1- and 2-propynyl and 1-, 2- and 3-butynyl are preferred.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are C₁-C₂₀ alkyl, C₂-C₂₀ alkenyl, C₂-C₂₀ alkynyl, C₃-C₂₀ allyl, C₄-C₂₀ alkyldienyl, C₄-C₂₀ polyenyl, C₆-C₂₀ cycloalkyl, C₄-C₁₅ cycloalkenyl, C₆-C₃₀ aryl, C₆-C₃₀ alkylaryl, C₆-C₃₀ arylalkyl, C₆-C₃₀ alkylaryloxy, C₆-C₃₀ arylalkyloxy, C₂-C₃₀ heteroaryl, C₂-C₃₀ heteroaryloxy.

Particular preference is given to C₁-C₁₂ alkyl, C₂-C₁₂ alkenyl, C₂-C₁₂ alkynyl, C₆-C₂₅ aryl and C₂-C₂₅ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, CI, Br, I or CN and in which one or more non-adjacent CH₂ groups may each be replaced, independently of one another, by - C(R^{x})=C(R^{x})-, -C≡-, -N(R^{x})-, -O-, -S-, -CO-, -CO-O-, -O-CO-, -O-CO-O- in such a way that O and/or S atoms are not linked directly to one another.

R^{x} preferably denotes H, F, Cl, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or Cl, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxyethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc..

Aryl and heteroaryl groups can be monocyclic or polycyclic, i.e. they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 5 to 25 ring atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, 9,10-dihydro-phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, aza-carbazole, benzocarboline, phenanthridine, phenanthroline, thieno[2,3b]thiophene, thieno[3,2b]thiophene, dithienothiophene, isobenzothiophene, dibenzothiophene, benzothiophene, benzothiadiazothiophene, or combinations of these groups.

The aryl and heteroaryl groups mentioned above and below may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent CH₂ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]pentane-1,3-diyl, bicyclo[2.2.2]octane-1,4-diyl, spiro[3.3]heptane-2,6-diyl, octahydro-4,7-methanoindane-2,5-diyl.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, hereinafter also referred to as "L", are, for example, F, CI, Br, I, -CN, -NO₂, -NCO, -NCS, -OCN, -SCN, -C(=O)N(R^{x})₂, -C(=O)Y¹, -C(=O)R^{x}, -N(R^{x})₂, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or Cl, optionally substituted silyl having 1 to 20 Si atoms, or optionally substituted aryl having 6 to 25, preferably 6 to 15, C atoms,
wherein R^{x} denotes H, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, CI, P- or P-Sp-, and Y¹ denotes halogen.

"Substituted silyl or aryl" preferably means substituted by halogen, -CN, R⁰, -OR⁰, -CO-R⁰, -CO-O-R⁰, -O-CO-R⁰ or -O-CO-O-R⁰, wherein R⁰ denotes H or alkyl with 1 to 20 C atoms.

Particularly preferred substituents L are, for example, F, Cl, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, furthermore phenyl.

The LC medium according to the invention may additionally comprise one or more further components or additives, preferably selected from the list including but not limited to co-monomers, polymerisation initiators, inhibitors, stabilizers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

The LC media according to the invention may comprise one, two or three chiral dopants, preferably one chiral dopant.

Preferred embodiments, taken alone or in combination with one another, are listed below. The medium according to the invention preferably comprises
- the compound of formula I in a concentration in the range of from 2% to 20%, preferably of 3% to 16%, very preferably from 3% to 14%;
- the compound of formula IV-2 in a concentration in the range of from 4% to 20%, preferably of 5% to 15%, very preferably from 6% to 12%;
- the compound of formula ST-1 in a concentration in the range of from 0.11% to 0.85%, preferably of 0.15% to 0.40%, very preferably from 0.16% to 0.30%, or other combinations of these boundaries;
- the compound of formula H, preferably of the formula H-A, more preferably of formula H-1 in a concentration in the range of from 0.008% to 0.08%, preferably of 0.012% to 0.06%, very preferably from 0.015% to 0.04%;
- one or more compounds of the formula IIA, IIB, IIC, IID, IIE and III in a total concentration in the range of from 68% to 88%, more preferably from 70% to 85% and very preferably from 71% to 83%;
- one, two, three or more compounds of the formula III, preferably of the formula III-1 and/or III-2, more preferably of the formula III-2, in a total concentration in the range of from 0% to 15%, more preferably from 1% to 12%, very preferably from 2% to 10% and in particular from 3% to 8%;
- one or more compounds of the formula IIA in a total concentration in the range of from 15% to 50%, more preferably from 15% to 45% and very preferably from 35% to 43% or from 20% to 25%;
- one or more compounds of the formula IIA-2 in a total concentration in the range of from 3% to 18%, more preferably from 5% to 16% and very preferably from 5% to 16%;
- one or more compounds of the formula IIA-10 in a total concentration in the range of from 10% to 32%, more preferably from 12% to 30% and very preferably from 13% to 29%;
- one or more compounds selected from thecompounds of formula IIC, more preferably of IIC-1 and IIC-2, preferably of the formula IIC-1, in a total concentration in the range of from 1% to 25%, more preferably from 4% to 25%, and very preferably from 8% to 22%;
- one or more compounds of the formula IIE, preferably of the formula IIE-1, in a total concentration in the range of from 1% to 18%, more preferably from 2% to 15%, and very preferably from 3% to 12%;
- one or more compounds of the formula IIB, preferably of the formula IIB-2 and/or IIB-10, in a total concentration in the range of from 7% to 30%, more preferably from 8% to 27% and very preferably from 9% to 26%;
- one or more compounds of the formula IIB-2 in a total concentration in the range of from 7% to 30%, more preferably from 8% to 27% and very preferably from 9% to 26%;
- one or more compounds of formula IIA and one or more compounds of formula IIB, preferably selected from the formulae IIA,-2, IIA-10, IIB-2 and IIB-10, preferably in a total concentration in the range of from 44% to 70%, more preferably from 45% to 68%, and very preferably from 40% to 67%;
- one or more compounds of the formula IV-1, preferably the compound IV-1-3, in a total concentration in the range of from 1% to 15%, more preferably from 2% to 12%, and very preferably from 5% to 12%;
- one or more compounds of the formula IV-3, preferably of the formula IV-3-2 and/or IV-3-5 in a total concentration in the range of from 1% to 25%, more preferably from 2% to 20%, and very preferably from 3% to 16%;
- two or more compounds of the formula I and formula IV in a total concentration in the range of from 18% to 30%, more preferably of 19% to 25%, and very preferably of 20% to 24%;
- two or more compounds of the formula I and the compound of the formula IV and the compounds of the formula V in a total concentration in the range of from 20% to 30%, more preferably from 20% to 28%, very preferably from 20% to 27%, and in particular from 21% to 27%;

Particularly preferred mixture concepts are indicated below: (the acronyms used are explained in Tables A-D. n and m here each, independently of one another, denote 1-6).

The mixtures according to the invention preferably comprise
- PYP-n-m, in particular PYP-2-3 and/or PYP-2-4,
   preferably in concentrations > 5%, in particular 8-30%, based on the mixture as a whole,
   and/or
- CPY-n-Om, in particular CPY-2-O2, CPY-3-O2 and/or CPY-5-O2, preferably in concentrations > 5%, in particular 10-30%, based on the mixture as a whole,
   and/or
- B-nO-Om and/or B(S)-nO-Om, preferably in concentrations of 1-15%,
   and/or
- CY-n-Om, preferably CY-3-O2, CY-3-O4, CY-5-O2 and/or CY-5-O4, preferably in concentrations > 5%, in particular 15-50%, based on the mixture as a whole,
   and/or
- CCY-n-Om, preferably CCY-4-O2, CCY-3-O2, CCY-3-O3, CCY-3-O1 and/or CCY-5-O2, preferably in concentrations > 5%, in particular 10-30%, based on the mixture as a whole,
   and/or
- CLY-n-Om, preferably CLY-2-O4, CLY-3-O2 and/or CLY-3-O3, preferably in concentrations > 5%, in particular 10-30%, based on the mixture as a whole,
   and/or
- LY-n-Om, preferably LY-3-O2, preferably in concentrations > 5%, in particular 10-30%, based on the mixture as a whole,
   and/or
- CCOY-n-Om, preferably CCOY-3-O2, preferably in concentrations > 5%, in particular 10-30%, based on the mixture as a whole,
   and/or
- CLOY-n-Om, preferably CLOY-3-O2, preferably in concentrations > 5%, in particular 10-30%, based on the mixture as a whole.

It is advantageous for the LC medium according to the invention to preferably have a nematic phase from ≤ -20°C to ≥ 90°C, particularly preferably from ≤ -30°C to ≥ 100°C, very particularly preferably from ≤ -40°C to ≥ 105°C.

In a preferred embodiment, the medium according to the invention has a clearing temperature (clearing point) of 90°C or more, more preferably of 100°C or more, and in particular of 105°C more.

Herein, the expression "to have a nematic phase" at a given temperature means that no smectic phase and no crystallisation is observed at low temperatures and on the other hand that clearing (phase transition to the isotropic phase) does not occur on heating of a nematic phase at a given temperature. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The liquid-crystal mixture preferably has a nematic phase range of at least 60 K and a flow viscosity v₂₀ of at most 30 mm² · s⁻¹ at 20°C.

The mixture is nematic at a temperature of -20°C or less, preferably at -30°C or less, very preferably at -40°C or less.

The medium according to the invention has a birefringence in the range of from 0.085 to 0.170, preferably from 0.13 to 0.16, in particular from 0.14 to 0.16.

In a preferred embodiment, the medium has a birefringence in the range of from 0.1480 to 0.155, preferably from 0.147 to 0.153, in particular from 0.158 to 0.152.

In a preferred embodiment, the medium according to the invention has a dielectric anisotropy Δε of -2.5 to -6.0, preferably of -2.8 to -4.7, in particular -3.5 to -4.5.

In a very preferred embodiment, the liquid-crystal mixture according to the invention has a dielectric anisotropy Δε of -3.8 to -4.2.

The rotational viscosity γ₁ at 20°C is preferably in the range of from 90 to 300 mPas, more preferably from 100 to 290 mPa s.

The medium according to the invention has an elastic constant K₁ in the range of from 16 to 20 pN.

In a preferred embodiment, the medium according to the invention has a ratio of the rotational viscosity to the splay elastic constant γ₁ / K₁ of 15 mPa·s pN⁻¹ or less.

The liquid-crystal media according to the invention have relatively low values for the threshold voltage (V₀). They are preferably in the range from 1.7 V to 3.0 V, particularly preferably ≤ 2.6 V and very particularly preferably ≤ 2.4 V.

For the present invention, the term "threshold voltage" relates to the capacitive threshold (V₀), also called the Freedericks threshold, unless explicitly indicated otherwise.

In addition, the liquid-crystal media according to the invention have high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10 % of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The mixtures according to the invention are suitable for all VA-TFT applications, such as, for example, VAN, MVA, (S)-PVA, ASV, PSA (polymer sustained VA) and PS-VA (polymer stabilized VA). They are furthermore suitable for IPS (in-plane switching) and FFS (fringe field switching) applications having negative Δε.

The mixture are also particularly suitable for VA-TFT application of the LCoS type, more preferably LCoS microdisplays. LCoS microdisplays are reflective displays which typically contain a liquid-crystal layer having a nematic structure between a silicon backplane and a cover glass. The silicon backplane is an array of pixels, each of which has a mirrored surface which at the same time acts as electrical conductor. Each pixel comprises a stationary mirror covered by an active liquid-crystal layer having a twisted nematic alignment which can be switched between homeotropic and homogeneous alignment by application of a voltage. LCoS microdisplays are small, with a diagonal of typically less than 1.0", but enable high resolutions nevertheless.

Owing to the small pixel size, LCoS displays also have a very small cell thickness, which is typically about 1 micron. The liquid-crystalline phases used in these displays therefore have to have, in particular, high values for the optical anisotropy Δ n, in contrast to conventional reflective-type LC displays, which usually require LC phases of low Δn.

In an preferred embodiment, the LCoS panel according to the invention comprises comprises inorganic alignment layers, more preferably vertical alignment layers for vertical alignment of the liquid cryst medium. Most preferred are SiOₓ alignment layers. Such inorganic alignment layers are especially suitable for LCoS panels.

It goes without saying for the person skilled in the art that the VA, IPS or FFS mixture according to the invention may also comprise compounds in which, for example, H, N, O, Cl and F have been replaced by the corresponding isotopes.

The compounds according to the present invention can be synthesized by or in analogy to known methods described in the literature (for example in the standard works such as Houben-Weyl, Methoden der Organischen Chemie [Methods of Organic Chemistry], Georg-Thieme-Verlag, Stuttgart), under reaction conditions which are known and suitable for said reactions. Use may also be made here of variants which are known per se, but are not mentioned here. In particular, they can be prepared as described in or in analogy to the following reaction schemes. Further methods for preparing the inventive compounds can be taken from the examples.

Other mesogenic compounds which are not explicitly mentioned above can optionally and advantageously also be used in the media in accordance with the present invention. Such compounds are known to the person skilled in the art.

For the present invention and in the following examples, the structures of the liquid-crystal compounds are indicated by means of acronyms, with the transformation into chemical formulae taking place in accordance with Tables A to C below. All radicals CₘH₂ₘ₊₁, CₙH₂ₙ₊₁, and CₗH₂ₗ₊₁ or CₘH₂ₘ₋₁, CₙH₂ₙ₋₁ and CₗH₂ₗ₋₁ are straight-chain alkyl radicals or alkylene radicals, in each case having n, m and I C atoms respectively. Preferably n, m and l are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 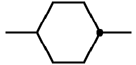 | | |
| **D** | 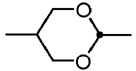 | **DI** | 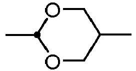 |
| **A** | 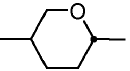 | **Al** | 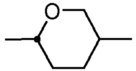 |
| **P** | 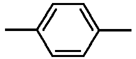 | | |
| **G** | 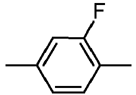 | **GI** | 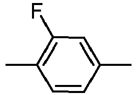 |
| **U** | 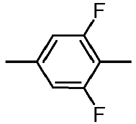 | **UI** | 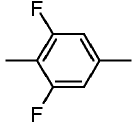 |
| **Y** | 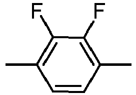 | | |
| **P(F, CI)Y** | 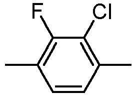 | **P(CI,F)Y** | 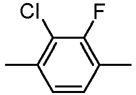 |
| **np** | 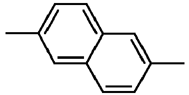 | | |
| **n3f** | 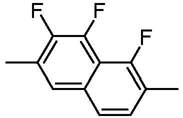 | **nN3fl** | 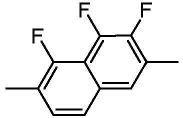 |
| th | 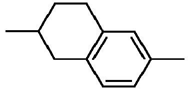 | **thI** | 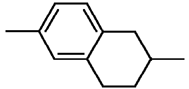 |
| **tH2f** | 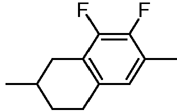 | tH2fl | 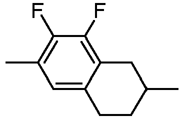 |
| o2f | 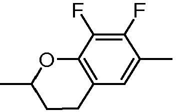 | o2fl | 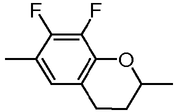 |
| dh | 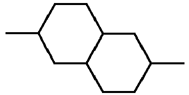 | | |
| B | 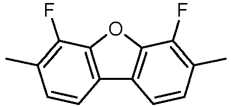 | B(S) | 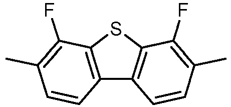 |
| **O** | 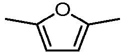 | S | 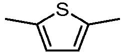 |
| K | 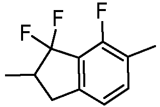 | **KI** | 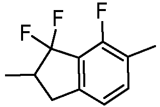 |
| L | 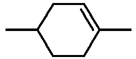 | LI | 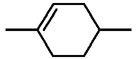 |
| F | 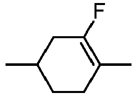 | FI | 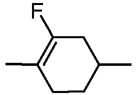 |
| Bh | 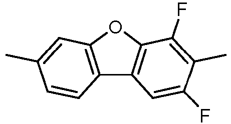 | Bh(S) | 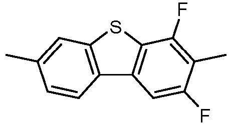 |
| **Bf** | 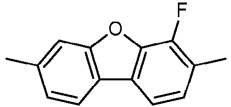 | **Bf(S)** | 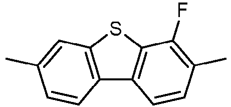 |
| **Bfi** | 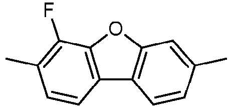 | **Bfi(S)** | 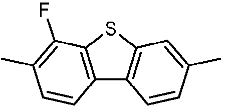 |

**Table B: Bridging units**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Table C: End groups**

| **On the left individually or in combination** | | **On the right individually or in combination** | |
|---|---|---|---|
| **-n-** | CₙH₂ₙ₊₁- | **-n** | -CₙH₂ₙ₊₁ |
| **-nO-** | CₙH₂ₙ₊₁-O- | **-On** | -O- CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | CI- | **-CL** | -CI |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |
| **-(cn)-** | 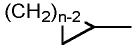 | **-(cn)** | 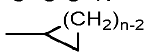 |
| **-(cn)m-** | 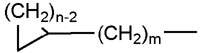 | **-m(cn)** | 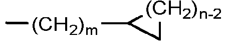 |
| **-(c5en)-** | 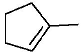 | **-(c5en)** | 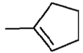 |
| | | | |

| **On the left only in combination** | | **On the right only in combination** | |
|---|---|---|---|
| **-...n...-** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m are each integers, and the three dots "..." are placeholders for other abbreviations from this table.

Apart from the compounds of formula IV-2, I and ST-1 the mixtures according to the invention optionally comprise one or more compounds of the compounds listed in Table D.

The following abbreviations are used:
(n, m, k and l are, independently of one another, each an integer, preferably 1 to 9 preferably 1 to 7, k and l possibly may be also 0 and preferably are 0 to 4, more preferably 0 or 2 and most preferably 2, n preferably is 1, 2, 3, 4 or 5, in the combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".)

**Table D**

| The following illustrative structures are examples as well as compounds, which are preferably additionally used in the media: |
|---|
| 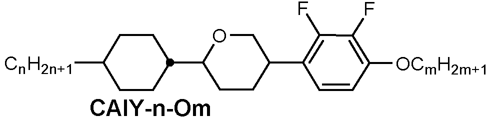 |
| 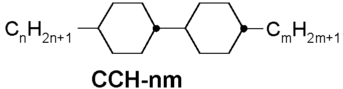 |
| 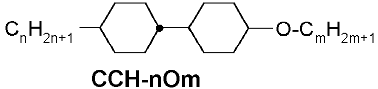 |
| 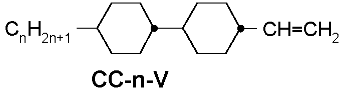 |
| 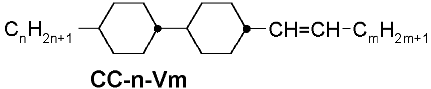 |
| 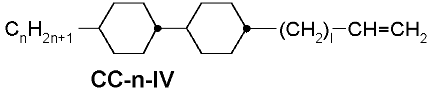 |
| 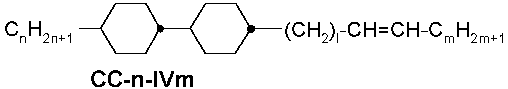 |
| 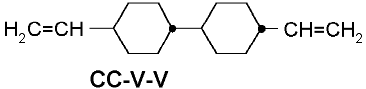 |
| 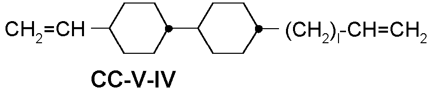 |
| 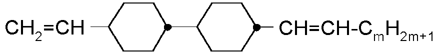 |
| 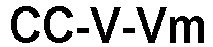 |
| 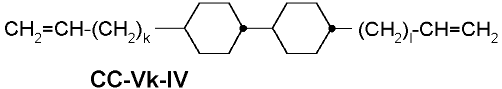 |
| 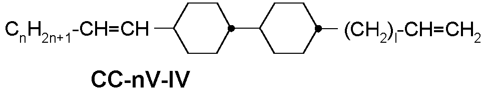 |
| 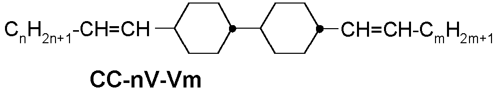 |
| 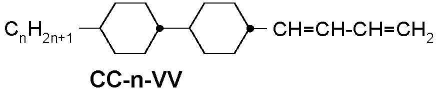 |
| 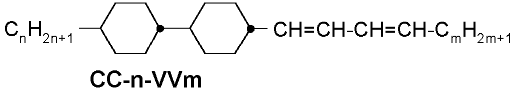 |
| 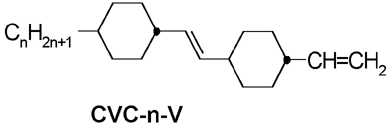 |
| 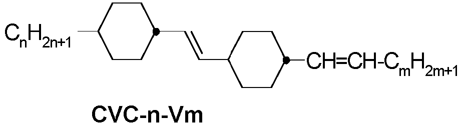 |
| 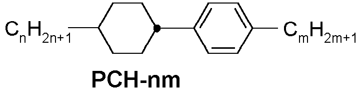 |
| 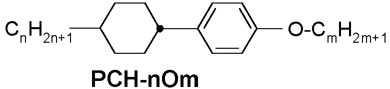 |
| 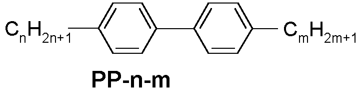 |
| 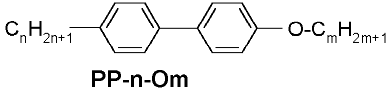 |
| 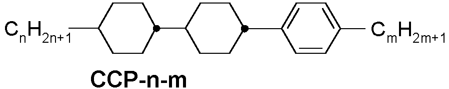 |
| 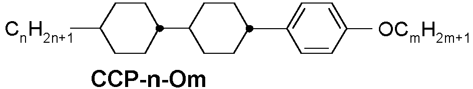 |
| 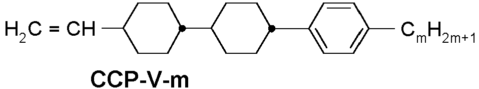 |
| 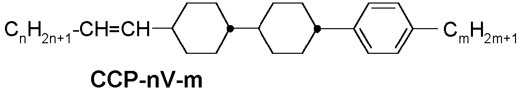 |
| 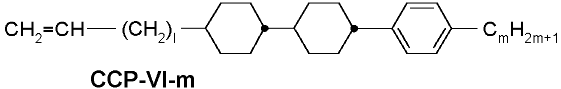 |
| 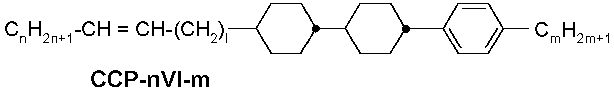 |
| 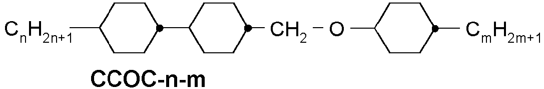 |
| 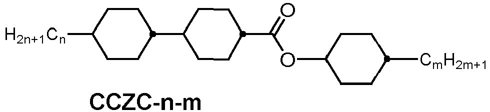 |
| 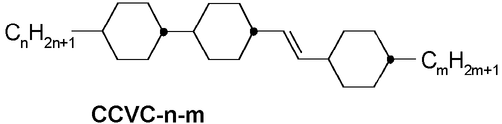 |
| 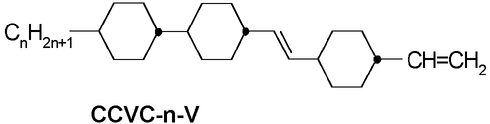 |
| 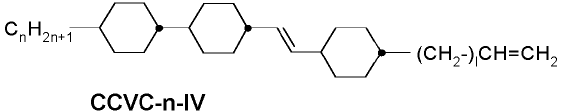 |
| 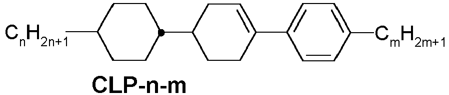 |
| 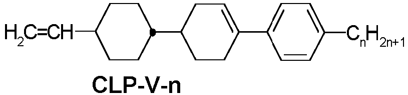 |
| 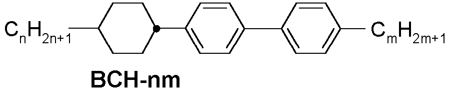 |
| 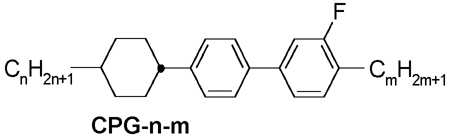 |
| 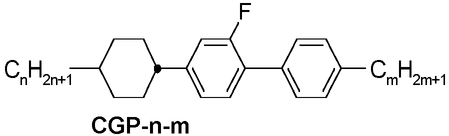 |
| 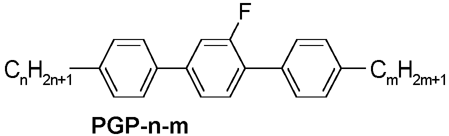 |
| 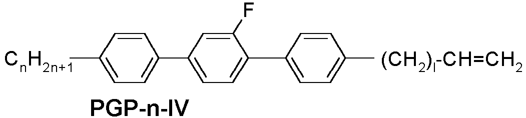 |
| 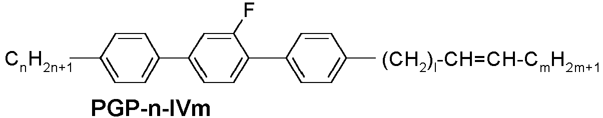 |
| 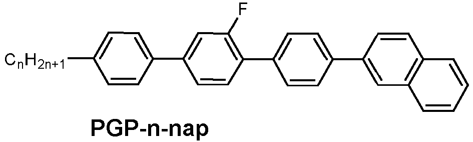 |
| 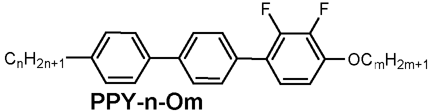 |
| 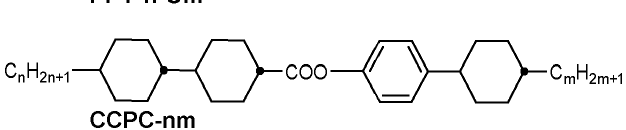 |
| 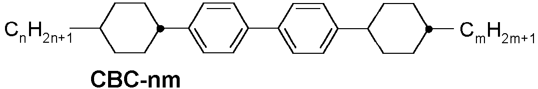 |
| 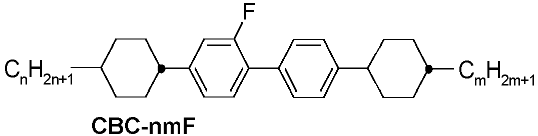 |
| 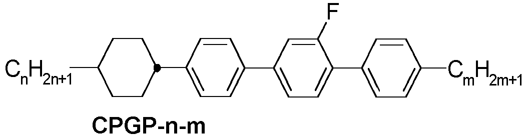 |
| 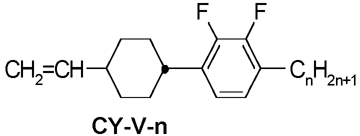 |
| 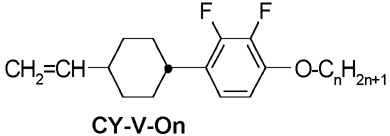 |
| 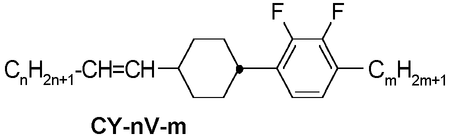 |
| 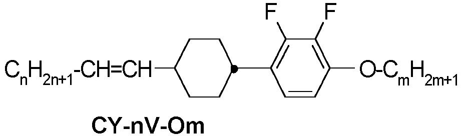 |
| 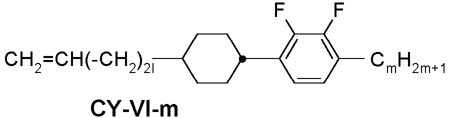 |
| 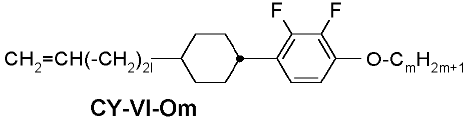 |
| 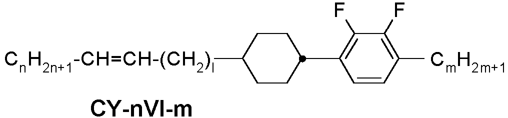 |
| 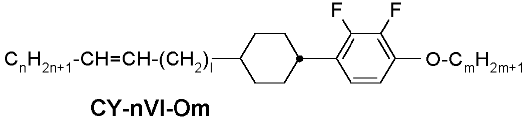 |
| 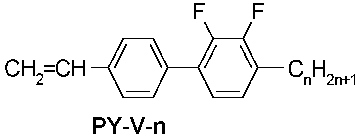 |
| 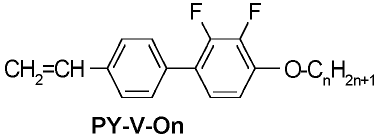 |
| 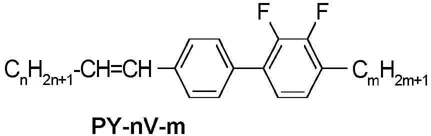 |
| 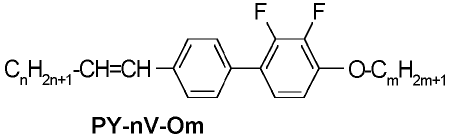 |
| 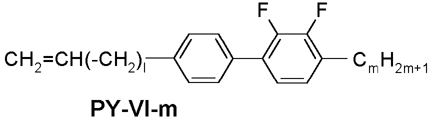 |
| 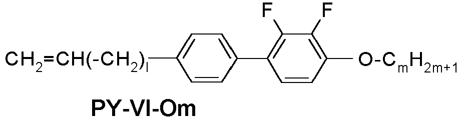 |
| 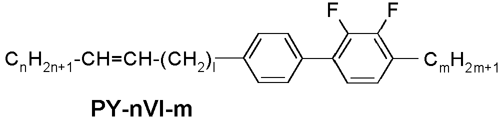 |
| 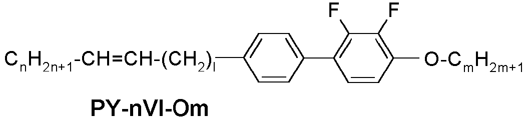 |
| 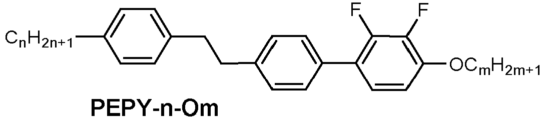 |
| 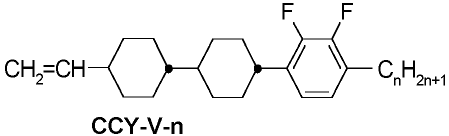 |
| 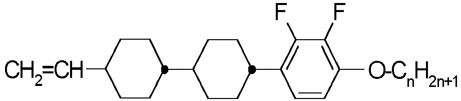 |
| 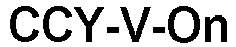 |
| 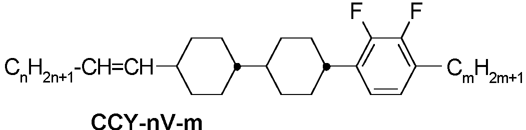 |
| 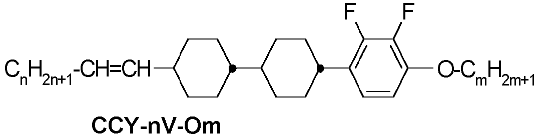 |
| 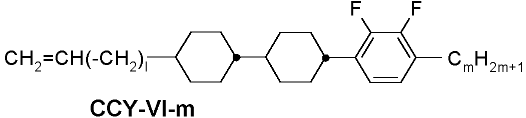 |
| 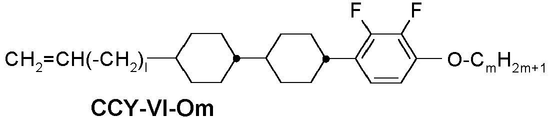 |
| 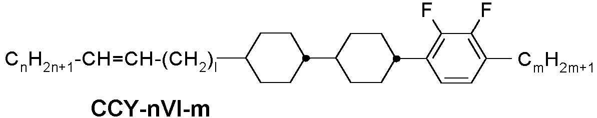 |
| 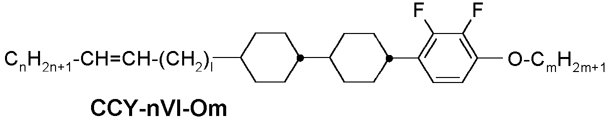 |
| 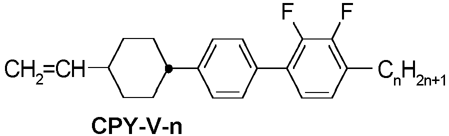 |
| 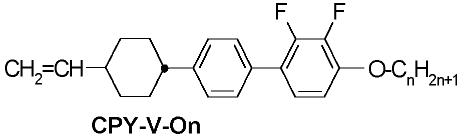 |
| 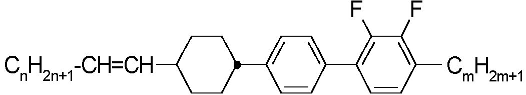 |
| 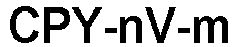 |
| 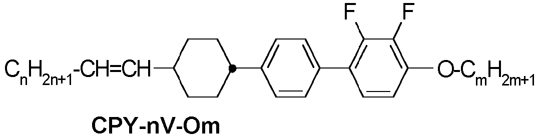 |
| 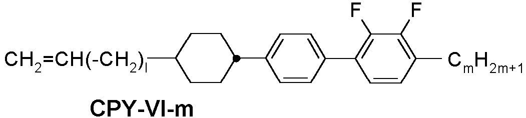 |
| 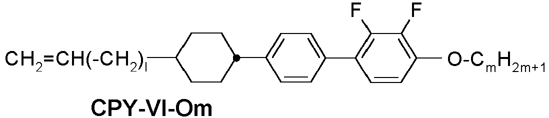 |
| 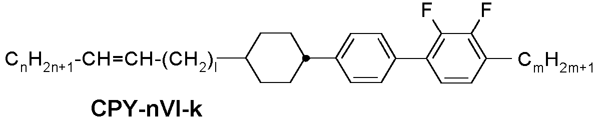 |
| 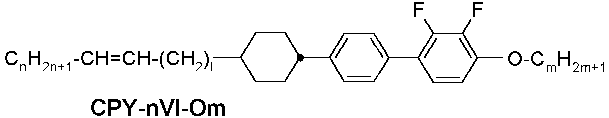 |
| 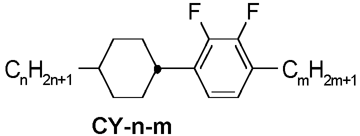 |
| 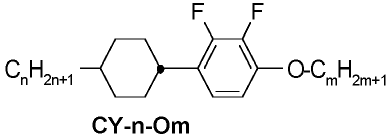 |
| 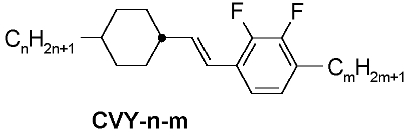 |
| 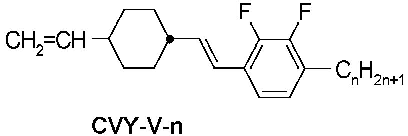 |
| 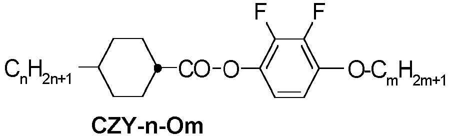 |
| 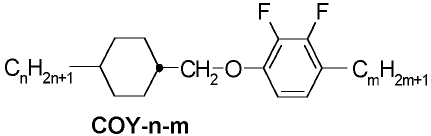 |
| 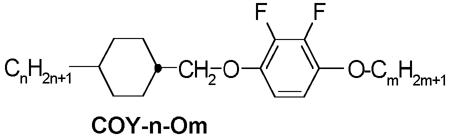 |
| 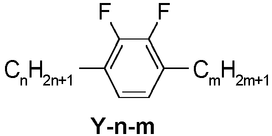 |
| 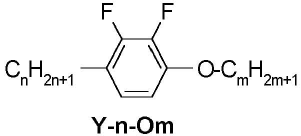 |
| 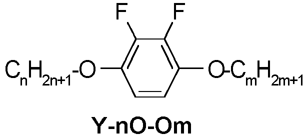 |
| 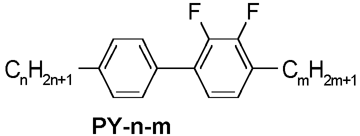 |
| 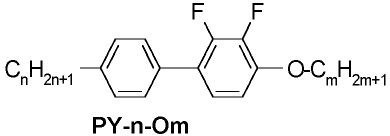 |
| 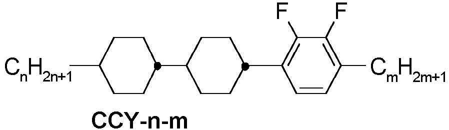 |
| 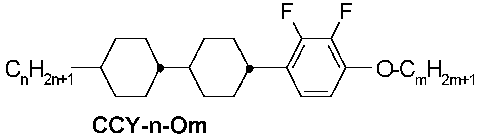 |
| 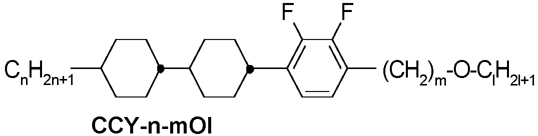 |
| 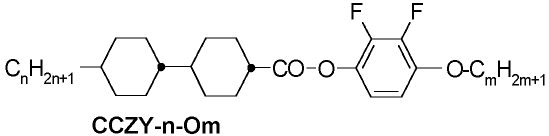 |
| 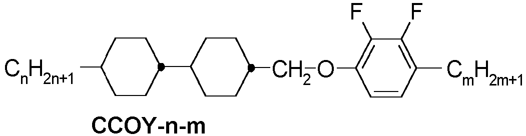 |
| 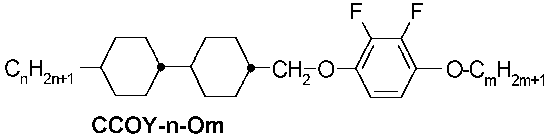 |
| 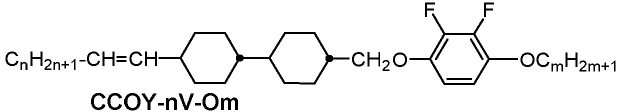 |
| 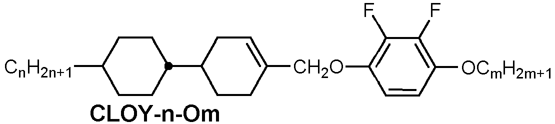 |
| 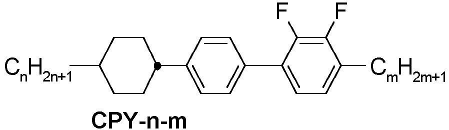 |
| 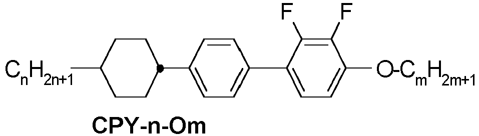 |
| 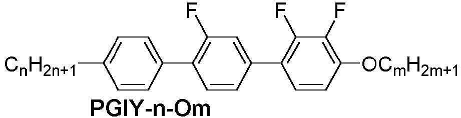 |
| 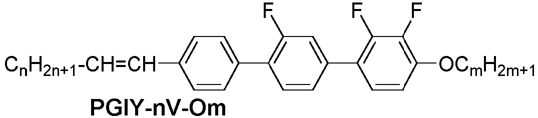 |
| 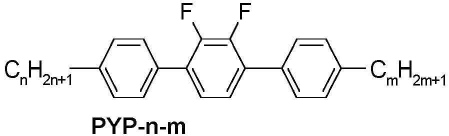 |
| 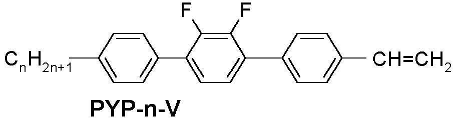 |
| 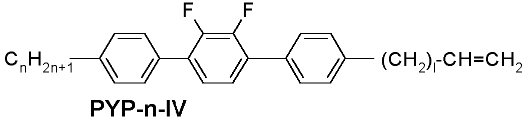 |
| 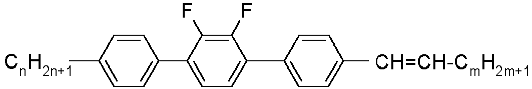 |
| 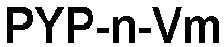 |
| 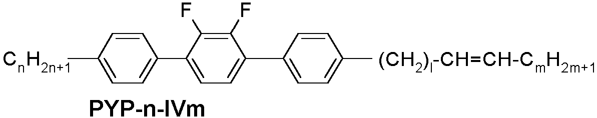 |
| 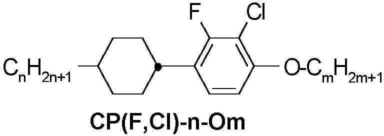 |
| 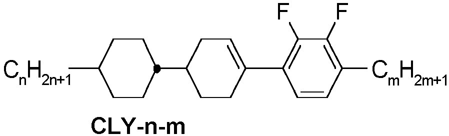 |
| 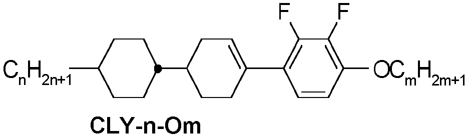 |
| 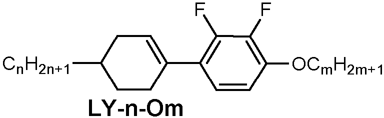 |
| 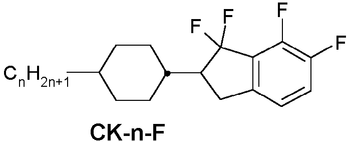 |
| 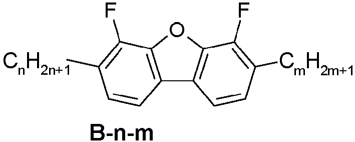 |
| 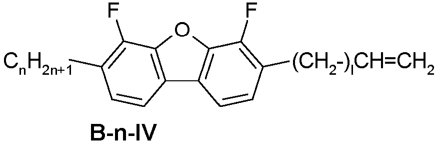 |
| 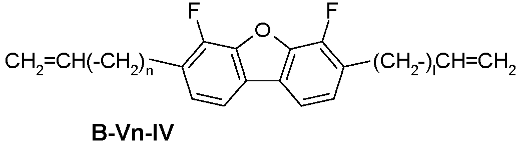 |
| 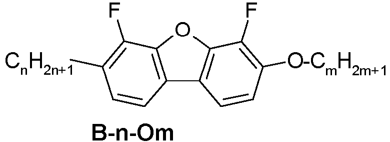 |
| 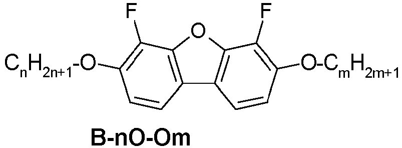 |
| 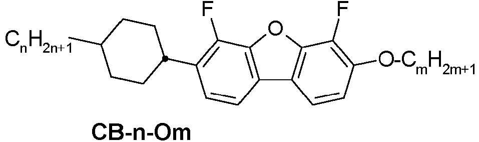 |
| 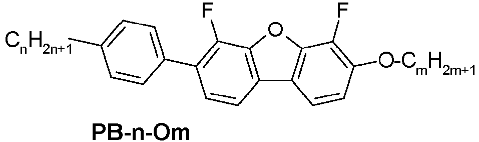 |
| 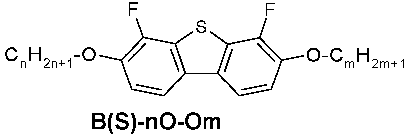 |
| 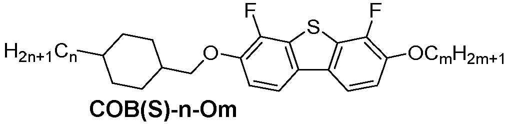 |
| 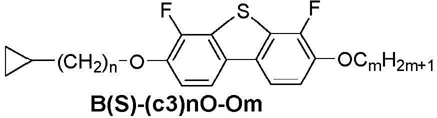 |
| 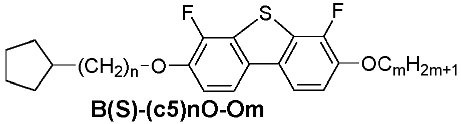 |
| 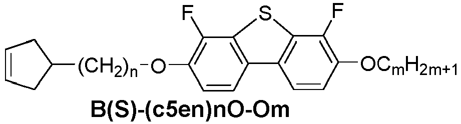 |
| 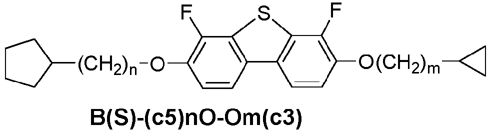 |
| 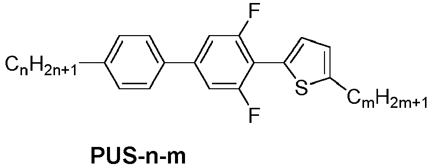 |
| 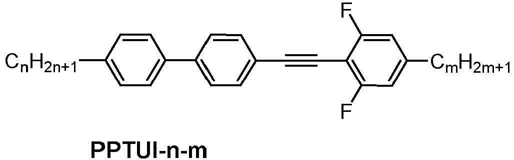 |
| 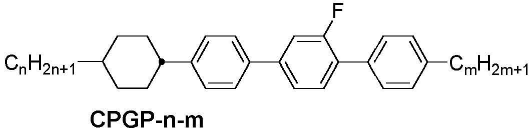 |
| 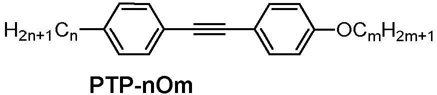 |
| 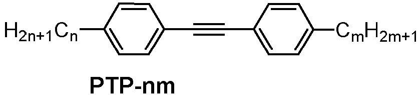 |
| 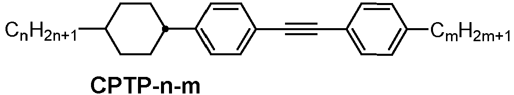 |
| 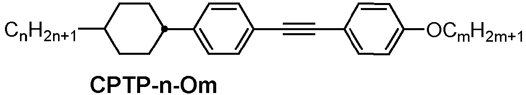 |
| 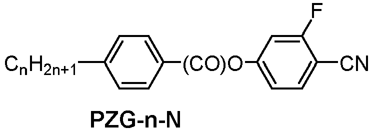 |
| 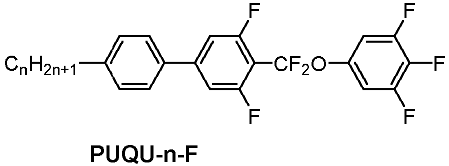 |
| 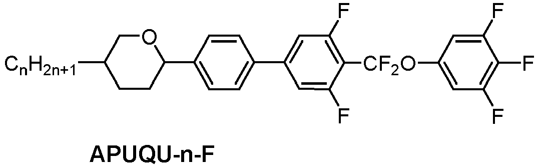 |
| 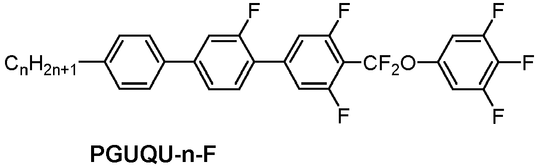 |

Table E shows chiral dopants which are preferably employed in the mixtures according to the invention.

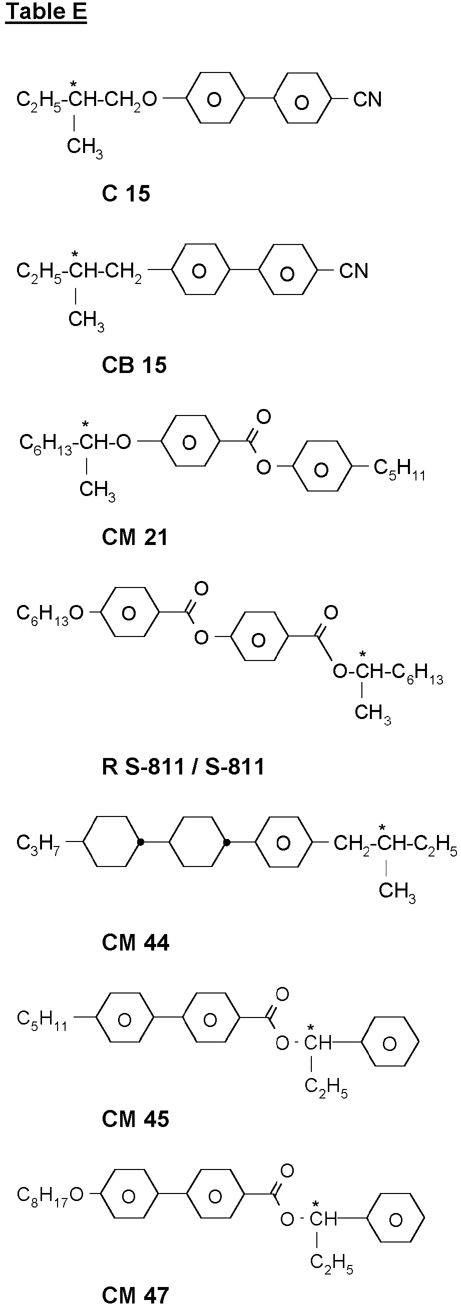

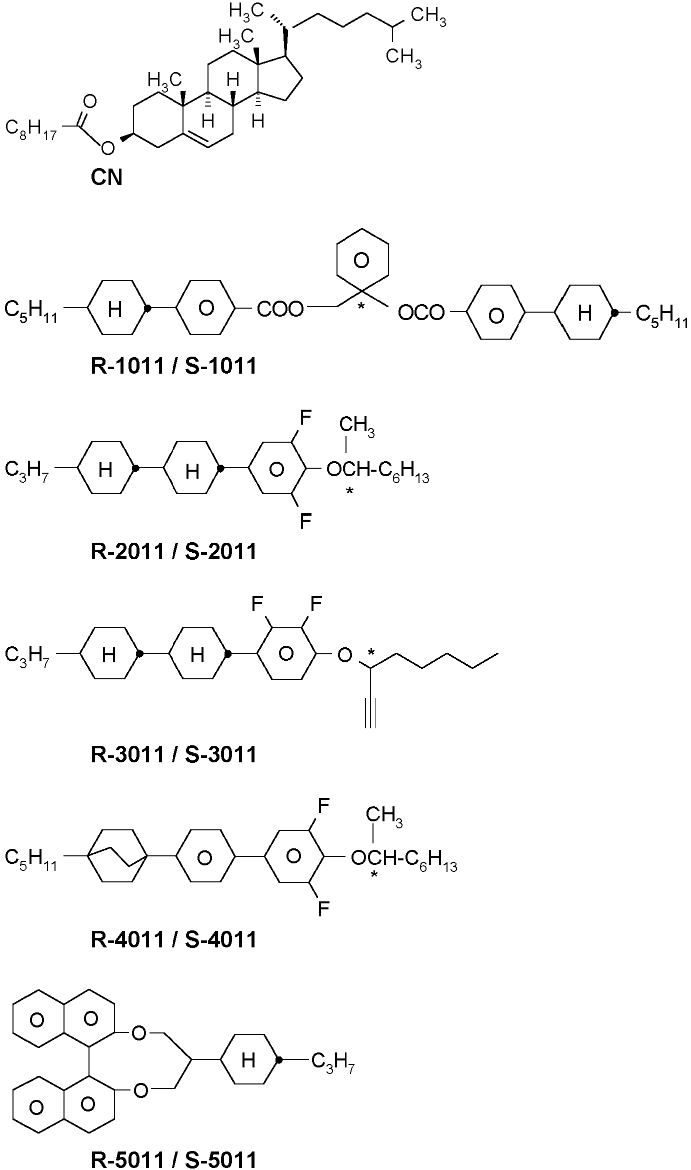

In a preferred embodiment of the present invention, the media according to the invention comprise one or more compounds selected from the group of the compounds from Table E.

### Examples

The present invention is illustrated in detail by the following non-restrictive working examples.

The following abbreviations and symbols are used:
- V₀: threshold voltage, capacitive [V] at 20°C,
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the director at 20°C and 1 kHz,
- ε∥: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN].

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

Unless stated otherwise, methods of preparing test cells and measuring their electrooptical and other properties are carried out by the methods as described hereinafter or in analogy thereto.

The display used for measurement of the capacitive threshold voltage consists of two plane-parallel glass outer plates with a distance of 25 µm, each of which has on the inside an electrode layer and an unrubbed polyimide alignment layer on top, which effect homeotropic alignment of the liquid-crystal molecules.

Unless indicated otherwise, the VHR is determined at 20°C (VHR₂₀) and after 5 minutes in an oven at 100°C (VHR₁₀₀) in a commercially available instrument Model LCM-1 (O0004) from TOYO Corporation, Japan. The voltage used has a frequency of in a range from 1 Hz to 60 Hz, unless indicated more precisely.

The stability to UV irradiation is investigated in a "Suntest CPS+", a commercial instrument from Heraeus, Germany, using a Xenon lamp NXE1500B. The sealed test cells are irradiated for 2.0 h, unless explicitly indicated, without additional heating. The irradiation power in the wavelength range from 300 nm to 800 nm is 765 W / m² V. A UV "cut-off" filter having an edge wavelength of 310 nm is used in order to simulate the so-called window glass mode. In each series of experiments, at least four test cells are investigated for each condition, and the respective results are indicated as averages of the corresponding individual measurements.

In order to investigate the low-temperature stability, also known as "LTS", i.e. the stability of the LC mixture in the bulk against spontaneous crystallisation of individual components at low temperatures or the occurrence of smectic phases, as the case may be, several sealed bottles, each containing about 1 g of the material, are stored at one or more given temperatures, typically of -10°C, -20°C, -30°C and/or - 40°C and it is inspected at regular intervals visually, whether a phase transition is observed or not. As soon as the first one of the samples at a given temperature shows a change time is noted. The time until the last inspection, at which no change has been observed, is noted as the respective LTS.

The ion density from which the resistivity is calculated is measured using the commercially available LC Material Characteristics Measurement System Model 6254 from Toyo Corporation, Japan, using VHR test cells with AL16301 Polyimide (JSR Corp., Japan) having a 3.2µm cell gap. The measurement is performed after 5 min of storage in an oven at 60 °C or 100 °C.

The clearing point is measured using the Mettler Thermosystem FP900. The optical anisotropy (Δn) is measured using an Abbe Refractometer H005 (Natrium-spectral lamp Na10 at 589nm, 20 °C). The dielectric anisotropy (Δε) is measured using an LCR-Meter E4980A/Agilent (G005) at 20°C (ε-parallel-cells with JALS 2096-R1). The turn on voltage (V₀) is measured using an LCR-Meter E4980A/Agilent (G005) at 20°C (ε-parallel-cells with JALS 2096-R1). The rotational viscosity (γ₁) is measured using a TOYO LCM-2 (0002) at 20°C (gamma 1 negative cells with JALS-2096-R1). The elastic constant (K₁, splay) is measured using an LCR-Meter E4980A/Agilent (G005) at 20°C (ε parallel-cells with JALS 2096-R1). K₃: The elastic constant (K₃, bend) is measured using an LCR-Meter E4980A/Agilent (G005) at 20°C (ε-parallel-cells with JALS 2096-R1).

The following mixture examples having negative dielectric anisotropy are suitable, in particular, for vertically aligned liquid-crystal displays.

### Mixture Examples

The following stabilizing compounds are used and described with the acronyms as follows:

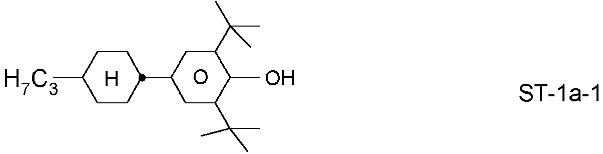

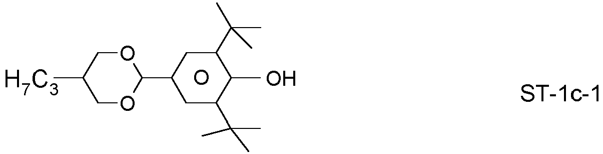

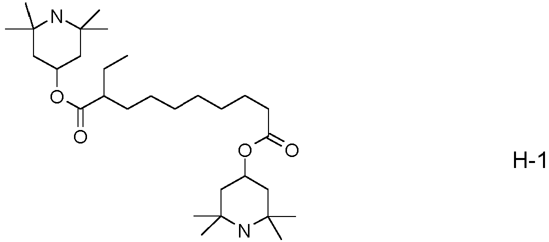

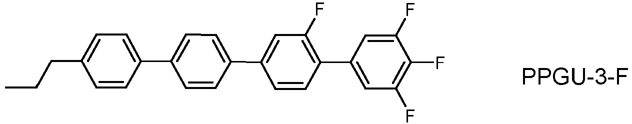

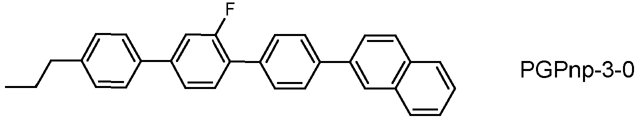

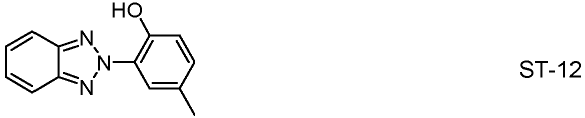

The nematic LC mixtures M1 to M41 have the composition and physical properties given in the following tables:

### Host Mixture M1

| | | | |
|---|---|---|---|
| BCH-32 | 12.0 % | T_{(N,I)} [°C]: | 111 |
| CBC-33 | 1.5 % | Δn (589 nm, 20°C): | |
| CCH-3O1 | 8.0 % | nₑ (20°C, 589.3 nm): | |
| CCY-3-O1 | 5.0 % | nₒ (20°C, 589.3 nm): | |
| CCY-3-O2 | 8.0 % | Δε (1 kHz, 20°C): | |
| CCY-3-O3 | 7.0 % | ε_{∥} (1 kHz, 20°C): | |
| CCY-4-O2 | 7.0 % | ε_{⊥} (1 kHz, 20°C): | |
| CPY-3-O2 | 10.0 % | K₁ [pN], (20°C): | |
| CY-3-O2 | 11.5 % | K₃ [pN], (20°C): | |
| CY-3-O4 | 4.0 % | γ₁ [mPa·s],(20°C): | |
| PYP-2-3 | 12.0 % | V₀ [V], (20°C): | |
| PYP-2-4 | 14.0 % | | |
| Σ | 100.0 % | | |

### Example Mixture M2

| | | | |
|---|---|---|---|
| M1 | 99.8 % | T_{(N,I)} [°C]: | 111 |
| ST-1a-1 | 0.2 % | Δn (589 nm, 20°C): | 0.151 |
| Σ | 100.0 % | nₑ (20°C, 589.3 nm): | 1.649 |
| | | nₒ (20°C, 589.3 nm): | 1.497 |
| | | Δε (1 kHz, 20°C): | -4.0 |
| | | ε_{∥} (1 kHz, 20°C): | 3.7 |
| ε_{⊥} (1 kHz, 20°C): | | | 7.7 |
| K₁ [pN], (20°C): | | | 17.3 |
| K₃ [pN], (20°C): | | | 17.5 |
| γ₁ [mPa·s],(20°C): | | | 287 |
| V₀ [V], (20°C): | | | 2.21 |

### Example Mixture M3

| | | | |
|---|---|---|---|
| M1 | 99.77 % | T_{(N,I)} [°C]: | 111 |
| ST-1a-1 | 0.2 % | Δn (589 nm, 20°C): | 0.151 |
| H-1 | 0.03 % | nₑ (20°C, 589.3 nm): | 1.649 |
| Σ | 100.0 % | nₒ (20°C, 589.3 nm): | 1.497 |
| | | Δε (1 kHz, 20°C): | -4.0 |
| | | ε_{∥} (1 kHz, 20°C): | 3.7 |
| | | ε_{⊥} (1 kHz, 20°C): | 7.7 |
| | | K₁ [pN], (20°C): | |
| | | K₃ [pN], (20°C): | |
| | | γ₁ [mPa·s],(20°C): | |
| | | V₀ [V], (20°C): | |

### Host Mixture M4

| | | | |
|---|---|---|---|
| BCH-32 | 12.0 % | T_{(N,I)} [°C]: | 109 |
| CBC-33 | 1.5 % | Δn (589 nm, 20°C): | 0.149 |
| CCH-3O1 | 8.0 % | nₑ (20°C, 589.3 nm): | |
| CCY-3-O1 | 4.0 % | nₒ (20°C, 589.3 nm): | |
| CCY-3-O2 | 8.0 % | Δε (1 kHz, 20°C): | -4.0 |
| CCY-3-O3 | 6.0 % | ε_{∥} (1 kHz, 20°C): | |
| CCY-4-O2 | 6.0 % | ε_{⊥} (1 kHz, 20°C): | |
| CPY-3-O2 | 10.0 % | K₁ [pN], (20°C): | |
| CY-3-O2 | 11.5 % | K₃ [pN], (20°C): | |
| CY-3-O4 | 4.0 % | γ₁ [mPa·s], (20°C): | |
| PYP-2-3 | 10.0 % | V₀ [V], (20°C): | |
| PYP-2-4 | 12.0 % | | |
| PPY-3-O2 | 4.0 % | | |
| CCEY-3-O2 | 3.0% | | |
| Σ | 100.0 % | | |

### Example Mixture M5

| | | | |
|---|---|---|---|
| M4 | 99.77 % | T_{(N,I)} [°C]: | 109 |
| ST-1a-1 | 0.2 % | Δn (589 nm, 20°C): | 0.149 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.0 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| | | V₀ [V], (20°C): | |

### Host Mixture M6

| | | | |
|---|---|---|---|
| BCH-32 | 12.0 % | T_{(N,I)} [°C]: | 112 |
| CBC-33 | 1.5 % | Δn (589 nm, 20°C): | 0.150 |
| CCH-3O1 | 8.0 % | nₑ (20°C, 589.3 nm): | |
| CCY-3-O1 | 5.0 % | nₒ (20°C, 589.3 nm): | |
| CCY-3-O2 | 8.0 % | Δε (1 kHz, 20°C): | -4.0 |
| CCY-3-O3 | 4.0 % | ε_{∥} (1 kHz, 20°C): | |
| CCY-4-O2 | 5.0 % | ε_{⊥} (1 kHz, 20°C): | |
| CPY-3-O2 | 10.0 % | K₁ [pN], (20°C): | |
| CY-3-O2 | 11.5 % | K₃ [pN], (20°C): | |
| CY-3-O4 | 4.0 % | γ₁ [mPa·s], (20°C): | |
| PYP-2-3 | 10.0 % | V₀ [V], (20°C): | |
| PYP-2-4 | 12.0 % | | |
| CCOY-3-O2 | 5.0 % | | |
| PGP-2-4 | 4.0 % | | |
| Σ | 100.0 % | | |

### Example Mixture M7

| | | | |
|---|---|---|---|
| M6 | 99.77 % | T_{(N,I)} [°C]: | 112 |
| ST-1a-1 | 0.2 % | Δn (589 nm, 20°C): | 0.150 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.0 |
| ε_{∥} (1 kHz, 20°C): | | | |
| ε_{⊥} (1 kHz, 20°C): | | | |
| K₁ [pN], (20°C): | | | |
| K₃ [pN], (20°C): | | | |
| γ₁ [mPa·s], (20°C): | | | |
| V₀ [V], (20°C): | | | |

### Host Mixture M8

| | | | |
|---|---|---|---|
| BCH-32 | 11.0 % | T_{(N,I)} [°C]: | 109 |
| CBC-33 | 1.5 % | Δn (589 nm, 20°C): | 0.150 |
| CCH-3O1 | 8.0 % | nₑ (20°C, 589.3 nm): | |
| CCY-3-O1 | 5.0 % | nₒ (20°C, 589.3 nm): | |
| CCY-3-O2 | 8.0 % | Δε (1 kHz, 20°C): | -4.0 |
| CCY-3-O3 | 7.0 % | ε_{∥} (1 kHz, 20°C): | |
| CCY-4-O2 | 7.0 % | ε_{⊥} (1 kHz, 20°C): | |
| CPY-3-O2 | 10.0 % | K₁ [pN], (20°C): | |
| CY-3-O2 | 10.0 % | K₃ [pN], (20°C): | |
| CY-3-O4 | 4.0 % | γ₁ [mPa·s], (20°C): | |
| PYP-2-3 | 10.0 % | V₀ [V], (20°C): | |
| PYP-2-4 | 12.0 % | | |
| PGIGI-3-F | 2.0 % | | |
| CBC-33F | 1.5 % | | |
| PY-4-O2 | 2.0 % | | |
| Σ | 100.0 % | | |

### Example Mixture M9

| | | | |
|---|---|---|---|
| M8 | 99.77 % | T_{(N,I)} [°C]: | 109 |
| ST-1a-1 | 0.2 % | Δn (589 nm, 20°C): | 0.150 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.0 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| V₀ [V], (20°C): | | | |

### Host Mixture M10

| | | | |
|---|---|---|---|
| BCH-32 | 12.0 % | T_{(N,I)} [°C]: | 112 |
| CCH-3O1 | 9.0 % | Δn (589 nm, 20°C): | 0.150 |
| CCY-3-O1 | 5.0 % | nₑ (20°C, 589.3 nm): | |
| CCY-3-O2 | 9.0 % | nₒ (20°C, 589.3 nm): | |
| CCY-3-O3 | 6.0 % | Δε (1 kHz, 20°C): | -4.0 |
| CCY-4-O2 | 6.0 % | ε_{∥} (1 kHz, 20°C): | |
| CPY-3-O2 | 12.0 % | ε_{⊥} (1 kHz, 20°C): | |
| CY-3-O2 | 11.5 % | K₁ [pN], (20°C): | |
| CY-3-O4 | 4.0 % | K₃ [pN], (20°C): | |
| PYP-2-3 | 10.0 % | γ₁ [mPa·s], (20°C): | |
| PYP-2-4 | 12.0 % | V₀ [V], (20°C): | |
| CPGP-5-2 | 3.0 % | | |
| PPGU-3-F | 0.5 % | | |
| Σ | 100.0 % | | |

### Example Mixture M11

| | | | |
|---|---|---|---|
| M10 | 99.77 % | T_{(N,I)} [°C]: | 112 |
| ST-1a-1 | 0.2 % | Δn (589 nm, 20°C): | 0.150 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.0 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| | | V₀ [V], (20°C): | |

### Host Mixture M12

| | | | |
|---|---|---|---|
| BCH-32 | 4.0 % | T_{(N,I)} [°C]: | 110 |
| CCH-3O1 | 8.0 % | Δn (589 nm, 20°C): | |
| CCH-34 | 10.5 % | nₑ (20°C, 589.3 nm): | |
| CCP-3-2 | 4.0 % | nₒ (20°C, 589.3 nm): | |
| CCY-3-O1 | 5.0 % | Δε (1 kHz, 20°C): | |
| CCY-3-O2 | 5.0 % | ε_{∥} (1 kHz, 20°C): | |
| CCY-4-O2 | 5.0 % | ε_{⊥} (1 kHz, 20°C): | |
| CPY-2-O2 | 12.0 % | K₁ [pN], (20°C): | |
| CPY-3-O2 | 12.0 % | K₃ [pN], (20°C): | |
| CY-3-O2 | 7.0 % | γ₁ [mPa·s], (20°C): | |
| PGIY-2-O4 | 8.0 % | V₀ [V], (20°C): | |
| PYP-2-3 | 12.0 % | | |
| PYP-2-4 | 7.5 % | | |
| Σ | 100.0 % | | |

### Example Mixture M13

| | | | |
|---|---|---|---|
| M12 | 99.8 % | T_{(N,I)} [°C]: | 110 |
| ST-1a-1 | 0.2 % | Δn (589 nm, 20°C): | 0.150 |
| Σ | 100.0 % | nₑ (20°C, 589.3 nm): | 1.647 |
| | | nₒ (20°C, 589.3 nm): | 1.500 |
| | | Δε (1 kHz, 20°C): | -3.9 |
| | | ε_{∥} (1 kHz, 20°C): | 3.7 |
| | | ε_{⊥} (1 kHz, 20°C): | 7.6 |
| | | K₁ [pN], (20°C): | 18.3 |
| | | K₃ [pN], (20°C): | 17.1 |
| | | γ₁ [mPa·s], (20°C): | 257 |
| | | V₀ [V], (20°C): | 2.20 |

### Example Mixture M14

| | | | |
|---|---|---|---|
| M12 | 99.77 % | T_{(N,I)} [°C]: | 110 |
| ST-1a-1 | 0.2 % | Δn (589 nm, 20°C): | 0.150 |
| H-1 | 0.03 % | nₑ (20°C, 589.3 nm): | 1.647 |
| Σ | 100.0 % | nₒ (20°C, 589.3 nm): | 1.500 |
| | | Δε (1 kHz, 20°C): | -3.9 |
| | | ε_{∥} (1 kHz, 20°C): | 3.7 |
| | | ε_{⊥} (1 kHz, 20°C): | 7.6 |
| | | K₁ [pN], (20°C): | 18.4 |
| | | K₃ [pN], (20°C): | 16.8 |
| | | γ₁ [mPa·s], (20°C): | 258 |
| V₀ [V], (20°C): | | | 2.18 |

### Host Mixture M15

| | | | |
|---|---|---|---|
| BCH-32 | 4.0 % | T_{(N,I)} [°C]: | 108 |
| CCH-3O1 | 8.0 % | Δn (589 nm, 20°C): | 0.151 |
| CCH-23 | 8.0 % | nₑ (20°C, 589.3 nm): | |
| CCP-3-1 | 4.0 % | nₒ (20°C, 589.3 nm): | |
| CCY-3-O1 | 5.0 % | Δε (1 kHz, 20°C): | -4.1 |
| CCY-3-O2 | 7.0 % | ε_{∥} (1 kHz, 20°C): | |
| CCY-4-O2 | 5.0 % | ε_{⊥} (1 kHz, 20°C): | |
| CPY-2-O2 | 12.0 % | K₁ [pN], (20°C): | |
| CPY-3-O2 | 12.0 % | K₃ [pN], (20°C): | |
| CY-3-O2 | 7.0 % | γ₁ [mPa·s], (20°C): | |
| PGIY-2-O4 | 8.0 % | V₀ [V], (20°C): | |
| PYP-2-3 | 12.0 % | | |
| PYP-2-4 | 8.0 % | | |
| Σ | 100.0 % | | |

### Example Mixture M16

| | | | |
|---|---|---|---|
| M15 | 99.77 % | T_{(N,I)} [°C]: | 108 |
| ST-1a-1 | 0.2 % | Δn (589 nm, 20°C): | 0.151 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.1 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| | | V₀ [V], (20°C): | |

### Host Mixture M17

| | | | |
|---|---|---|---|
| BCH-32 | 4.0 % | T_{(N,I)} [°C]: | 108 |
| CCH-3O1 | 8.0 % | Δn (589 nm, 20°C): | 0.151 |
| CCH-34 | 10.5 % | nₑ (20°C, 589.3 nm): | |
| CCP-3-1 | 4.0 % | nₒ (20°C, 589.3 nm): | |
| CCY-3-O1 | 5.0 % | Δε (1 kHz, 20°C): | -4.1 |
| CCY-3-O2 | 5.0 % | ε_{∥} (1 kHz, 20°C): | |
| CCY-4-O2 | 5.0 % | ε_{⊥} (1 kHz, 20°C): | |
| CPY-2-O2 | 11.0 % | K₁ [pN], (20°C): | |
| CPY-3-O2 | 11.0 % | K₃ [pN], (20°C): | |
| CY-3-O2 | 9.0 % | γ₁ [mPa·s], (20°C): | |
| PGIY-2-O4 | 4.0 % | V₀ [V], (20°C): | |
| PYP-2-3 | 12.0 % | | |
| PYP-2-4 | 7.5 % | | |
| PPY-3-O2 | 4.0 % | | |
| Σ | 100.0 % | | |

### Example Mixture M18

| | | | |
|---|---|---|---|
| M17 | 99.77 % | T_{(N,I)} [°C]: | 108 |
| ST-1a-1 | 0.2 % | Δn (589 nm, 20°C): | 0.151 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.1 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| | | V₀ [V], (20°C): | |

### Host Mixture M19

| | | | |
|---|---|---|---|
| BCH-32 | 4.0 % | T_{(N,I)} [°C]: | 109 |
| CCH-3O1 | 8.0 % | Δn (589 nm, 20°C): | 0.147 |
| CCH-34 | 10.5 % | nₑ (20°C, 589.3 nm): | |
| CCP-3-1 | 4.0 % | nₒ (20°C, 589.3 nm): | |
| CCY-3-O1 | 5.0 % | Δε (1 kHz, 20°C): | -4.4 |
| CCY-3-O2 | 5.0 % | ε_{∥} (1 kHz, 20°C): | |
| CCY-4-O2 | 5.0 % | ε_{⊥} (1 kHz, 20°C): | |
| CPY-2-O2 | 12.0 % | K₁ [pN], (20°C): | |
| CPY-3-O2 | 12.0 % | K₃ [pN], (20°C): | |
| CY-3-O2 | 7.0 % | γ₁ [mPa·s], (20°C): | |
| PGIY-2-O4 | | 2.0 % | V₀ [V], (20°C): |
| PYP-2-3 | | 12.0 % | |
| PYP-2-4 | | 7.5 % | |
| B(S)-(c5)1O-O2 | | 2.0 % | |
| B(S)-2O-O6 | | 2.0 % | |
| B(S)-2O-O4 | | 2.0 % | |
| Σ | | 100.0 % | |

### Example Mixture M20

| | | | |
|---|---|---|---|
| M19 | 99.77 % | T_{(N,I)} [°C]: | 109 |
| ST-1a-1 | 0.2 % | Δn (589 nm, 20°C): | 0.147 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.4 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| | | V₀ [V], (20°C): | |

### Host Mixture M21

| | | | |
|---|---|---|---|
| BCH-32 | 2.0 % | T_{(N,I)} [°C]: | 132 |
| CBC-33 | 3.0 % | Δn (589 nm, 20°C): | |
| CBC-33F | 3.0% | nₑ (20°C, 589.3 nm): | |
| CBC-53F | 3.0% | nₒ (20°C, 589.3 nm): | |
| CCH-3O1 | 2.0 % | Δε (1 kHz, 20°C): | |
| CCY-3-O1 | 5.0 % | ε_{∥} (1 kHz, 20°C): | |
| CCY-3-O2 | 6.0% | ε_{⊥} (1 kHz, 20°C): | |
| CCY-3-O3 | 5.1 % | K₁ [pN], (20°C): | |
| CCY-4-O2 | 6.0% | K₃ [pN], (20°C): | |
| CPY-2-O2 | 13.0 % | γ₁ [mPa·s], (20°C): | |
| CPY-3-O2 | 13.0 % | V₀ [V], (20°C): | |
| PPGU-3-F | 1.0 % | | |
| PY-1-O4 | 1.9 % | | |
| PY-2-O2 | 5.0 % | | |
| PY-3-O2 | | | 7.0 % |
| PYP-2-3 | | | 12.0 % |
| PYP-2-4 | | | 12.0 % |
| Σ | | | 100.0 % |

### Example Mixture M22

| | | | |
|---|---|---|---|
| M21 | 99.8 % | T_{(N,I)} [°C]: | 132 |
| ST-1a-1 | 0.2 % | Δn (589 nm, 20°C): | 0.181 |
| Σ | 100.0 % | nₑ (20°C, 589.3 nm): | 1.683 |
| | | nₒ (20°C, 589.3 nm): | 1.502 |
| | | Δε (1 kHz, 20°C): | -4.7 |
| | | ε_{∥} (1 kHz, 20°C): | 4.1 |
| | | ε_{⊥} (1 kHz, 20°C): | 8.7 |
| | | K₁ [pN], (20°C): | 20.6 |
| | | K₃ [pN], (20°C): | 21.6 |
| | | γ₁ [mPa·s], (20°C): | 496 |
| | | V₀ [V], (20°C): | 2.27 |

### Example Example Mixture M23

| | | | |
|---|---|---|---|
| M21 | 99.77 % | T_{(N,I)} [°C]: | 132 |
| ST-1a-1 | 0.2 % | Δn (589 nm, 20°C): | 0.181 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.7 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| | | V₀ [V], (20°C): | |

### Host Mixture M24

| | | |
|---|---|---|
| CY-3-O2 | 7.5 % | T_{(N,I)} [°C]: |
| CCY-3-O2 | 7.0 % | Δn (589 nm, 20°C): |
| CCY-4-O2 | 7.0 % | nₑ (20°C, 589.3 nm): |
| CCY-3-O3 | 7.0 % | nₒ (20°C, 589.3 nm): |
| CCY-5-O2 | 3.0 % | Δε (1 kHz, 20°C): |
| CPY-2-O2 | 12.0 % | ε_{∥} (1 kHz, 20°C): |
| CPY-3-O2 | 11.0 % | ε_{⊥} (1 kHz, 20°C): |
| PYP-2-3 | 13.0 % | K₁ [pN], (20°C): |
| PYP-2-4 | 12.0 % | K₃ [pN], (20°C): |
| CCH-301 | 8.0 % | γ₁ [mPa·s], (20°C): |
| PY-3-O2 | 3.5 % | V₀ [V], (20°C): |
| BCH-32 | 9.0 % | |
| Σ | 100.0 % | |

### Example Mixture M25

| | | | |
|---|---|---|---|
| M24 | 99.67 % | T_{(N,I)} [°C]: | 113 |
| ST-1a-1 | 0.3 % | Δn (589 nm, 20°C): | 0.161 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.5 |
| | | ε_{∥} (1 kHz, 20°C): | |
| | | ε_{⊥} (1 kHz, 20°C): | |
| | | K₁ [pN], (20°C): | 18.5 |
| | | K₃ [pN], (20°C): | 18.2 |
| | | γ₁ [mPa·s], (20°C): | 344 |
| | | V₀ [V], (20°C): | 2.11 |

### Host Mixture M26

| | | |
|---|---|---|
| CY-3-O2 | CY-3-O2 | T_{(N,I)} [°C]: |
| CCY-3-O2 | CCY-3-O2 | Δn (589 nm, 20°C): |
| CCY-4-O2 | CCY-4-O2 | nₑ (20°C, 589.3 nm): |
| CCY-3-O3 | CCY-3-O3 | nₒ (20°C, 589.3 nm): |
| CCY-5-O2 | CCY-5-O2 | Δε (1 kHz, 20°C): |
| CPY-2-O2 | CPY-2-O2 | ε_{∥} (1 kHz, 20°C): |
| CPY-3-O2 | CPY-3-O2 | ε_{⊥} (1 kHz, 20°C): |
| PYP-2-3 | PYP-2-3 | K₁ [pN], (20°C): |
| PYP-2-4 | PYP-2-4 | K₃ [pN], (20°C): |
| CCH-301 | CCH-301 | γ₁ [mPa·s], (20°C): |
| PY-3-O2 | PY-3-O2 | V₀ [V], (20°C): |
| BCH-32 | BCH-32 | |
| PPGU-3-F | | 1.0% |
| Σ | | 100.0 % |

### Example Mixture M27

| | | | |
|---|---|---|---|
| M26 | 99.67 % | T_{(N,I)} [°C]: | 114.5 |
| ST-1a-1 | 0.3 % | Δn (589 nm, 20°C): | 0.161 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.5 |
| | | ε_{∥} (1 kHz, 20°C): | |
| | | ε_{⊥} (1 kHz, 20°C): | |
| | | K₁ [pN], (20°C): | 18.6 |
| | | K₃ [pN], (20°C): | 18.2 |
| | | γ₁ [mPa·s], (20°C): | 354 |
| | | V₀ [V], (20°C): | 2.11 |

### Host Mixture M28

| | | |
|---|---|---|
| BCH-32 | BCH-32 | T_{(N,I)} [°C]: |
| CCH-301 | CCH-301 | Δn (589 nm, 20°C): |
| CCH-34 | CCH-34 | nₑ (20°C, 589.3 nm): |
| CCP-3-1 | CCP-3-1 | nₒ (20°C, 589.3 nm): |
| CCY-3-O1 | CCY-3-O1 | Δε (1 kHz, 20°C): |
| CCY-3-O2 | CCY-3-O2 | ε_{∥} (1 kHz, 20°C): |
| CPY-2-O2 | CPY-2-O2 | ε_{⊥} (1 kHz, 20°C): |
| CPY-3-O2 | CPY-3-O2 | K₁ [pN], (20°C): |
| CY-3-O2 | CY-3-O2 | K₃ [pN], (20°C): |
| PGIY-2-O4 | PGIY-2-O4 | γ₁ [mPa·s], (20°C): |
| PY-3-O2 | PY-3-O2 | V₀ [V], (20°C): |
| PYP-2-3 | PYP-2-3 | |
| PYP-2-4 | PYP-2-4 | |
| PPGU-3-F | PPGU-3-F | |
| Σ | 100.0 % | |

### Example Mixture M29

| | | | |
|---|---|---|---|
| M28 | 99.67 % | T_{(N,I)} [°C]: | 103 |
| ST-1a-1 | 0.3% | Δn (589 nm, 20°C): | 0.161 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.6 |
| | | ε_{∥} (1 kHz, 20°C): | |
| | | ε_{⊥} (1 kHz, 20°C): | |
| | | K₁ [pN], (20°C): | 17.5 |
| | | K₃ [pN], (20°C): | 17.6 |
| | | γ₁ [mPa·s], (20°C): | 284 |
| | | V₀ [V], (20°C): | 2.08 |

### Example Mixture M30

| | | | |
|---|---|---|---|
| BCH-32 | 11.98 % | T_{(N,I)} [°C]: | 106 |
| CCH-301 | 7.98 % | Δn (589 nm, 20°C): | 0.150 |
| CCY-3-O1 | 4.99 % | nₑ (20°C, 589.3 nm): | |
| CCY-3-O2 | 4.99 % | nₒ (20°C, 589.3 nm): | |
| CCY-3-O3 | 5.99 % | Δε (1 kHz, 20°C): | -4.0 |
| CCY-4-O2 | 4.99 % | ε_{∥} (1 kHz, 20°C): | |
| CCY-5-O2 CPY-3-O2 | 4.99 % 10.98 % | ε_{⊥} (1 kHz, 20°C): K₁ [pN], (20°C): | 16.9 |
| CY-3-O4 | 15.97 % | K₃ [pN], (20°C): | 17.1 |
| PYP-2-3 | 11.97 % | γ₁ [mPa·s], (20°C): | 287 |
| PYP-2-4 | 14.97 % | V₀ [V], (20°C): | 2.18 |
| ST-1a-1 | 0.20 % | | |
| Σ | 100.0 % | | |

### Host Mixture M31

| | | | |
|---|---|---|---|
| CCY-3-O1 | 3.75 % | T_{(N,I)} [°C]: | 94 |
| CCY-3-O2 | 8.0 % | Δn (589 nm, 20°C): | 0.090 |
| CCY-3-O3 | 8.0 % | nₑ (20°C, 589.3 nm): | |
| CCY-4-O2 | 8.0 % | nₒ (20°C, 589.3 nm): | |
| CCY-5-O2 | 8.0 % | Δε (1 kHz, 20°C): | -4.8 |
| CPY-3-O2 | 5.25 % | ε_{∥} (1 kHz, 20°C): | |
| CCY-2-1 | 8.5 % | ε_{⊥} (1 kHz, 20°C): | |
| CCY-3-1 | 8.5 % | K₁ [pN], (20°C): | |
| CCH-301 | 18.5 % | K₃ [pN], (20°C): | |
| BCH-32 | 2.0 % | γ₁ [mPa·s], (20°C): | |
| CY-5-O2 | | 12.5 % | V₀ [V], (20°C): |
| CY-5-O4 | | 7.5 % | |
| CY-3-O2 | | 1.5 | |
| Σ | | 100.0 % | |

### Example Mixture M32

| | | | |
|---|---|---|---|
| M31 | 99.67 % | T_{(N,I)} [°C]: | 93 |
| ST-1a-1 | 0.3 % | Δn (589 nm, 20°C): | 0.090 |
| H-1 | 0.03 % | nₑ (20°C, 589.3 nm): | |
| Σ | 100.0 % | nₒ (20°C, 589.3 nm): | |
| | | Δε (1 kHz, 20°C): | -4.8 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | 246 |
| | | V₀ [V], (20°C): | 1.98 |

### Example Mixture M33

| | | | |
|---|---|---|---|
| M31 | 99.74 % | T_{(N,I)} [°C]: | 93 |
| ST-1a-1 | 0.2 % | Δn (589 nm, 20°C): | 0.090 |
| ST-12 | 0.4 % | nₑ (20°C, 589.3 nm): | |
| Σ | 100.0 % | nₒ (20°C, 589.3 nm): | |
| | | Δε (1 kHz, 20°C): | -4.8 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | 246 |
| | | V₀ [V], (20°C): | 1.98 |

### Host Mixture M34

| | | |
|---|---|---|
| BCH-32 | 5.0 % | T_{(N,I)} [°C]: |
| CBC-33F | 4.0 % | Δn (589 nm, 20°C): |
| CCH-301 | 7.0 % | nₑ (20°C, 589.3 nm): |
| CCY-2-1 | 4.0 % | nₒ (20°C, 589.3 nm): |
| CCY-3-1 | 5.0 % | Δε (1 kHz, 20°C): |
| CCY-3-O2 | 8.0 % | ε_{∥} (1 kHz, 20°C): |
| CCY-3-O3 | 8.0 % | ε_{⊥} (1 kHz, 20°C): |
| CCY-4-O2 | 7.0 % | K₁ [pN], (20°C): |
| CPY-2-O2 | 12.0 % | K₃ [pN], (20°C): |
| CPY-3-O2 | 12.0 % | γ₁ [mPa·s], (20°C): |
| CY-3-O2 | 15.0 % | V₀ [V], (20°C): |
| CY-3-O4 | 5.0 % | |
| PGIGI-3-F | 8.0 % | |
| Σ | 100.0 % | |

### Example Mixture M35

| | | | |
|---|---|---|---|
| M34 | 99.67 % | T_{(N,I)} [°C]: | 109.5 |
| ST-1a-1 | 0.3 % | Δn (589 nm, 20°C): | 0.131 |
| H-1 | 0.03 % | nₑ (20°C, 589.3 nm): | |
| Σ | 100.0 % | nₒ (20°C, 589.3 nm): | |
| | | Δε (1 kHz, 20°C): | -5.2 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| | | V₀ [V], (20°C): | |

### Host Mixture M36

| | | |
|---|---|---|
| BCH-32 | 5.0 % | T_{(N,I)} [°C]: |
| CBC-33F | 4.0 % | Δn (589 nm, 20°C): |
| CBC-53F | 3.0 % | nₑ (20°C, 589.3 nm): |
| CCH-301 | 10.0 % | nₒ (20°C, 589.3 nm): |
| CCY-3-O2 | 8.0 % | Δε (1 kHz, 20°C): |
| CCY-3-O3 | 8.0 % | ε_{∥} (1 kHz, 20°C): |
| CCY-4-O2 | 7.0 % | ε_{⊥} (1 kHz, 20°C): |
| CCY-5-O2 | 6.0 % | K₁ [pN], (20°C): |
| CPY-2-O2 | 12.0 % | K₃ [pN], (20°C): |
| CPY-3-O2 | 12.0 % | γ₁ [mPa·s], (20°C): |
| CY-3-O4 | 18.0 % | V₀ [V], (20°C): |
| PYP-2-3 | | 7.0% |
| Σ | | 100.0 % |

### Example Mixture M37

| | | | |
|---|---|---|---|
| M36 | 99.67 % | T_{(N,I)} [°C]: | 119 |
| ST-1a-1 | 0.3 % | Δn (589 nm, 20°C): | 0.131 |
| H-1 | 0.03 % | nₑ (20°C, 589.3 nm): | |
| Σ | 100.0 % | nₒ (20°C, 589.3 nm): | |
| | | Δε (1 kHz, 20°C): | -5.1 |
| | | ε_{∥} (1 kHz, 20°C): | |
| | | ε_{⊥} (1 kHz, 20°C): | |
| | | K₁ [pN], (20°C): | |
| | | K₃ [pN], (20°C): | |
| | | γ₁ [mPa·s], (20°C): | |
| | | V₀ [V], (20°C): | |

### Host Mixture M38

| | | |
|---|---|---|
| BCH-32 | 16.0 % | T_{(N,I)} [°C]: |
| CBC-33F | 4.0 % | Δn (589 nm, 20°C): |
| CCH-301 | 5.0 % | nₑ (20°C, 589.3 nm): |
| CCY-3-O2 | 8.0 % | nₒ (20°C, 589.3 nm): |
| CCY-3-O3 | 8.0 % | Δε (1 kHz, 20°C): |
| CCY-4-O2 | 7.0 % | ε_{∥} (1 kHz, 20°C): |
| CPY-2-O2 | 12.0 % | ε_{⊥} (1 kHz, 20°C): |
| CPY-3-O2 | 12.0 % | K₁ [pN], (20°C): |
| CY-3-O2 | 15.0 % | K₃ [pN], (20°C): |
| CY-3-O4 | 11.0 % | γ₁ [mPa·s], (20°C): |
| CBC-53F | 2.0 % | V₀ [V], (20°C): |
| Σ | 100.0 % | |

### Example Mixture M39

| | | | |
|---|---|---|---|
| M38 | 99.67 % | T_{(N,I)} [°C]: | 114.5 |
| ST-1a-1 | 0.3 % | Δn (589 nm, 20°C): | 0.131 |
| H-1 | 0.03 % | nₑ (20°C, 589.3 nm): | |
| Σ | 100.0 % | nₒ (20°C, 589.3 nm): | |
| | | Δε (1 kHz, 20°C): | -5.0 |
| ε_{∥} (1 kHz, 20°C): | | | |
| ε_{⊥} (1 kHz, 20°C): | | | |
| K₁ [pN], (20°C): | | | |
| K₃ [pN], (20°C): | | | |
| γ₁ [mPa·s], (20°C): | | | |
| V₀ [V], (20°C): | | | |

### Example Mixture M40

| | | | |
|---|---|---|---|
| BCH-32 | 8.97 % | T_{(N,I)} [°C]: | 113 |
| CBC-33F | 3.99 % | Δn (589 nm, 20°C): | 0.133 |
| CBC-53F | 2.99 % | nₑ (20°C, 589.3 nm): | |
| CCY-2-1 | 3.99 % | nₒ (20°C, 589.3 nm): | |
| CCY-3-1 | 3.99 % | Δε (1 kHz, 20°C): | -5.2 |
| CCY-3-O2 | 7.97 % | ε_{∥} (1 kHz, 20°C): | |
| CCY-3-O3 | 7.97 % | ε_{⊥} (1 kHz, 20°C): | |
| CCY-4-O2 | 6.98 % | K₁ [pN], (20°C): | |
| CCY-5-O2 | 4.98 % | K₃ [pN], (20°C): | |
| CPY-2-O2 | 9.97 % | γ₁ [mPa·s], (20°C): | |
| CY-3-O4 | 15.95 % | V₀ [V], (20°C): | |
| CY-5-O2 | 10.96 % | | |
| PGIGI-3-F | 5.98 % | | |
| PGIY-2-O4 | 4.98 % | | |
| ST-1a-1 | 0.3 % | | |
| H-1 | 0.03 % | | |
| Σ | 100.0 % | | |

### Example Mixture M41

| | | | |
|---|---|---|---|
| BCH-32 | 5.99 % | T_{(N,I)} [°C]: | 109 |
| CCH-3O1 | 6.98 % | Δn (589 nm, 20°C): | 0.147 |
| CCH-34 | 12.46 % | nₑ (20°C, 589.3 nm): | |
| CCP-3-1 | 3.99 % | nₒ (20°C, 589.3 nm): | |
| CCY-3-O1 | 4.99 % | Δε (1 kHz, 20°C): | -4.4 |
| CCY-3-O2 | 3.99 % | ε_{∥} (1 kHz, 20°C): | |
| CCY-4-O2 | 4.99 % | ε_{⊥} (1 kHz, 20°C): | |
| CPY-2-O2 | 11.97 % | K₁ [pN], (20°C): | |
| CPY-3-O2 | 11.97 % | K₃ [pN], (20°C): | |
| CY-3-O2 | 4.99 % | γ₁ [mPa·s], (20°C): | |
| PGIY-2-O4 | 2.00 % | V₀ [V], (20°C): | |
| PYP-2-3 | 11.97 % | | |
| PYP-2-4 | 7.48 % | | |
| B(S)-(c5en)1O-O4 | 2.00 % | | |
| B(S)-2O-O6 | 2.00 % | | |
| B(S)-(3)1O-O2 | 2.00 % | | |
| ST-1a-1 | 0.2 % | | |
| H-1 | 0.03 % | | |
| Σ | 100.0 % | | |

### Example Mixture M42

| | | | |
|---|---|---|---|
| CC-3-V | 7.952 % | T_{(N,I)} [°C]: | 121 |
| CCH-301 | 7.952 % | Δn (589 nm, 20°C): | 0.271 |
| CPGP-5-2 | 2.982 % | nₑ (20°C, 589.3 nm): | 1.784 |
| PGUQU-3-F | 2.982 % | nₒ (20°C, 589.3 nm): | 1.512 |
| PGUQU-5-F | 2.982 % | Δε (1 kHz, 20°C): | 7.5 |
| PPTUI-3-2 | 24.85 % | ε_{∥} (1 kHz, 20°C): | 11 |
| PPTUI-3-4 | 25.844 % | ε_{⊥} (1 kHz, 20°C): | 3.5 |
| PUS-3-2 | 10.934 % | K₁ [pN], (20°C): | |
| PZG-4-N | 5.964 % | K₃ [pN], (20°C): | |
| PZG-2-N | 1.988 % | γ₁ [mPa·s], (20°C): | 290 |
| CPTP-301 | 2.982 % | V₀ [V], (20°C): | |
| PTP-102 | 1.988 % | | |
| ST-1a-1 | 0.2 % | | |
| H-12 | 0.4 % | | |
| Σ | 100.0 % | | |

### Stability tests

The above Example Mixtures are subjected to test cells with inorganic alignment (SiOₓ) layers or to analogous LCoS panels. The devices are tested under enforced temperature and illumination (stress test blue light, >45 W/cm², 70 °C). Occurrence of bubbles and dark stains is avoided over prolonged time. Alignment of the mixtures is found to be stable over prolonged time under these conditions. Stability for practical use in LCoS of the mixtures is improved over conventional mixtures.

## Claims

1. Liquid Crystal on Silicon (LCoS) panel comprising a semiconductor substrate having a plurality of reflective electrodes, a transparent substrate comprising a transparent electrode assembled with the semiconductor substrate, and a liquid crystal layer arranged between the semiconductor substrate and the transparent substrate,
wherein the liquid crystal layer comprises a liquid crystal medium comprising
a) one or more compounds of formula IV 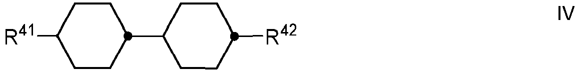 in which
R⁴¹ denotes an unsubstituted alkyl radical having 1 to 7 C atoms or an unsubstituted alkenyl radical having 2 to 7 C atoms, and
R⁴² denotes an unsubstituted alkyl radical having 1 to 7 C atoms or an unsubstituted alkoxy radical having 1 to 6 C atoms, an unsubstituted alkenyl radical having 2 to 7 C atoms,
wherein one or more compounds of formula IV are selected from formula IV-2, 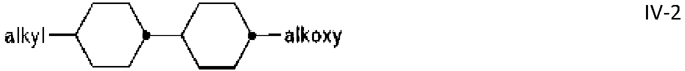 wherein
alkyl denotes alkyl having 1 to 7 C atoms, and
alkoxy denotes alkoxy having 1 to 5 C atoms.

2. The LCoS panel according to claim 1 comprising one or more inorganic alignment layers.

3. The LCoS panel according to claim 1 or 2 wherein the liquid crystal medium has a clearing point of 90 °C or more.

4. The LCoS panel according to one or more of claims 1 to 3, wherein the liquid crystal medium is vertically aligned with regard to the substrates.

5. A liquid crystal medium comprising
a) one or more compounds of formula IV 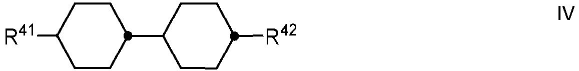 in which
R⁴¹ denotes an unsubstituted alkyl radical having 1 to 7 C atoms or an unsubstituted alkenyl radical having 2 to 7 C atoms, and
R⁴² denotes an unsubstituted alkyl radical having 1 to 7 C atoms, an unsubstituted alkoxy radical having 1 to 6 C atoms or an unsubstituted alkenyl radical having 2 to 7 C atoms,
wherein one or more compounds of formula IV are selected from formula IV-2, 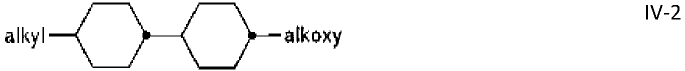 wherein
alkyl denotes alkyl having 1 to 7 C atoms,
alkoxy denotes alkoxy having 1 to 5 C atoms,
b) one or more compounds of formula I 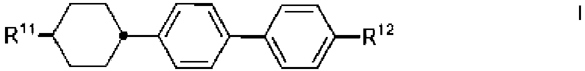 in which
R¹¹ denotes alkyl having 1 to 7 C atoms, alkoxy having 1 to 7 C atoms, or alkoxyalkyl, alkenyl or alkenyloxy having 2 to 7 C atoms, where, in addition, one or more CH₂ groups in these radicals may each be replaced, independently of one another by 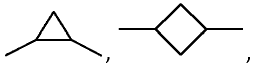 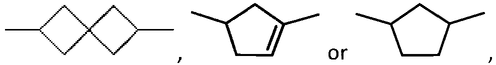
R¹² denotes alkyl having 1 to 7 C atoms, alkoxy having 1 to 7 C atoms, or alkoxyalkyl, alkenyl or alkenyloxy having 2 to 7 C atoms,
and
c) 0.1 % to 0.9% of one or more compounds of formula ST-1 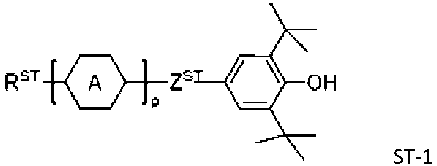 wherein
R^{ST} denotes H, an alkyl or alkoxy radical having 1 to 15 C atoms, where, in addition, one or more CH₂ groups in these radicals may each be replaced, independently of one another by -C≡C-, -CF₂O-, -OCF₂-, -CH=CH-, 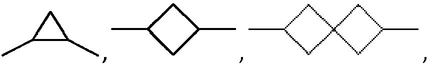 -O-, -CO-O- or -O-CO- in such a way that O 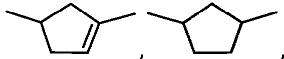 atoms are not linked directly to one another, and in which, in addition, one or more H atoms may be replaced by halogen, on each occurrence, identically or differently, denotes 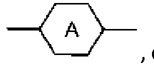 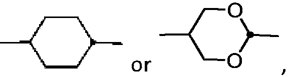
Z^{ST} each, independently of one another, denote -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C≡C- or a single bond, and
p denotes 0, 1 or 2.

6. The liquid crystal medium according to claim 5, wherein the medium comprises one or more compounds selected from the group of the formulae in d) and e):
d) formulae IIA, IIB, IIC, IID and IIE, 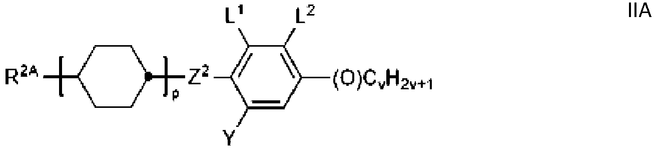 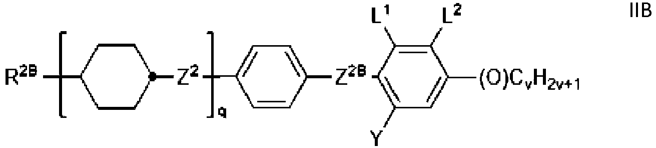 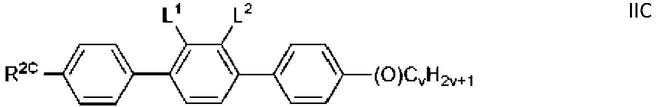 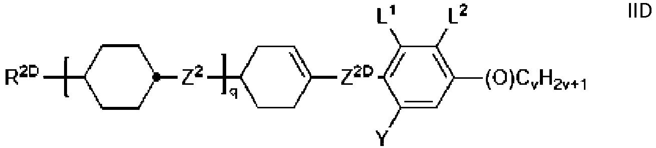 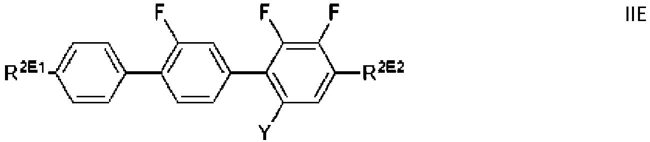 in which
R ^{2A}, R^{2B}, R^{2C}, R^{2D}, R^{2E1} and R^{2E2} each, independently of one another, denote H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, 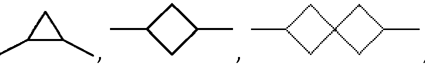 -C≡C-, -CF₂O-, -OCF₂-, -OC-O- or -O-CO- in such a way that 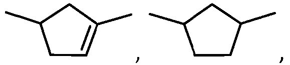 O atoms are not linked directly to one another;
L¹ and L² each, independently of one another, denote F, Cl, CF₃ or CHF₂;
Y denotes H, F, Cl, CF₃, CHF₂ or CH₃;
Z², Z^{2B} and Z^{2D} each, independently of one another, denote a single bond, -CH₂CH₂-, -CF₂O-, -OCF₂-, -CH₂O-, -OCH₂-, -COO-, -OCO-;
p denotes 0, 1 or 2,
q denotes 0 or 1, and
v denotes 1, 2, 3, 4, 5 or 6;
e) formula III 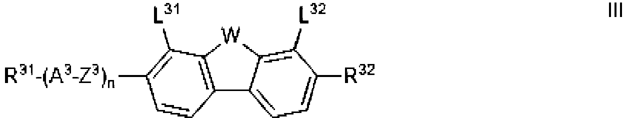 in which
R³¹ and R³¹ , each, independently of one another, denote H, an alkyl or alkoxy radical having 1 to 7 C atoms, where one or more CH₂ groups in these radicals may each be replaced, independently of one another, by 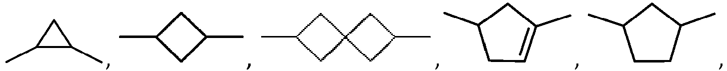 -C=C-, -CF₂O-, -OCF₂-, -CH=CH-, by -O-, -CO-O- or -O-CO- in such a way that O atoms are not linked directly to one another, and in which one or more H atoms may be replaced by halogen,
A³ on each occurrence, independently of one another, denotes a 1,4-phenylene radical, in which one or two CH groups may be replaced by N, or a 1,4-cyclohexylene or 1,4-cyclohexenylene radical, in which one or two non-adjacent CH₂ groups may be replaced by -O- or -S-, where the radicals may be mono- or polysubstituted by halogen atoms,
Z³ on each occurrence independently of one another denotes -CF₂O-, -OCF₂-, -CH₂O-, -OCH₂-, -CH₂-, -CH₂CH₂-, -CH=CH-, -C=C- or a single bond,
L³¹ and L³² , each, independently of one another, denote F, Cl, CF₃ or CHF₂,
W denotes O or S, and
n denotes 0, 1 or 2.

7. The liquid crystal medium according to claim 5 or 6, wherein the medium comprises one or more compounds of formula IIE 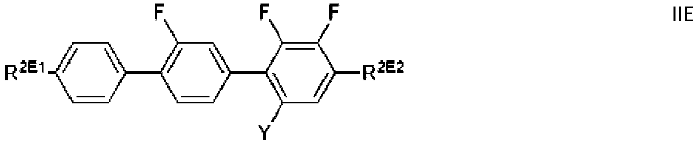 in which
R ^{2E1} independently denotes H, an alkyl radical having 1 to 7 C atoms or an alkenyl radical having 2 to 7 C atoms, each of which is unsubstituted, or at least monosubstituted by halogen, where one or more CH₂ groups in these radicals may be replaced by -O-, -S-, , -C≡C-, 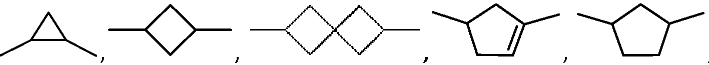 -CF₂O-, -OCF₂-, -OC-O- or -O-CO- in such a way that O atoms are not linked directly to one another;
R ^{2E2} independently denotes an alkoxy or alkyl radical having 1 to 7 C atoms or an alkenyl radical having 2 to 7 C atoms, each of which is unsubstituted, or at least monosubstituted by halogen, where one or more CH₂ groups in these radicals may be replaced by 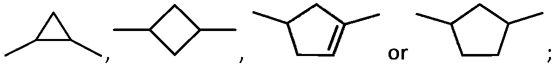
Y denotes H, F, Cl, CF₃, CHF₂ or CH₃;
L¹ and L² each, independently of one another, denote F, Cl, CF₃ or CHF₂.

8. The liquid crystal medium according to any of claims 5 to 7, wherein the medium comprises one or more compounds of the formula H 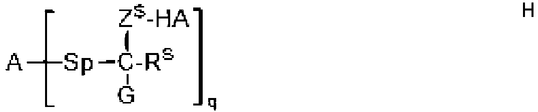 in which
A denotes an aliphatic, aromatic or heteroaromatic hydrocarbon group with q valencies and having 1 to 40 C atoms, preferably 6 to 30 C atoms; or a bond for q = 2;
Sp denotes a spacer group or a bond;
HA denotes 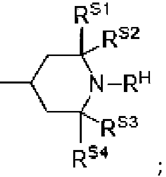
R^{S} denotes H, alkyl having 1 to 12 C atoms or alkenyl having 2 to 12 C atoms;
Z^{S} denotes -O-, -C(O)O-, -(CH₂)_{z}- or -(CH₂)_{z}O-, or a single bond; preferably -C(O)O-,
R^{H} denotes H, O·, CH₃, OH or OR^{S}, preferably H or O·;
R ^{S1}, R^{S2}, R^{S3} and R^{S4}, identically or differently, denote alkyl having 1 to 6 C atoms, preferably having 1 to 3 C atoms, very preferably CH₃;
G denotes H or R^{S} or a group Z^{S}-HA;
z is an integer from 1 to 6; and
q is 1, 2, 3 or 4, preferably 2.

9. The liquid crystal medium according to one or more of claims 5 to 8, wherein the medium comprises one or more compounds of formula H-A 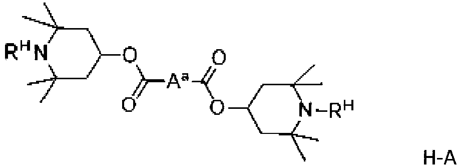 wherein
A^{a} denotes an alkylene group with 1 to 12 carbon atoms, wherein one or two CH₂ groups mach be replaced by 1,4-cyclohexylene, and
R^{H} denotes H or O·.

10. The liquid crystal medium according to one or more of claims 5 to 9, wherein the medium comprises one or more compounds of formula IV-1 and IV-3, 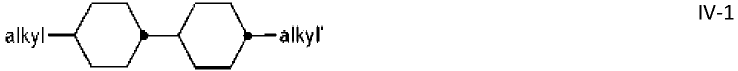 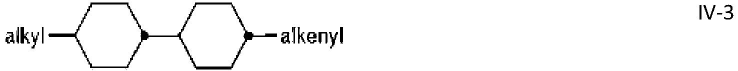 in which
alkyl and alkyl', independently of one another, denote alkyl having 1 to 7 C atoms, preferably having 2 to 5 C atoms,
alkenyl denotes an alkenyl radical having 2 to 5 C atoms, preferably having 2 to 4 C atoms.

11. The liquid crystal medium according to one or more of claims 5 to 10, wherein the medium comprises one or more compounds of formula P-1, 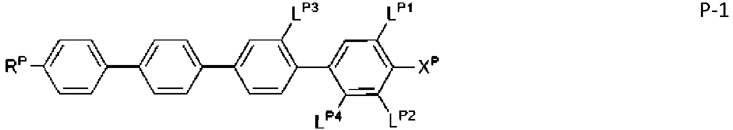 in which
R^{P} denotes a straight-chain alkyl or alkoxy radical having 1-6 C atoms or an alkenyl radical having 2-6 C atoms, each of which is unsubstituted, or at least monosubstituted by halogen, where one or more CH₂ groups in these radicals may be replaced by -O-, -S-, 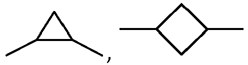 -C=C-, -CF₂O-, 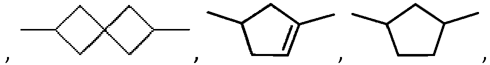 -OCF₂-, -OC-O- or -O-CO- in such a way that O atoms are not linked directly to one another;
X^{P} straight-chain alkyl having 1-6 C atoms, F, Cl, CF₃, OCF₂H, OCF₃, OCHFCF₃, OCF₂CHFCF₃, OCH=CF₂, preferably F, OCF₃ or CF₃, CH₃,
L^{P1}, L^{P2} and L^{P3} each independently of one another denote H or F, and
L^{P4} denotes H or CH₃, preferably H.

12. The liquid crystal medium according to one or more of claims 5 to 11, wherein the medium comprises one or more compounds of the formula PIlI-1, 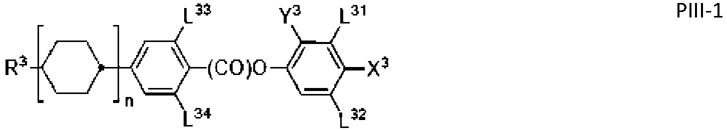 in which
R³ denote a straight-chain or branched alkyl radical that is unsubstituted or halogenated and has 1 to 15 C atoms, where one or more CH₂ groups in these radicals may each be replaced, independently of one another, by 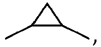 -C=C-, -CF₂O-, 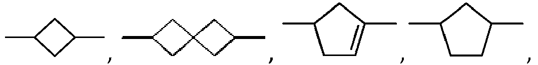 -CH=CH-, -O-, -CO-O- or -O-CO- in such a way that O atoms are not linked directly to one another,
L³¹ and L³² identically or differently, denote H or F,
Y³ identically or differently, denote H or CH₃,
X³ identically or differently, denote halogen, CN, halogenated alkyl or alkoxy with 1 to 3 C-atoms or halogenated alkenyl or alkenyloxy with 2 or 3 C-atoms, preferably F, CN, OCF₃ or CF₃, most preferably F or CN, and
n independently is 0 or 1, preferably n is 0.

13. The liquid crystal medium according to one or more of claims 5 to 12, wherein the medium comprises one or more compounds of formula VI 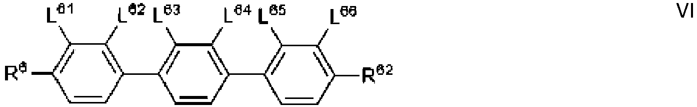
in which R⁶ and R⁶² have the meanings of R^{2A} defined in claim 1 and R⁶² alternatively denotes F, Cl, CF₃ or OCF₃ and
L⁶¹, L⁶², L⁶³, L⁶⁴, L⁶⁵, and L⁶⁶ independently denote H or F, where at least one of L⁶¹, L⁶², L⁶³, L⁶⁴, L⁶⁵, and L⁶⁶ denotes F, and wherein the compounds of formula IIC and IIE are excluded.

14. The liquid crystal medium according to one or more of claims 5 to 13 for use in a LCoS panel.

15. The LCoS panel according to any of claims 1 to 4, wherein the liquid crystal medium is one according to any of claims 5 to 14.

16. A projection system comprising the LCoS panel according to any of claims 1 to 4, a light source and light directing elements.

17. Use of the liquid crystal medium according to one or more of claims 5 to 14 in a LCoS panel, a projection system, a near-eye display or in a beam-stearing application.

## Patentansprüche

1. Liquid-Crystal-on-Silicon (LCoS)-Panel umfassend ein Halbleitersubstrat mit mehreren reflektierenden Elektroden, ein transparentes Substrat mit einer transparenten Elektrode, das mit dem Halbleitersubstrat zusammengebaut ist, und eine Flüssigkristallschicht, die zwischen dem Halbleitersubstrat und dem transparenten Substrat angeordnet ist,
bei dem die Flüssigkristallschicht ein Flüssigkristallmedium enthält, das
a) eine oder mehrere Verbindungen der Formel IV 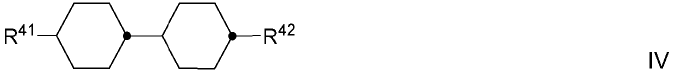 worin
R⁴¹ einen unsubstituierten Alkylrest mit 1 bis 7 C-Atomen oder einen unsubstituierten Alkenylrest mit 2 bis 7 C-Atomen bedeutet und
R⁴² einen unsubstituierten Alkylrest mit 1 bis 7 C-Atomen oder einen unsubstituierten Alkoxyrest mit 1 bis 6 C-Atomen, einen unsubstituierten Alkenylrest mit 2 bis 7 C-Atomen bedeutet,
enthält, bei denen eine oder mehrere Verbindungen der Formel IV ausgewählt sind aus der Formel IV-2, 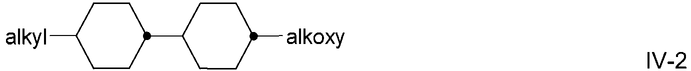 bei der
alkyl Alkyl mit 1 bis 7 C-Atomen bedeutet und
alkoxy Alkoxy mit 1 bis 5 C-Atomen bedeutet.

2. LCoS-Panel nach Anspruch 1, enthaltend eine oder mehrere anorganische Orientierungsschichten.

3. LCoS-Panel nach Anspruch 1 oder 2, bei dem das Flüssigkristallmedium einen Klärpunkt von 90°C oder mehr aufweist.

4. LCoS-Panel nach einem oder mehreren der Ansprüche 1 bis 3, bei dem das Flüssigkristallmedium bezüglich der Substrate senkrecht orientiert ist.

5. Flüssigkristallmedium enthaltend
a) eine oder mehrere Verbindungen der Formel IV 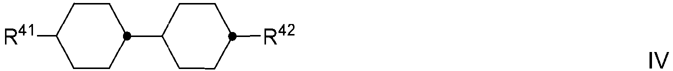 worin
R⁴¹ einen unsubstituierten Alkylrest mit 1 bis 7 C-Atomen oder einen unsubstituierten Alkenylrest mit 2 bis 7 C-Atomen bedeutet und
R⁴² einen unsubstituierten Alkylrest mit 1 bis 7 C-Atomen, einen unsubstituierten Alkoxyrest mit 1 bis 6 C-Atomen oder einen unsubstituierten Alkenylrest mit 2 bis 7 C-Atomen bedeutet,
bei denen eine oder mehrere Verbindungen der Formel IV ausgewählt sind aus der Formel IV-2, 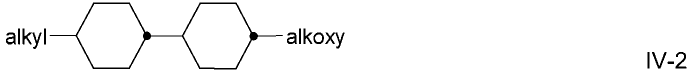 bei der
alkyl Alkyl mit 1 bis 7 C-Atomen bedeutet,
alkoxy Alkoxy mit 1 bis 5 C-Atomen bedeutet,
b) eine oder mehrere Verbindungen der Formel I 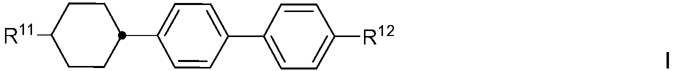 worin
R¹¹ Alkyl mit 1 bis 7 C-Atomen, Alkoxy mit 1 bis 7 C-Atomen oder Alkoxyalkyl, Alkenyl oder Alkenyloxy mit 2 bis 7 C-Atomen bedeutet, wobei in diesen Resten zusätzlich eine oder mehrere CH₂-Gruppen jeweils unabhängig voneinander durch 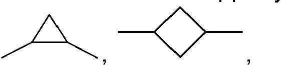 ersetzt sein 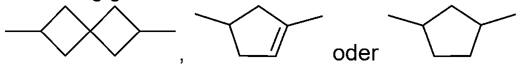 können,
R¹² Alkyl mit 1 bis 7 C-Atomen, Alkoxy mit 1 bis 7 C-Atomen oder Alkoxyalkyl, Alkenyl oder Alkenyloxy mit 2 bis 7 C-Atomen bedeutet,
und
c) 0,1 % bis 0,9 % einer oder mehrerer Verbindungen der Formel ST-1 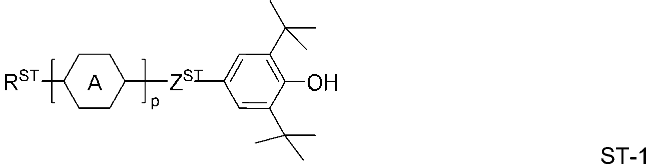 bei der
R^{ST} H, einen Alkyl- oder Alkoxyrest mit 1 bis 15 C-Atomen bedeutet, wobei in diesen Resten zusätzlich eine oder mehrere CH₂-Gruppen jeweils unabhängig voneinander so durch -C≡C-, -CF₂O-, -OCF₂-, -CH=CH-, 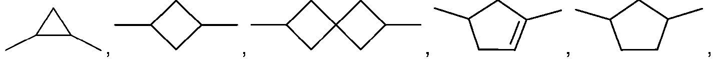 -O-, -CO-O- oder -O-CO- ersetzt sein können, dass O-Atome nicht direkt miteinander verknüpft sind, und worin zusätzlich ein oder mehrere H-Atome durch Halogen ersetzt sein können, bei jedem Auftreten gleich oder verschieden oder 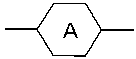 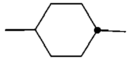 bedeutet, 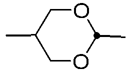
Z^{ST} jeweils unabhängig voneinander -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C≡C- oder eine Einfachbindung bedeuten, und
p 0, 1 oder 2 bedeutet.

6. Flüssigkristallmedium nach Anspruch 5, bei dem das Medium eine oder mehrere Verbindungen enthält, die ausgewählt sind aus der Gruppe der Formeln in d) und e):
d) Formeln IIA, IIB, IIC, IID und IIE, 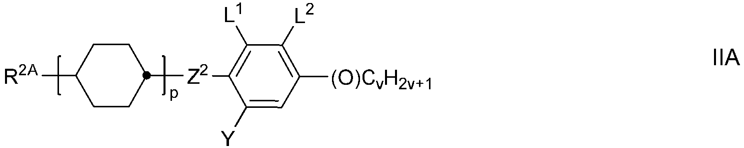 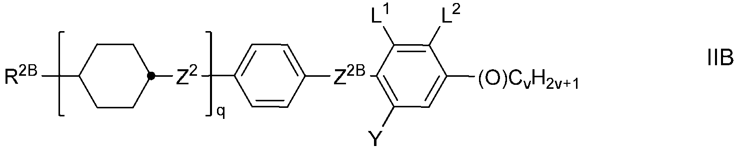 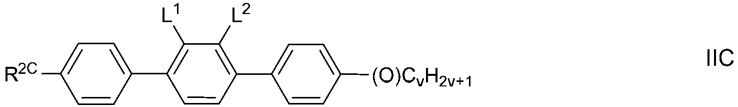 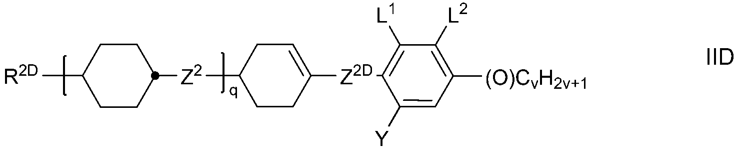 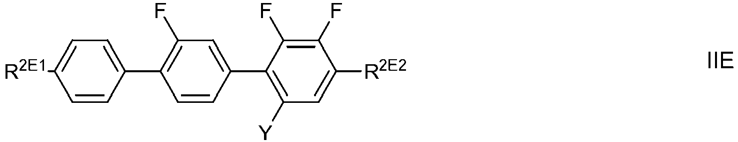 worin
R^{2A}, R^{2B}, R^{2C}, R^{2D}, R^{2E1} und R^{2E2} jeweils unabhängig voneinander H, einen Alkylrest mit 1 bis 7 C-Atomen oder einen Alkenylrest mit 2 bis 7 C-Atomen bedeuten, der jeweils unsubstituiert oder mindestens einfach durch Halogen substituiert ist, wobei in diesen Resten eine oder mehrere CH₂-Gruppen so durch -O-, -S-, 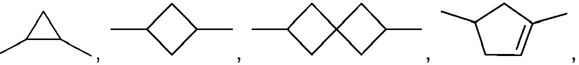 -C≡C-, -CF₂O-, -OCF₂-, -OC-O- oder -O-CO- ersetzt sein 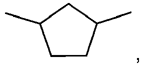 können, dass O-Atome nicht direkt miteinander verknüpft sind;
L¹ und L² jeweils unabhängig voneinander F, Cl, CF₃ oder CHF₂ bedeuten;
Y H, F, Cl, CF₃, CHF₂ oder CH₃ bedeutet;
Z², Z^{2B} und Z^{2D} jeweils unabhängig voneinander eine Einfachbindung, -CH₂CH₂-, -CF₂O-, -OCF₂-, -CH₂O-, -OCH₂-, -COO-, -OCO- bedeuten;
p 0, 1 oder 2 bedeutet,
q 0 oder 1 bedeutet, und
v 1, 2, 3, 4, 5 oder 6 bedeutet;
e) Formel III 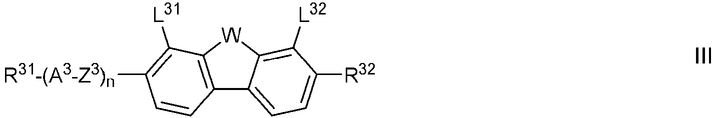 worin
R³¹ und R³² jeweils unabhängig voneinander H, einen Alkyl- oder Alkoxyrest mit 1 bis 7 C-Atomen bedeuten, wobei in diesen Resten eine oder mehrere CH₂-Gruppen jeweils unabhängig voneinander so durch 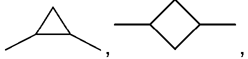 -C≡C-, -CF₂O-, -OCF₂-, 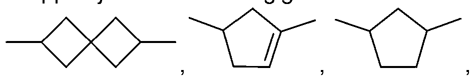 -CH=CH-, durch -O-, -CO-O- oder -O-CO- ersetzt sein können, dass O-Atome nicht direkt miteinander verknüpft sind, und worin ein oder mehrere H-Atome durch Halogen ersetzt sein können,
A³ bei jedem Auftreten unabhängig voneinander einen 1,4-Phenylen-Rest, worin eine oder zwei CH-Gruppen durch N ersetzt sein können, oder einen 1,4-Cyclohexylen- oder 1,4-Cyclohexenylen-Rest, worin eine oder zwei nicht benachbarte CH₂-Gruppen durch -O- oder -S- ersetzt sein können, bedeutet, wobei die Reste ein- oder mehrfach durch Halogenatome substituiert sein können,
Z³ bei jedem Auftreten unabhängig voneinander -CF₂O-, -OCF₂-, -CH₂O-, -OCH₂-, -CH₂-, -CH₂CH₂-, -CH=CH-, -C=C- oder eine Einfachbindung bedeutet,
L³¹ und L³² jeweils unabhängig voneinander F, Cl, CF₃ oder CHF₂ bedeuten,
W O oder S bedeutet, und
n 0, 1 oder 2 bedeutet.

7. Flüssigkristallmedium nach Anspruch 5 oder 6, bei dem das Medium eine oder mehrere Verbindungen der Formel IIE 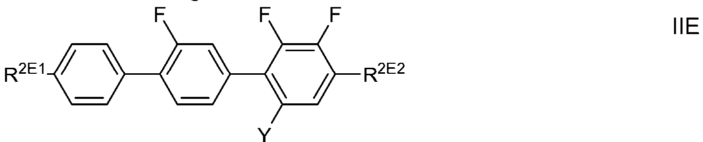 enthält, worin
R^{2E1} unabhängig H, einen Alkylrest mit 1 bis 7 C-Atomen oder einen Alkenylrest mit 2 bis 7 C-Atomen bedeutet, der jeweils unsubstituiert oder mindestens einfach durch Halogen substituiert ist, wobei in diesen Resten eine oder mehrere CH₂-Gruppen so durch -O-, -S-. 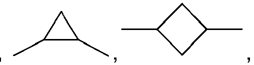 , -C≡C-, -CF₂O-, -OCF₂-, 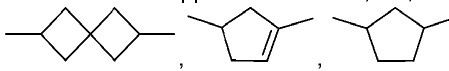 -OC-O- oder -O-CO- ersetzt sein können, dass O-Atome nicht direkt miteinander verknüpft sind;
R^{2E2} unabhängig einen Alkoxy- oder Alkylrest mit 1 bis 7 C-Atomen oder einen Alkenylrest mit 2 bis 7 C-Atomen bedeutet, der jeweils unsubstituiert oder mindestens einfach durch Halogen substituiert ist, wobei in diesen Resten eine oder mehrere CH₂-Gruppen durch 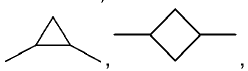 ersetzt sein können; 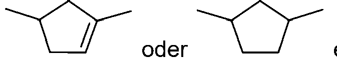
Y H, F, Cl, CF₃, CHF₂ oder CH₃ bedeutet;
L¹ und L² jeweils unabhängig voneinander F, Cl, CF₃ oder CHF₂ bedeuten.

8. Flüssigkristallmedium nach beliebigen der Ansprüche 5 bis 7, bei dem das Medium eine oder mehrere Verbindungen der Formel H 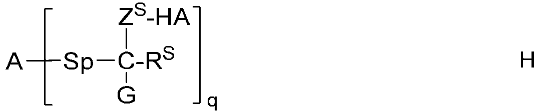 enthält, worin
A eine aliphatische, aromatische oder heteroaromatische Kohlenwasserstoffgruppe mit q Valenzen und mit 1 bis 40 C-Atomen, vorzugsweise 6 bis 30 C-Atomen; oder für q = 2 eine Bindung bedeutet;
Sp eine Spacergruppe oder eine Bindung bedeutet;
HA bedeutet; 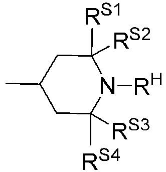
R^{S} H, Alkyl mit 1 bis 12 C-Atomen oder Alkenyl mit 2 bis 12 C-Atomen bedeutet;
Z^{S} -O-, -C(O)O-, -(CH₂)_{z}- oder -(CH₂)_{z}O- oder eine Einfachbindung; vorzugsweise -C(O)O- bedeutet,
R^{H} H, O·, CH₃, OH oder OR^{S}, vorzugsweise H oder O· bedeutet;
R^{S1}, R^{S2}, R^{S3} und R^{S4} gleich oder verschieden Alkyl mit 1 bis 6 C-Atomen, vorzugsweise mit 1 bis 3 C-Atomen, ganz bevorzugt CH₃ bedeuten;
G H oder R^{S} oder eine Gruppe Z^{S}-HA bedeutet;
z eine ganze Zahl von 1 bis 6 ist; und
q 1, 2, 3 oder 4, vorzugsweise 2 ist.

9. Flüssigkristallmedium nach einem oder mehreren der Ansprüche 5 bis 8, bei dem das Medium eine oder mehrere Verbindungen der Formel H-A 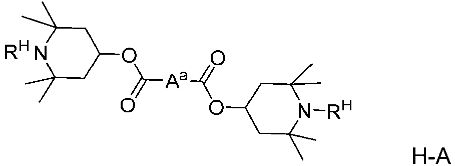 enthält, bei der
A^{a} eine Alkylengruppe mit 1 bis 12 Kohlenstoffatomen bedeutet, bei der eine oder zwei CH₂-Gruppen durch 1,4-Cyclohexylen ersetzt sein können, und
R^{H} H oder O· bedeutet.

10. Flüssigkristallmedium nach einem oder mehreren der Ansprüche 5 bis 9, bei dem das Medium eine oder mehrere Verbindungen der Formel IV-1 und IV-3 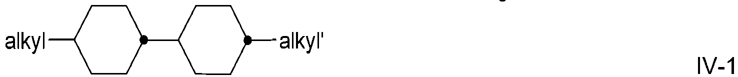 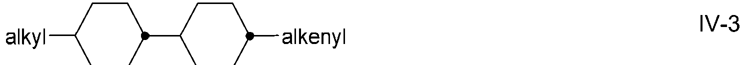 enthält, worin
alkyl und alkyl' unabhängig voneinander Alkyl mit 1 bis 7 C-Atomen, vorzugsweise mit 2 bis 5 C-Atomen bedeuten,
alkenyl einen Alkenylrest mit 2 bis 5 C-Atomen, vorzugsweise mit 2 bis 4 C-Atomen, bedeutet.

11. Flüssigkristallmedium nach einem oder mehreren der Ansprüche 5 bis 10, bei dem das Medium eine oder mehrere Verbindungen der Formel P-1 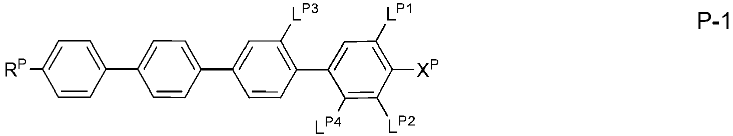 enthält, worin
R^{P} einen geradkettigen Alkyl- oder Alkoxyrest mit 1-6 C-Atomen oder einen Alkenylrest mit 2-6 C-Atomen bedeutet, der jeweils unsubstituiert oder mindestens einfach durch Halogen substituiert ist, wobei in diesen Resten eine oder mehrere CH₂-Gruppen so durch -O-, -S-, 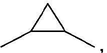 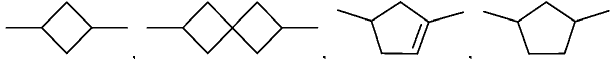 , -C≡C-, -CF₂O-, -OCF₂-, -OC-O- oder -O-CO- ersetzt sein können, dass O-Atome nicht direkt miteinander verknüpft sind;
X^{P} geradkettiges Alkyl mit 1-6 C-Atomen, F, Cl, CF₃, OCF₂H, OCF₃, OCHFCF₃, OCF₂CHFCF₃, OCH=CF₂, vorzugsweise F, OCF₃ oder CF₃, CH₃ bedeutet,
L^{P1}, L^{P2} und L^{P3} jeweils unabhängig voneinander H oder F bedeuten, und
L^{P4} H oder CH₃, vorzugsweise H bedeutet.

12. Flüssigkristallmedium nach einem oder mehreren der Ansprüche 5 bis 11, bei dem das Medium eine oder mehrere Verbindungen der Formel PIII-1 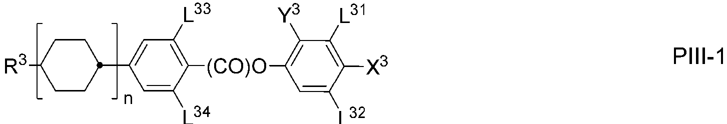 enthält, worin
R³ einen geradkettigen oder verzweigten Alkylrest bedeutet, der unsubstituiert oder halogeniert ist und 1 bis 15 C-Atome aufweist, wobei in diesen Resten eine oder mehrere CH₂-Gruppen jeweils unabhängig voneinander so durch 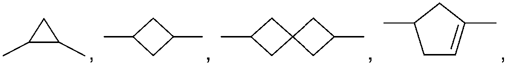 -C≡C-, -CF₂O-, -CH=CH-, -O-, -CO-O- oder -O-CO- ersetzt 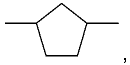 sein können, dass O-Atome nicht direkt miteinander verknüpft sind,
L³¹ und L³² gleich oder verschieden H oder F bedeuten,
Y³ gleich oder verschieden H oder CH₃ bedeuten,
X³ gleich oder verschieden Halogen, CN, halogeniertes Alkyl oder Alkoxy mit 1 bis 3 C-Atomen oder halogeniertes Alkenyl oder Alkenyloxy mit 2 bis 3 C-Atomen, vorzugsweise F, CN, OCF₃ oder CF₃, am stärksten bevorzugt F oder CN bedeuten, und
n unabhängig 0 oder 1 ist, vorzugsweise ist n 0.

13. Flüssigkristallmedium nach einem oder mehreren der Ansprüche 5 bis 12, bei dem das Medium eine oder mehrere Verbindungen der Formel VI 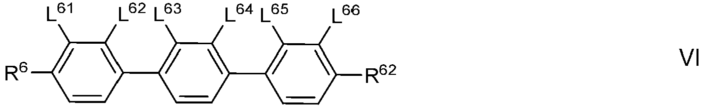
enthält, worin R⁶ und R⁶² die in Anspruch 1 definierten Bedeutungen von R^{2A} besitzen und R⁶² alternativ F, Cl, CF₃ oder OCF₃ bedeutet und
L⁶¹, L⁶², L⁶³, L⁶⁴, L⁶⁵ und L⁶⁶ unabhängig H oder F bedeuten, wobei mindestens einer von L⁶¹, L⁶², L⁶³, L⁶⁴, L⁶⁵ und L⁶⁶ F bedeutet und bei der die Verbindungen der Formel IIC und IIE ausgeschlossen sind.

14. Flüssigkristallmedium nach einem oder mehreren der Ansprüche 5 bis 13 zur Verwendung in einem LCoS-Panel.

15. LCoS-Panel nach beliebigen der Ansprüche 1 bis 4, bei dem das Flüssigkristallmedium eines nach beliebigen der Ansprüche 5 bis 14 ist.

16. Projektionssystem umfassend das LCoS-Panel nach beliebigen der Ansprüche 1 bis 4, eine Lichtquelle und lichtrichtende Elemente.

17. Verwendung des Flüssigkristallmediums nach einem oder mehreren der Ansprüche 5 bis 15 in einem LCoS-Panel, einem Projektionssystem, einem Near-Eye-Display oder in einer Strahlsteuerungsanwendung.

## Revendications

1. Panneau à Cristaux Liquides sur Silicium (LCoS) comprenant un substrat semi-conducteur comportant une pluralité d'électrodes réfléchissantes, un substrat transparent comprenant une électrode transparente assemblée avec le substrat semi-conducteur, et une couche de cristaux liquides disposée entre le substrat semi-conducteur et le substrat transparent,
dans lequel la couche de cristaux liquides comprend un milieu cristallin liquide comprenant
a) un ou plusieurs composés de formule IV 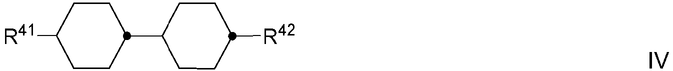 dans laquelle
R⁴¹ désigne un radical alkyle non substitué ayant de 1 à 7 atomes de C ou un radical alcényle non substitué ayant de 2 à 7 atomes de C, et
R⁴² désigne un radical alkyle non substitué ayant de 1 à 7 atomes de C ou un radical alcoxy non substitué ayant de 1 à 6 atomes de C, un radical alcényle non substitué ayant de 2 à 7 atomes de C,
où un ou plusieurs composés de formule IV sont choisis parmi la formule IV-2, 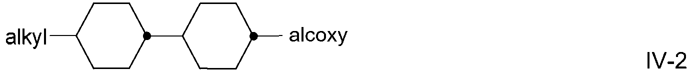 dans laquelle
alkyl désigne alkyle ayant de 1 à 7 atomes de C, et
alcoxy désigne alcoxy ayant de 1 à 5 atomes de C.

2. Panneau LCoS selon la revendication 1, comprenant un ou plusieurs couches d'alignement inorganiques.

3. Panneau LCoS selon la revendication 1 ou 2, dans lequel le milieu cristallin liquide présente un point de clarification de 90°C ou plus.

4. Panneau LCoS selon l'une ou plusieurs parmi les revendications 1 à 3, dans lequel le milieu cristallin liquide est aligné verticalement par rapport aux substrats.

5. Milieu cristallin liquide, comprenant
a) un ou plusieurs composés de formule IV 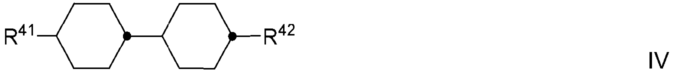 dans laquelle
R⁴¹ désigne un radical alkyle non substitué ayant de 1 à 7 atomes de C ou un radical alcényle non substitué ayant de 2 à 7 atomes de C, et
R⁴² désigne un radical alkyle non substitué ayant de 1 à 7 atomes de C, un radical alcoxy non substitué ayant de 1 à 6 atomes de C ou un radical alcényle non substitué ayant de 2 à 7 atomes de C,
où un ou plusieurs composés de formule IV sont choisis parmi la formule IV-2, 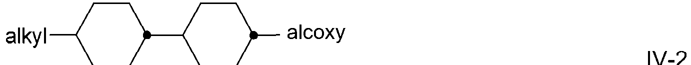 dans laquelle
alkyl désigne alkyle ayant de 1 à 7 atomes de C,
alcoxy désigne alcoxy ayant de 1 à 5 atomes de C,
b) un ou plusieurs composés de formule I 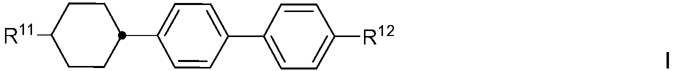 dans laquelle
R¹¹ désigne alkyle ayant de 1 à 7 atomes de C, alcoxy ayant de 1 à 7 atomes de C, ou alcoxyalkyle, alcényle ou alcényloxy ayant de 2 à 7 atomes de C, où, de plus, un ou plusieurs groupements CH₂ dans ces radicaux peuvent chacun être remplacés. indépendamment les uns des autres par 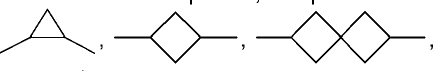 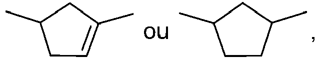
R¹² désigne alkyle ayant de 1 à 7 atomes de C, alcoxy ayant de 1 à 7 atomes de C, ou alcoxyalkyle, alcényle ou alcényloxy ayant de 2 à 7 atomes de C,
et
c) de 0,1 % à 0,9% d'un ou plusieurs composés de formule ST-1 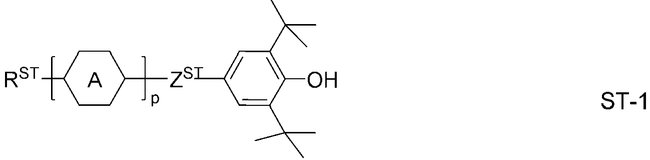 dans laquelle
R^{ST} désigne H, un radical alkyle ou alcoxy ayant de 1 à 15 atomes de C, où, de plus, un ou plusieurs groupements CH₂ dans ces radicaux peuvent chacun être remplacés, indépendamment les uns des autres par -C≡C-, -CF₂O-, -OCF₂-, -CH=CH-, 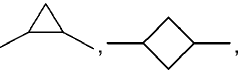 , -O-, -CO-O- ou -O-CO- 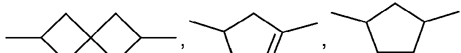 de telle sorte que les atomes de O ne soient pas liés directement les uns aux autres, et où, de plus, un ou plusieurs atomes de H peuvent être remplacés par halogène, à chaque occurrence, de manière identique ou différente, 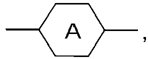 désigne 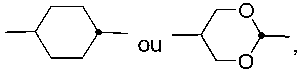
Z^{ST} désignent chacun, indépendamment les uns des autres, -CO-O-, -O-CO-, -CF₂O-, -OCF₂-, -CH₂O-, -OCH₂-, -CH₂-, -CH₂CH₂-, -(CH₂)₄-, -CH=CH-, -CH₂O-, -C₂F₄-, -CH₂CF₂-, -CF₂CH₂-, -CF=CF-, -CH=CF-, -CF=CH-, -CH=CH-, -C=C- ou une liaison simple, et
p désigne 0, 1 ou 2.

6. Milieu cristallin liquide selon la revendication 5, le milieu comprenant un ou plusieurs composés choisis dans le groupe constitué par les formules dans d) et e) :
d) formules IIA, IIB, IIC, IID et IIE, 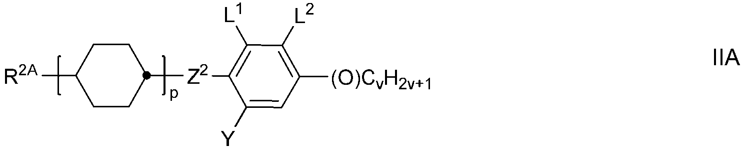 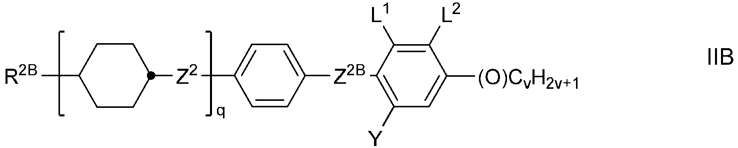 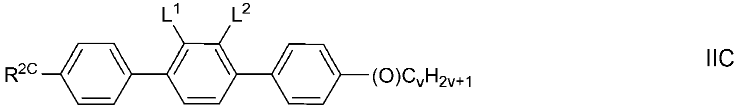 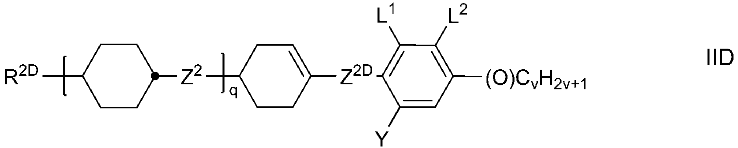 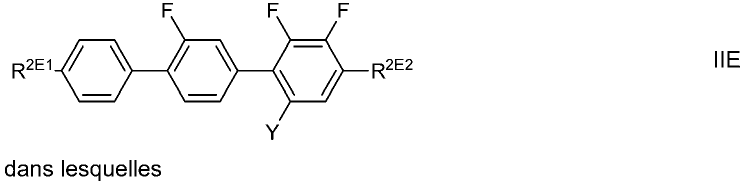
R^{2A}, R^{2B}, R^{2C}, R^{2D}, R^{2E1} et R^{2E2} désignent chacun, indépendamment les uns des autres, H, un radical alkyle ayant de 1 à 7 atomes de C ou un radical alcényle ayant de 2 à 7 atomes de C, chacun d'entre eux étant non substitué, ou au moins monosubstitué par halogène, où un ou plusieurs groupements CH₂ dans ces radicaux peuvent être remplacés par -O-, -S-, 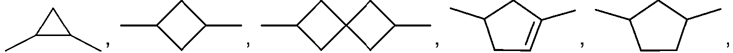 -C≡C-, -CF₂O-, -OCF₂-, -OC-O- ou -O-CO- de telle sorte que les atomes de O ne soient pas liés directement les uns aux autres ;
L¹ et L² désignent chacun, indépendamment l'un de l'autre, F, CI, CF₃ ou CHF₂ ;
Y désigne H, F, CI, CF₃, CHF₂ ou CH₃ ;
Z², Z^{2B} et Z^{2D} désignent chacun, indépendamment les uns des autres, une liaison simple, -CH₂CH₂-, -CF₂O-, -OCF₂-, -CH₂O-, -OCH₂-, -COO-, -OCO- ;
p désigne 0, 1 ou 2,
q désigne 0 ou 1, et
v désigne 1, 2, 3, 4, 5 ou 6 ;
e) formule III 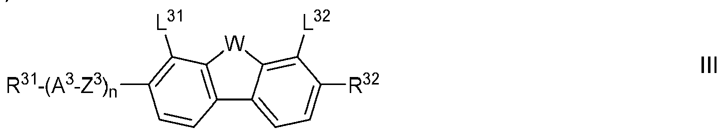 dans laquelle
R³¹ et R³² désignent chacun, indépendamment l'un de l'autre, H, un radical alkyle ou alcoxy ayant de 1 à 7 atomes de C, où un ou plusieurs groupements CH₂ dans ces radicaux peuvent chacun être remplacés, indépendamment les uns des autres, par 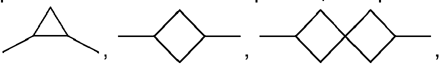 , -C≡C-, -CF₂O-, -OCF₂-, -CH=CH-, par -O-, 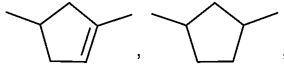 -CO-O- ou -O-CO- de telle sorte que les atomes de O ne soient pas liés directement les uns aux autres, et où un ou plusieurs atomes de H peuvent être remplacés par halogène,
A³ à chaque occurrence, indépendamment les uns des autres, désigne un radical 1,4-phénylène, où un ou deux groupements CH peuvent être remplacés par N, ou un radical 1,4-cyclohexylène ou 1,4-cyclohexénylène, où un ou deux groupements CH₂ non adjacents peuvent être remplacés par -O- ou -S-, où les radicaux peuvent être mono- ou polysubstitués par des atomes d'halogène,
Z³ à chaque occurrence, indépendamment les uns des autres, désigne -CF₂O-, -OCF₂-, -CH₂O-, -OCH₂-, -CH₂-, -CH₂CH₂-, -CH=CH-, -C=C- ou une liaison simple,
L³¹ et L³², désignent chacun, indépendamment l'un de l'autre, F, CI, CF₃ ou CHF₂,
W désigne O ou S, et
n désigne 0, 1 ou 2.

7. Milieu cristallin liquide selon la revendication 5 ou 6, le milieu comprenant un ou plusieurs composés de formule IIE 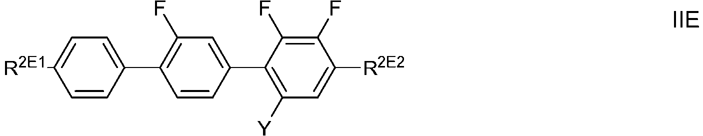 dans laquelle
R^{2E1} désigne indépendamment H, un radical alkyle ayant de 1 à 7 atomes de C ou un radical alcényle ayant de 2 à 7 atomes de C, chacun d'entre eux étant non substitué, ou au moins monosubstitué par halogène, où un ou plusieurs groupements CH₂ dans ces radicaux peuvent être remplacés par -O-, -S-, 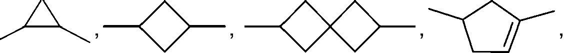 -C≡C-, -CF₂O-, -OCF₂-, -OC-O- ou -O-CO- de telle sorte que 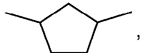 les atomes de O ne soient pas liés directement les uns aux autres ;
R^{2E2} désigne indépendamment un radical alcoxy ou alkyle ayant de 1 à 7 atomes de C ou un radical alcényle ayant de 2 à 7 atomes de C, chacun d'entre eux étant non substitué, ou au moins monosubstitué par halogène, où un ou plusieurs groupements CH₂ dans ces radicaux peuvent être remplacés par 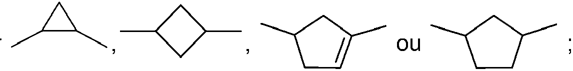
Y désigne H, F, CI, CF₃, CHF₂ ou CH₃ ;
L¹ et L² désignent chacun, indépendamment l'un de l'autre, F, CI, CF₃ ou CHF₂.

8. Milieu cristallin liquide selon l'une quelconque des revendications 5 à 7, le milieu comprenant un ou plusieurs composés de formule H 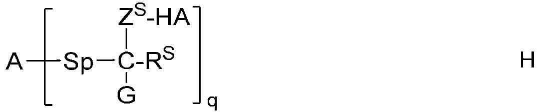 dans laquelle
A désigne un groupement hydrocarboné aliphatique, aromatique ou hétéro-aromatique ayant q valences et ayant de 1 à 40 atomes de C, préférablement de 6 à 30 atomes de C ; ou une liaison pour q = 2 ;
Sp désigne un groupement espaceur ou une liaison ;
HA désigne 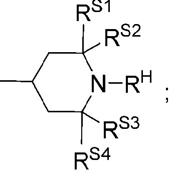
R^{S} désigne H, alkyle ayant de 1 à 12 atomes de C ou alcényle ayant de 2 à 12 atomes de C ;
Z^{S} désigne -O-, -C(O)O-, -(CH₂)_{z}- ou -(CH₂)_{z}O-, ou une liaison simple ; préférablement -C(O)O-,
R^{H} désigne H, O·, CH₃, OH ou OR^{S}, préférablement H ou O· ;
R^{S1}, R^{S2}, R^{S3} et R^{S4}, de manière identique ou différente, désignent alkyle ayant de 1 à 6 atomes de C, préférablement ayant de 1 à 3 atomes de C, très préférablement CH₃ ;
G désigne H ou R^{S} ou un groupement Z^{S}-HA ;
z est un nombre entier allant de 1 à 6 ; et
q vaut 1, 2, 3 ou 4, préférablement 2.

9. Milieu cristallin liquide selon l'une ou plusieurs parmi les revendications 5 à 8, le milieu comprenant un ou plusieurs composés de formule H-A 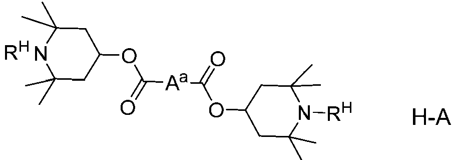 dans laquelle
A^{a} désigne un groupement alkylène ayant de 1 à 12 atomes de carbone, où un ou deux groupements CH₂ peuvent être remplacés par 1,4-cyclohexylène, et
R^{H} désigne H ou O·.

10. Milieu cristallin liquide selon l'une ou plusieurs parmi les revendications 5 à 9, le milieu comprenant un ou plusieurs composés de formule IV-1 et IV-3, 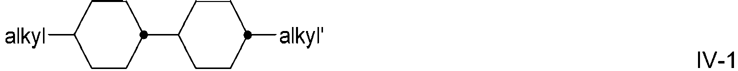 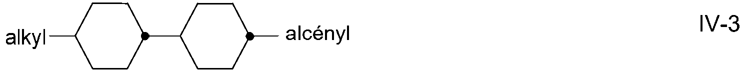 dans laquelle
alkyl et alkyl', indépendamment les uns des autres, désignent alkyle ayant de 1 à 7 atomes de C, préférablement ayant de 2 à 5 atomes de C,
alcényl désigne un radical alcényle ayant de 2 à 5 atomes de C, préférablement ayant de 2 à 4 atomes de C.

11. Milieu cristallin liquide selon l'une ou plusieurs parmi les revendications 5 à 10, le milieu comprenant un ou plusieurs composés de formule P-1, 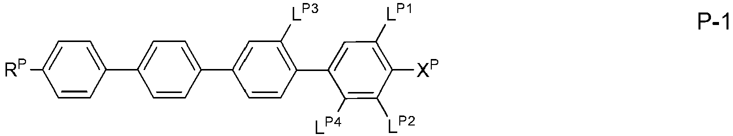 dans laquelle
R^{P} désigne un radical alkyle ou alcoxy à chaîne linéaire ayant 1-6 atomes de C ou un radical alcényle ayant 2-6 atomes de C, chacun d'entre eux étant non substitué, ou au moins monosubstitué par halogène, où un ou plusieurs groupements CH₂ dans ces radicaux peuvent être remplacés par -O-, -S-, 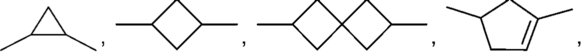 , -C≡C-, -CF₂O-, -OCF₂-, -OC-O- ou -O-CO- de telle sorte 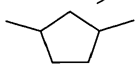 que les atomes de O ne soient pas liés directement les uns aux autres ;
X^{P} désigne alkyle à chaîne linéaire ayant 1-6 atomes de C ; F, CI, CF₃, OCF₂H, OCF₃, OCHFCF₃, OCF₂CHFCF₃, OCH=CF₂, préférablement F, OCF₃ ou CF₃, CH₃,
L^{P1}, L^{P2} et L^{P3} désignent chacun indépendamment les uns des autres H ou F, et
L^{P4} désigne H ou CH₃, préférablement H.

12. Milieu cristallin liquide selon l'une ou plusieurs parmi les revendications 5 à 11, le milieu comprenant un ou plusieurs composés de formule PIII-1, 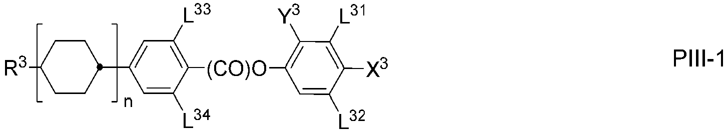 dans laquelle
R³ désigne un radical alkyle à chaîne linéaire ou ramifiée qui est non substitué ou halogéné et possède de 1 à 15 atomes de C, où un ou plusieurs groupements CH₂ dans ces radicaux peuvent chacun être remplacés, indépendamment les uns des autres, par 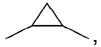 -C≡C-, -CF₂O-, 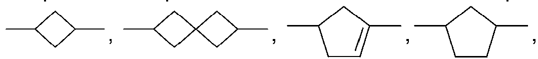 -CH=CH-, -O-, -CO-O- ou -O-CO- de telle sorte que les atomes de O ne soient pas liés directement les uns aux autres,
L³¹ et L³² de manière identique ou différente, désignent H ou F,
Y³ de manière identique ou différente, désignent H ou CH₃,
X³ de manière identique ou différente, désignent halogène, CN, alkyle ou alcoxy halogéné ayant de 1 à 3 atomes de C ou alcényle ou alcényloxy halogéné ayant 2 ou 3 atomes de C, préférablement F, CN, OCF₃ ou CF₃, tout préférablement F ou CN, et
n vaut indépendamment 0 ou 1, préférablement n vaut 0.

13. Milieu cristallin liquide selon l'une ou plusieurs parmi les revendications 5 à 12, le milieu comprenant un ou plusieurs composés de formule VI 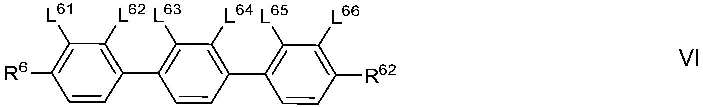
dans laquelle R⁶ et R⁶² revêtent les significations de R^{2A} définies selon la revendication 1 et R⁶², de manière alternative, désigne F, CI, CF₃ ou OCF₃ et
L⁶¹, L⁶², L⁶³, L⁶⁴, L⁶⁵, et L⁶⁶ désignent indépendamment H ou F, où au moins l'un parmi L⁶¹, L⁶², L⁶³, L⁶⁴, L⁶⁵, et L⁶⁶ désigne F, et où les composés de formule IIC et IIE sont exclus.

14. Milieu cristallin liquide selon l'une ou plusieurs parmi les revendications 5 à 13, pour une utilisation dans un panneau LCoS.

15. Panneau LCoS selon l'une quelconque des revendications 1 à 4, dans lequel le milieu cristallin liquide est l'un des milieux selon l'une quelconque des revendications 5 à 14.

16. Système de projection comprenant le panneau LCoS selon l'une quelconque des revendications 1 à 4, une source lumineuse et des éléments de guidage de la lumière.

17. Utilisation du milieu cristallin liquide selon l'une ou plusieurs parmi les revendications 5 à 14, dans un panneau LCoS, un système de projection, un affichage proche de l'œil ou dans une application de guidage de faisceau.
